Europäisches Patentamt

European Patent Office

Office européen des brevets

(19)

(11) Publication number: **0 078 624**
**B1**

# (12) EUROPEAN PATENT SPECIFICATION

(45) Date of publication of patent specification: 05.10.88

(51) Int. Cl.⁴: **G 01 C 21/22, G 01 C 21/12**

(21) Application number: 82305525.6

(22) Date of filing: 18.10.82

(54) **High accuracy navigating apparatus with step-driven projected chart.**

(30) Priority: 20.10.81 US 313233

(43) Date of publication of application:
11.05.83 Bulletin 83/19

(45) Publication of the grant of the patent:
05.10.88 Bulletin 88/40

(84) Designated Contracting States:
AT BE CH DE FR GB IT LI LU NL SE

(56) References cited:
FR-A-2 371 723
US-A-4 139 889
US-A-4 253 150

(73) Proprietor: Antkowiak, Edward T.
Harbour Hill
York Maine 03909 (US)

(72) Inventor: Antkowiak, Edward T.
Harbour Hill
York Maine 03909 (US)

(74) Representative: Smith, Norman Ian et al
F.J. CLEVELAND & COMPANY 40-43 Chancery Lane
London WC2A 1JQ (GB)

Courier Press, Leamington Spa, England.

## Description

This invention relates generally to instruments for use in navigating, and more particularly to automatic devices for determining and pictorially displaying the position and related dynamic parameters of a traveling craft — and for guiding or helping to guide such a craft upon a straight track to desired destinations or way points, practically independent of currents.

The prior art has included navigational aid apparatus such as that depicted in Patent US-A-4,253,150 Scovill. Here, an on-board computer is supplied with continuous navigational information so as to continuously determine the position of the craft with respect to the earth's surface coordinates and to drive a miniaturized optically projectable map of a portion of the earth's surface being traversed by the craft with respect to an optical projection system so as to display the current craft position on the map at a predetermined position-marking indicium fixed with respect to the optical projection screen. The electronic computer of Scovill receives and stores data relating to the map and to particular points of interest including the craft's motion relative to the earth's surface position coordinates. A human operator may select a single point of interest for alignment with the projection system indicium whereupon the computer may compute earth-surface position coordinates for the particular points of interest (subject to the accuracy of data received) and compute transport-mechanism position at which the displayed single point of interest selected by the human operator is aligned with the screen indicium followed by generation of control signals to the transport mechanism so as to cause it to move to the position thus computed so as to display a single point of interest selected by the operator automatically and continuously at the fixed indicium on the screen (e.g., the ship's current position).

Nevertheless, it has been discovered that the generation of map transport drive signals in such a system may not always be accurately calibrated with respect to the actual scale of the projected map. Accordingly, in accordance with the invention as indicated below, the actual scale of the map is derived from at least two calibration indicia at respective positions on the map corresponding to predetermined known coordinates. In accordance with this invention, the calibration indicia are moved to a predetermination position within the map projection system and the known coordinates of the map transport means at such position are then coordinated so as to derive calibration data which may used in thereafter generating calibrated transport control signals in accordance with such calibration data so as to more accurately vary the map position relative to the projection means in accordance with the geographic position of the craft.

According to the present invention there is provided a navigational aid apparatus, for use by a human operator aboard a craft that is adapted for motion to change its own position with respect to earth-surface position coordinates in conjunction with a miniaturized optically projectable map of portions of the earth's surface to be traversed by the craft, said positions of the earth's surface including as particular fixed points of interest origin, destination, and way stations, and also including as particular variable points of interest the craft's present position, said map providing a scaled representation of a geographical area and including at least two calibration indicia at respective positions on said map corresponding to predetermined known coordinates, the apparatus including a map carriage for receiving and movably supporting such map; an optical projection system having an optical projection screen, a position-marking indicium fixed with respect to the screen, and an optical projection system for displaying selected portions of such a map, when supported in the map carriage, on the screen for viewing by such human operator; map transport means having a powered, precision-stepping transport mechanism for moving the carriage relative to the displayed points of interest on such map into alignment with the screen indicium in accordance with applied transport control signals and thereby to select surrounding portions of such map for display on the screen; and a dedicated digital solid-state electronic computer adapted and programmed to receive and store data relating to such map, to particular points of interest, and to such craft's motion relative to earth-surface position coordinates and to receive from such human operator information selecting a single point of interest for alignment with the indicium, to compute earth-surface position coordinates for particular points of interest, subject to the accuracy of the data received to compute a transport-mechanism position at which the displayed single point of interest selected by the human operator is aligned with the screen indicium, and to generate and direct to the transport mechanism stepping control signals as said applied transport control signals causing the transport mechanism to move to the position thus computed, whereby the displayed single point of interest selected by the operator is automatically and continuously held at the fixed indicium on the screen; said apparatus being characterized by:

map scale calibration means for moving said calibration indicia to a predetermined position within said projection system and for then coordinating said known coordinates with the position of the map transport means to derive calibration data used in thereafter generating transport control signals; and

said computer including transport drive means for generating said transport control signals in accordance with said calibration data and in accordance with supplied craft position data to vary said map position relative to said projection means in accordance with the geographic position of said craft.

The optically projectable map may comprise a film transparency and the map transport means may include a film mount adapted to receive said map and a carriage mechanism for removably receiving said film mount and for controllably effecting relative movement between said film mount and said optical projection system, said film mount comprising:

first and second outer frames each including a cut out portion a transparent glass sheet disposed in each frame covering said cut out portion and chart locating projections disposed to align said film transparency with respect to said cut out portion; and

means for securing said frames together with said film transparency sandwiched therebetween in alignment and therewith viewable through said cut out portion.

In a preferred embodiment of the invention as here disclosed, a self-contained instrument apparatus is provided for use aboard a craft — i.e., a water craft such as a ship or large boat, or an aircraft such as an airplane, or a land vehicle such as a military tank. The preferred embodiment, as here described, is particularly adapted for maritime applications; howevr, it is to be understood that the same device with minor modifications (primarily in the types of speed and heading sensors and radio receivers employed) is useful in air or land applications.

The apparatus is particularly useful for use aboard a craft that is adapted for widely ranging motion — that is, one that has the capablity of significantly changing its own position with respect to latitude and longitude or other earth surface position coordinates.

The apparatus is designed to accept a miniaturized optically projectable map (or "chart") of portions of the earth's surface to be traversed by the craft, including particular fixed points of interest such as origin, destination, and way stations. The map also, of course, includes what may be defined here as points of interest that are variable — the craft's present (or "instantaneous") position. The map is advantageously a projection transparency on high-resolution film.

The apparatus includes a carriage for receiving and movably supporting such maps. When a map is supported in the carriage, the apparatus displays selected portions of the map for viewing by a human operator. The display is accomplished by provision of an optical projection screen, and an optical projection system for projecting an image of those selected portions of the map onto the screen.

The screen is provided with a position-marking indicium that is fixed with respect to the screen. Such an indicium may be simply a crosshair-type marking that is engraved, painted, or otherwise marked directly on the surface of the screen; or it may be provided in the form of a pointer or crosshairs adjacent the screen, or an image projected onto the screen; or it may be provided in any other suitable manner.

The apparatus of the preferred embodiment that is here disclosed also includes a transport mechanism for moving the map carriage relative to the projection system. This transport mechanism is powered by a precision stepping drive, which is in turn controlled in such a way as to selectively move particular displayed points of interest on the map (and especially the dynamically variable point of interest that is the craft's current position) into alignment with the indicium mentioned above. When this is done, of course areas of the map surrounding the point of interest are thereby incidentially "selected" for display on the screen.

Furthermore, the apparatus of the disclosed preferred embodiment includes a dedicated digital electronic computer that is adapted and programmed to perform several functions.

1. reception and storage of data relating to the map, and relating to the various kinds of "particular points of interest" mentioned earlier, and also relating to the craft's motion relative to earth surface position coordinates.

2. reception from the human operator of information signifying the operator's selection of a single point of interest for alignment with the indicium;

3. computation of earth-surface position coordinates for particular points of interest, subject of course to the accuracy of the data received;

4. computation of a position for the transport mechanism at which the displayed single point of interest selected by the operator is aligned with the screen indicium; and

5. generation, and direction to the transport mechanism, of stepping control signals to cause the transport mechanism to move to the position computed in point 4 above.

As to selection of a single point of interest for alignment with the crosshairs or other indicium (point 2 above), it should be explained that the operator's most obvious choice will normally be the craft's present position; however, that is not the only particular point of interest which the operator may wish to select during routine operation. In particular, the operator may wish to operate the mechanism so as to place his destination point, or any one of several way stations, or in some cases the known location of a radio beacon, at the crosshairs.

These choices may arise because the apparatus has the capability of automatically deriving the position coordinates of one of these locations from having them placed at the crosshairs, so that the operator does not have to manually key in such position coordinates. Alternatively, the operator may simply wish to move such other points of interest onto the screen — and perhaps near the crosshairs — merely to examine the chart in the area of the point of interest.

As to computing earth-surface position (point 3 above), the computer may compute position coordinates (e.g., latitude and longitude) in a great variety of ways and for various purposes. In particular it is capable of computing position coordinates by dead reckoning from an initial set of coordinates. It may also compute position coordinates by receiving time-difference signals from an external Loran receiver, through an electronic interface internal to the apparatus of the present invention, and calculating the position coordinates that geometrically must correspond to the combination of time-difference signals received.

Similarly the apparatus may derive position coordinates using data either manually entered or (with suitable interfacing) automatically received from certain radar units, or in aerial navigation from certain DME receivers, or even (though at the cost of incurring considerable inaccuracy) from "radio direction-finder" receivers. The term "radio equipment" and like terms as used herein are intended to be understood generically — that is, to encompass all four of these systems that have been mentioned, and any other radio-based systems as well.

One of the most important single aspects of the computation of position coordinates is simply that the calculation is advantageously done directly from data — not derived from the chart position. The chart position, in fact, is best derived from the position coordinates. It will be understood that, while it is preferred to have the apparatus calculate, accept data, and display data in terms of the usual latitude and longitude values, any system of earth-surface position coordinates may be used instead, without departing from the scope of the present invention.

It is also of particular importance that the apparatus is capable of obtaining position coordinates either from radio fixes or through dead reckoning because one of the most useful modes of operating the apparatus is to use both these computational modes simultaneously. By comparing the results of the two computations over a period of time, the apparatus is able to measure with reasonable accuracy the discrepancy between the craft's course as steered and the craft's course as actually "made good" over the bottom (in the case of ships or boats) or the earth's surface (in the case of airplanes and the like).

This discrepancy of course arises primarily because of currents in the water or air (respectively) — what is, for instance, in the maritime field referred to as " set and drift" of the water. Such currents are often relatively uniform over fairly broad areas; consequently, knowing the set and drift permits automatic compensation of the steered course so that the course "made good" is the actual desired course to a destination or way station.

A similar but only semiautomatic set-and-drift compensation is advantageously provided, if automatically interfaced radio navigational-aid equipment is unavailable, by periodically comparing dead-reckoning calculations with manually taken bearing fixes. This system performs all of the necessary calculations automatically, but is less convenient than the radio-fix system, due to the necessity of manually taking frequent bearing fixes to obtain reliable set-and-drift data.

Although a great deal more will be disclosed about the calculations to be performed by the computer, at this point it will be helpful to understand preliminary that the computer may also generate signals for operating an autopilot, and in particular for setting a course automatically. By making simultaneous dead-reckoning and radio-fix position determinations, and compensating the "course to steer" based on the discrepancy to allow for set and drift, the apparatus is capable of directing an autopilot to steer straight for a destination or way station, without the kind of intervention by the operator (navigator, pilot) required by the Scovill apparatus discussed earlier. Many of the advantages of the present invention may be characterized as improvements in operational convenience, or in measurement precision and accuracy. The operation just described, however, is a qualitatively new capability.

As to control of the transport mechanism (point 5 above), it has been found that all of this function is best performed by a separate subunit within the computer — that is to say, a separate dedicated microprocessor that relieves the master processor in the computer of the necessity to timeshare these relatively lower-level functions. This system is more economical because the master processor must be capable of relatively sophisticated operations, and a great deal of this expensive capability is wasted on relatively rote operations — in addition to unduly complicating the programming — unless these lower-level or rote functions are split off for separate performance.

A similar division of work is advantageous for certain of the data mentioned in respect of an storage of extrinsic data (point 1 above) — in particular, the reception of data relating to the craft's position when these data are input from automatic sensors such as compass and ship's log. A microprocessor dedicated to these peripheral translation and traffic tasks can also advantageously be assigned the chore of reading and interpreting a solid-state digital "calendar clock" that is internal to the apparatus.

These specializations have been found to permit use of a smaller master processor, with simpler programming, while at the same time allowing the processor to accept quite complex and sophisticated mathematical and coordination assignments that significantly enhance the overall capability and utility of the apparatus.

At any rate, the five computer functions mentioned above combine to automatically and continuously hold the displayed single point of interest selected by the operator at the fixed crosshairs or other indicium on the screen, even if that point of interest is the craft's variable position.

As previously suggested, the apparatus is adapted and programmed to receive at least some of its data and instructions through manual entry by the operator. For this purpose the apparatus includes a specialized keyboard for manual entry of numerical data. The keyboard also permits for manual direction of the map transport mechanism — to slew the mechanism to any desired position, to display any mapped point of interest on the screen or, if desired, at the crosshairs. A key on the keyboard is provided for signifying to the apparatus that the point on the map that is currently aligned with the crosshairs is in fact a particular point of interest.

It is also desirable to provide a separate display system, apart from the projection screen, for verifying the operator's numerical entries and for otherwise communicating with the operator. The display, ideally a low-power unit such as a bank of light-emitting diodes (LEDs), may be used to present numerical values of position coordinates to the operator, with or without Loran time-difference values, and whether calculated by dead reckoning or radio fix.

Because position coordinates are found directly, not from the chart position, they can be shown at the low-power display even when the projection system and map transport are turned off or in use for loading a chart or examining a portion of the chart far from the craft's present position. The display also is useful to inform the operator of a calculated "course to steer", either corrected or uncorrected for set and drift as previously suggested. The display may also be used to prompt the operator as to information that is to be entered or operations that are to be performed.

By means of the division of labour within the dedicated computer's subunits as mentioned earlier, it is possible economically to provide programming and memory capacity to apply corrections for magnetic deviation and variation errors that would otherwise interfere with accuracy of bearings and headings taken from a craft's magnetic compass. The computer also is programmed to compute and display distance to — and estimated arrival time for — destination or way stations, a further convenience to the operator.

The computer is further programmed to select combinations of Loran transmissions from the several that are available in certain geographic areas, to make use of those pairs of transmissions that yield the best position-fix accuracy. This selection can be of great benefit since in some particular areas the relative locations of some of the available Loran transmitters — although the transmitters are nearby and very powerful — gives certain combinations extremely unfavorable geometry for accurate fixes. This problem is sometimes referred to as the "Loran baseline extension" problem; it is virtually eliminated as a source of inaccuracy by the preferred embodiment here disclosed.

The preferred embodiment herein disclosed is also compatible with separate digital printers or "x-y" plotters, to make a permanent record of various characteristics of a craft's operation.

The invention will be described now by way of example only with particular reference to the accompanying drawings in the drawings.

Fig. 1 is a perspective view illustrating generally a preferred embodiment of the present invention completely assembled, and showing particularly the case exterior, control panel, viewing screen, and map access slot.

Fig. 2 is an enlarged, straight-on view of the control panel of the Fig. 1 embodiment, showing particularly the separate display mentioned earlier, and the keyboard.

Fig. 3 is a perspective view of the interior of the Fig. 1 apparatus, showing generally the location and arrangement of its various subsystems.

Fig. 4 is a perspective representation of the optical system of the Fig. 1 apparatus.

Fig. 5 is a perspective view, partly cut away, showing the map transport mechanism of the Fig. 1 embodiment. Although this mechanism has various parts that in actuality operate on tracks and in directions that are inclined at roughly a forty-five degree angle to the vertical, for simplicity and clarity of presentation this view is taken at that same angle, so that the up-and-down tracks of the mechanism appear to be standing vertically.

Fig. 6 is an elevation, partly in section and taken along line 6-6 of Fig. 3, of a focusing mechanism used in the Fig. embodiment.

Fig. 7 is an elevation, partly in section and taken along line 7-7 of Fig. 3, of a small "folding mirror" alignment mechanism used in the Fig. 1 embodiment.

Fig. 8 is an exploded perspective view of a film mount that forms part of the preferred embodiment herein disclosed. The film mount is used to retain and protect a film-transparency map, for use in conjunction with the apparatus of Figs. 1 through 7. This view also shows -- partly in phantom line -- the map itself.

Fig. 9 is a section view, partly broken away, of the film mount and map of Fig. 8 as assembled for use.

Fig. 10 is a block diagram of the electronic system of the embodiment shown in Figs. 1 through 5.

Figs. 11 through 19 are detailed schematics of the Fig. 10 electronic system, as follows:

Fig. 11 - Keyboard Module

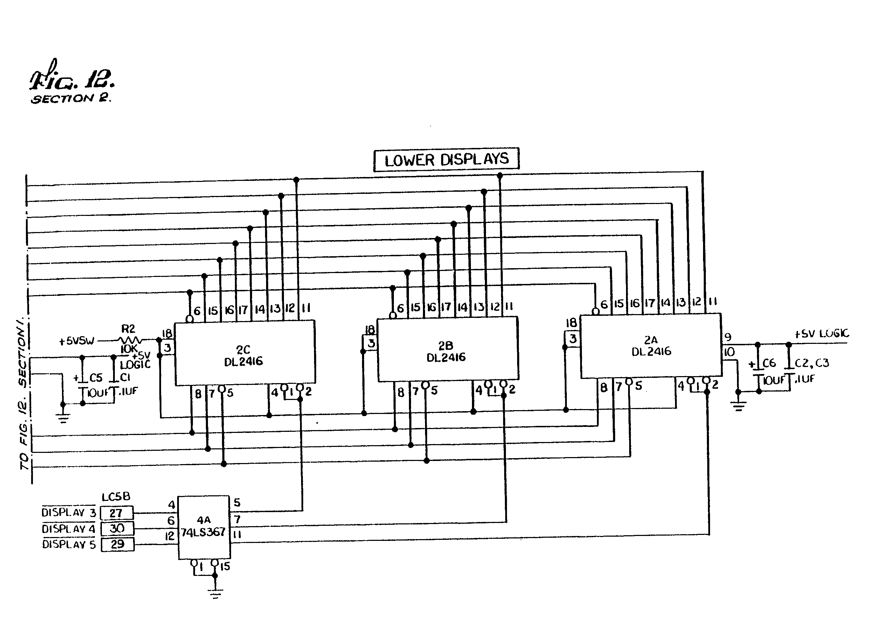

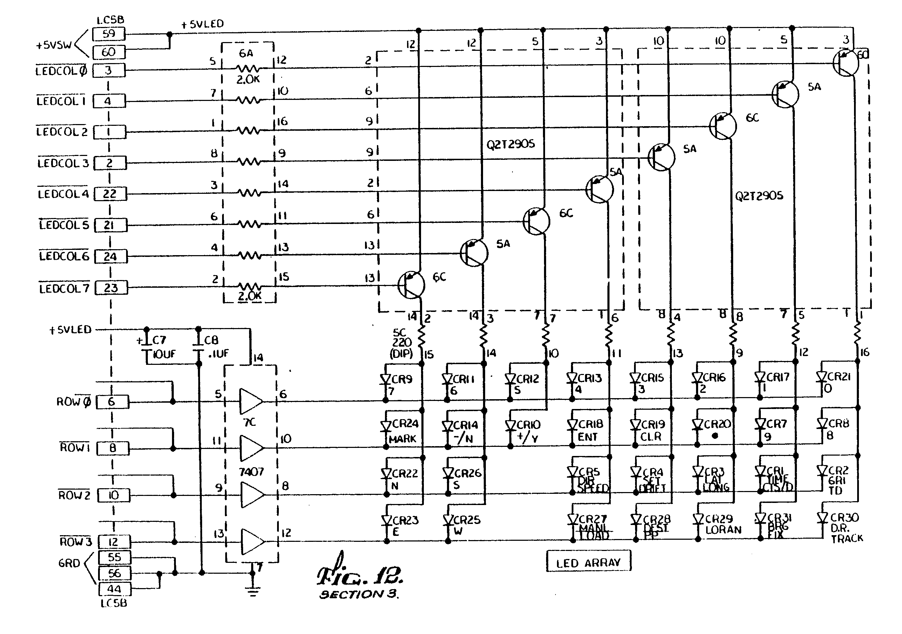

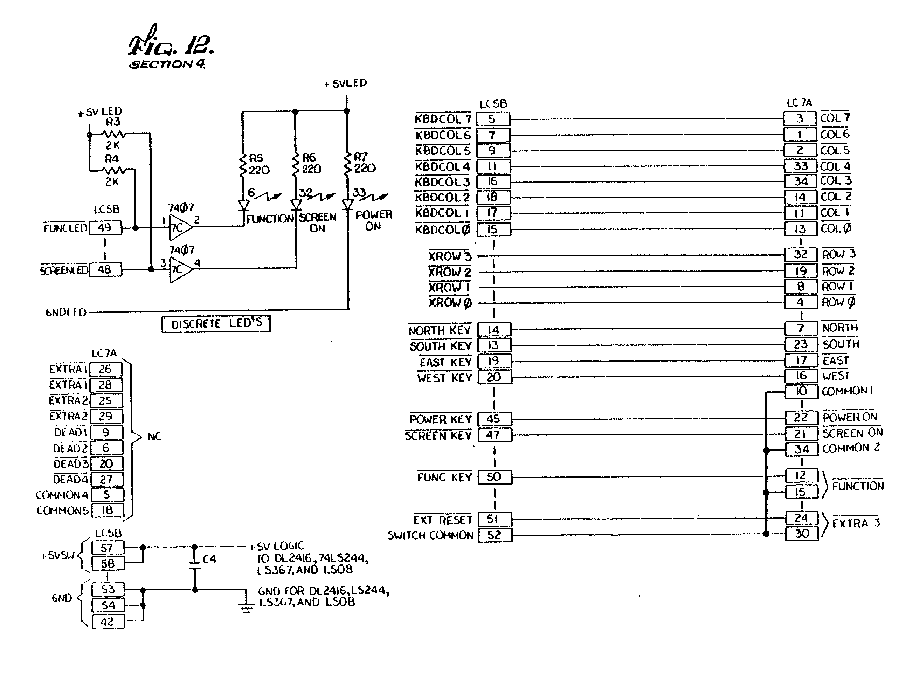

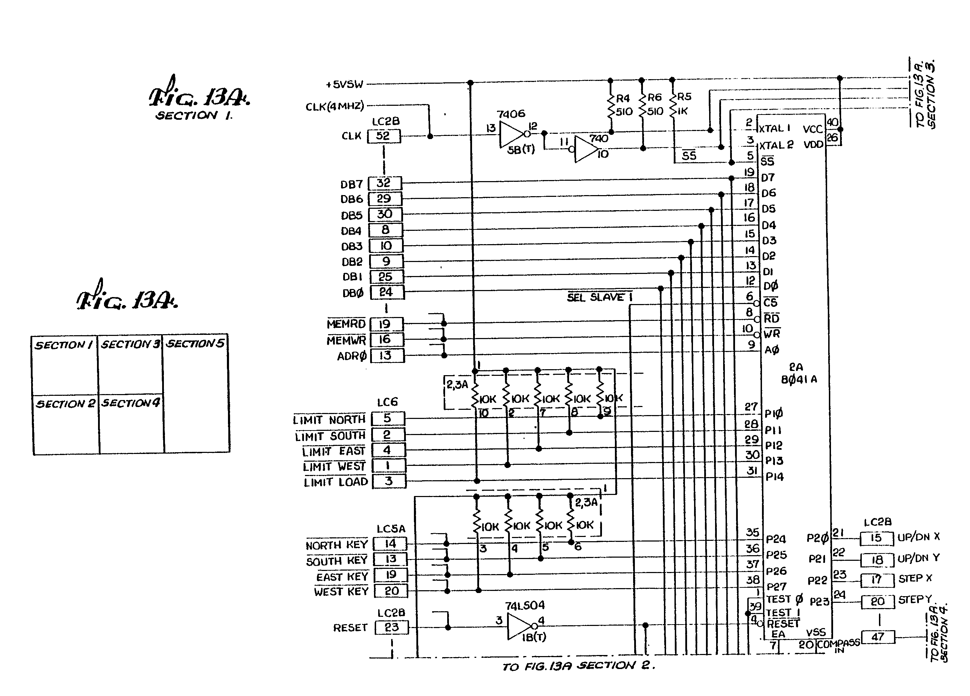

Fig. 12 - Display Module

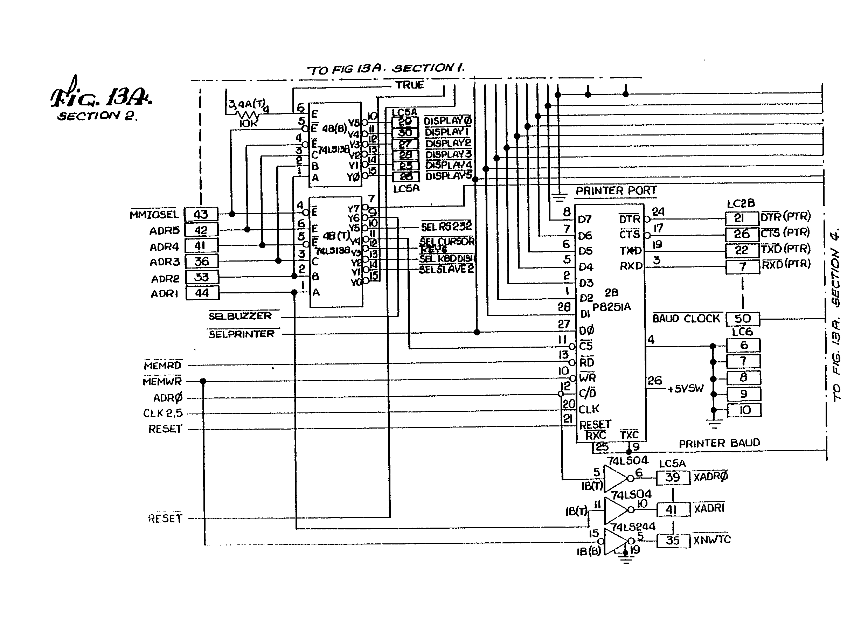

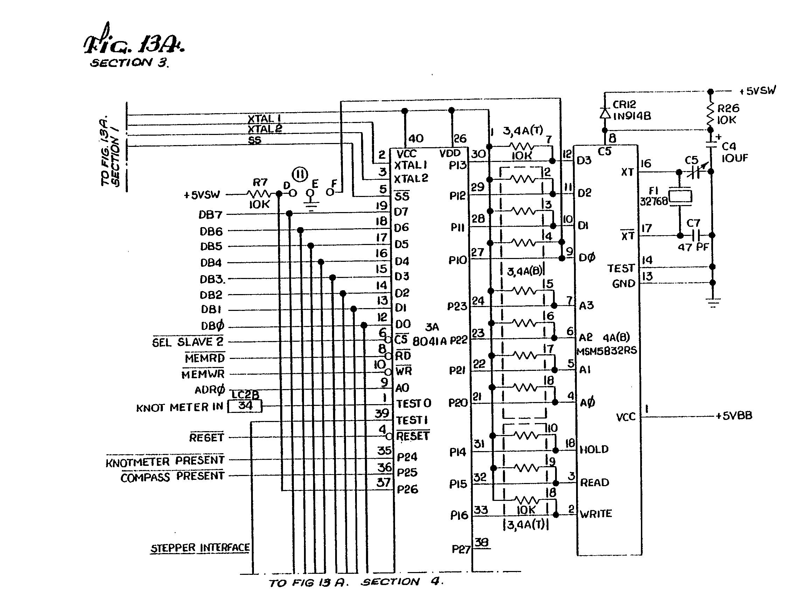

Figs. 13A, B and C - Slave Processor Module

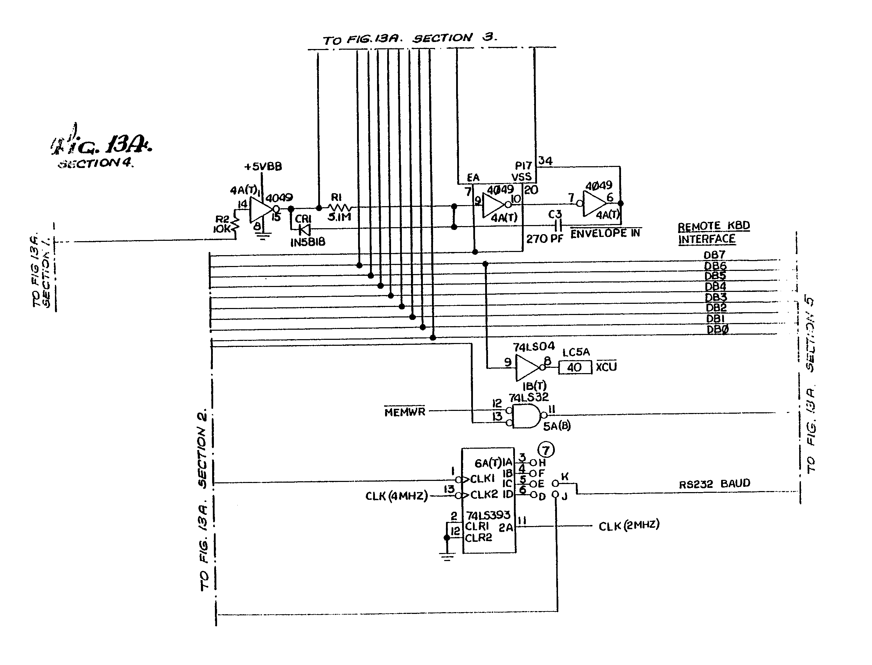

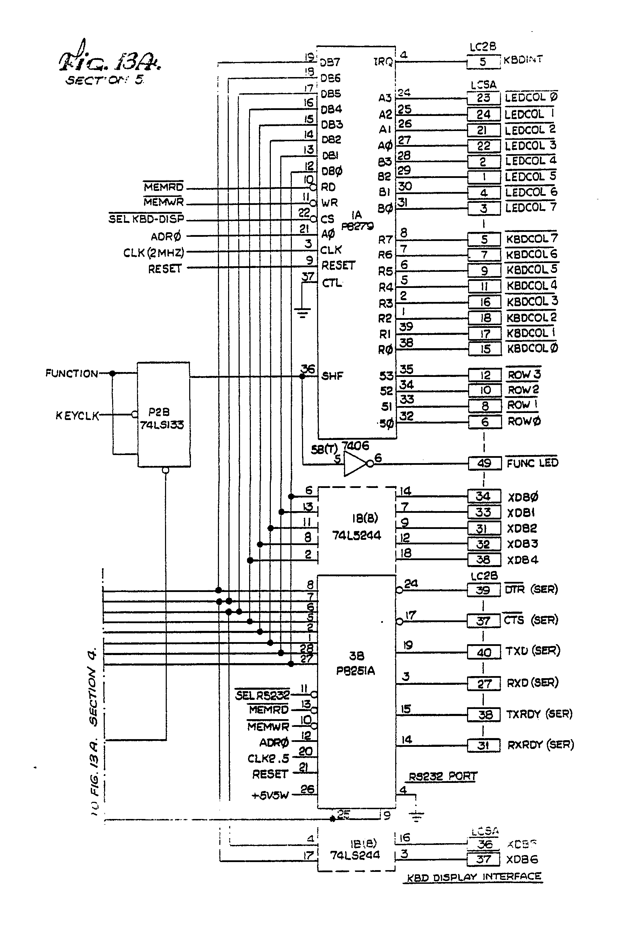

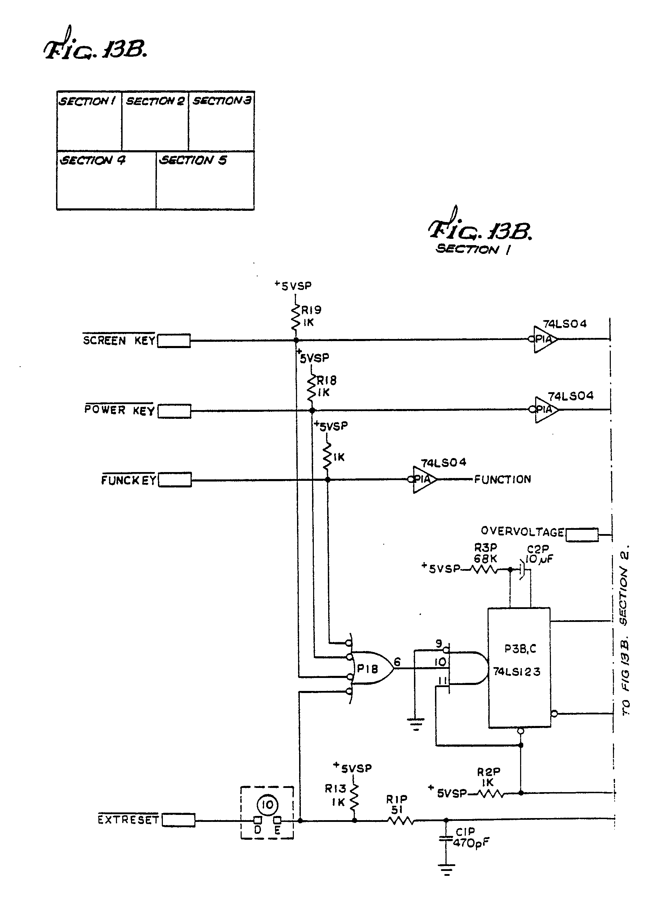

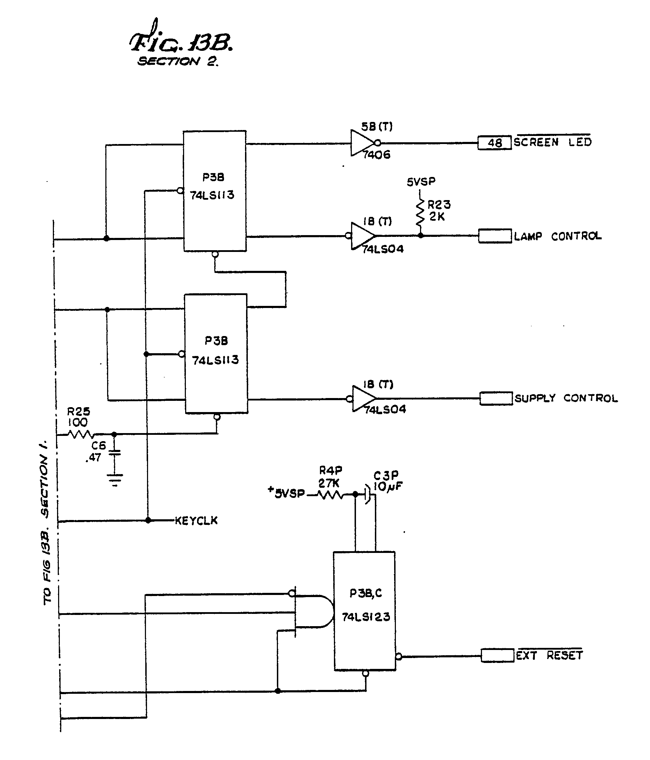

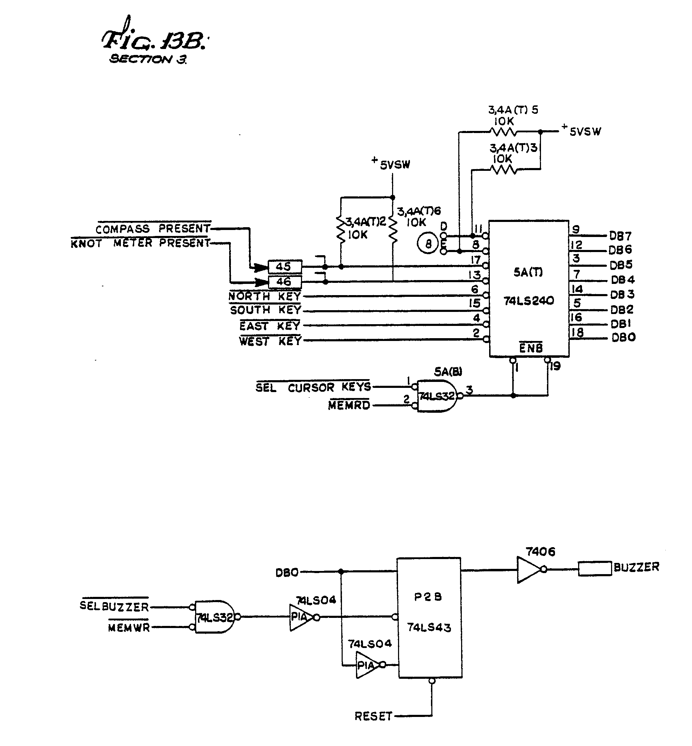

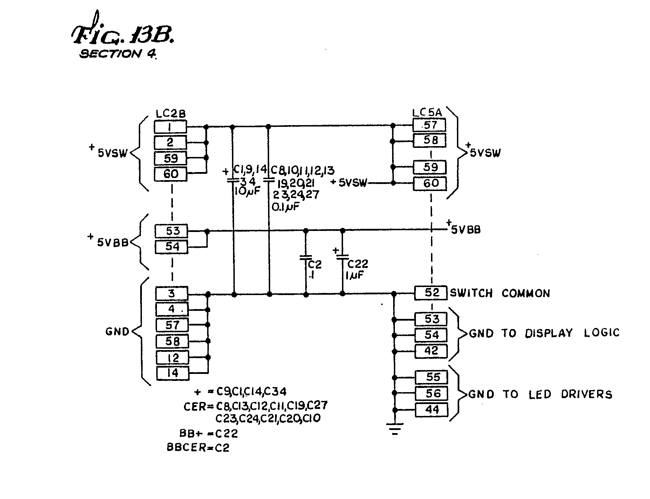

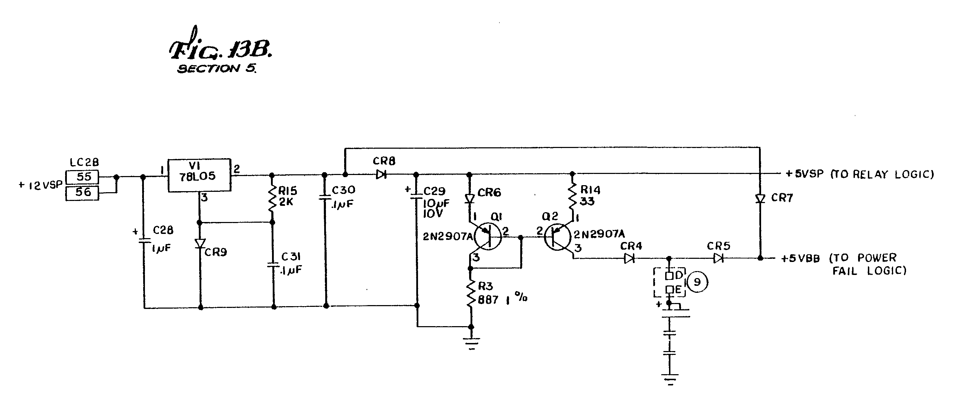

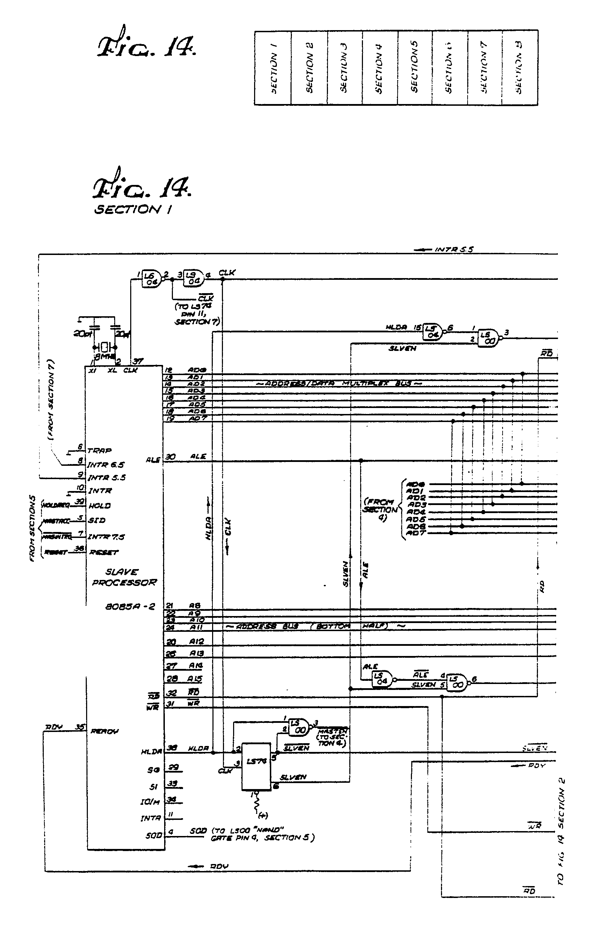

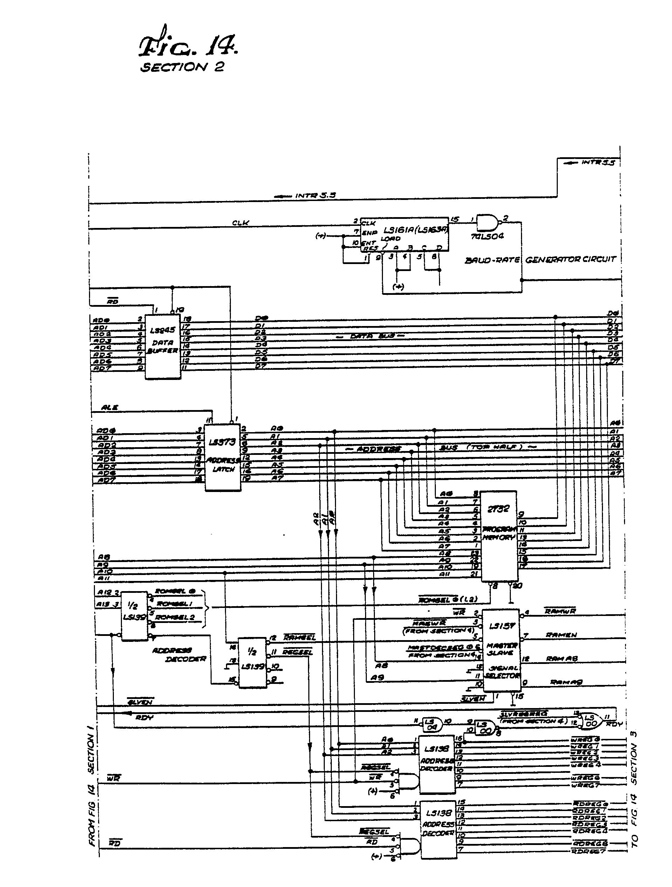

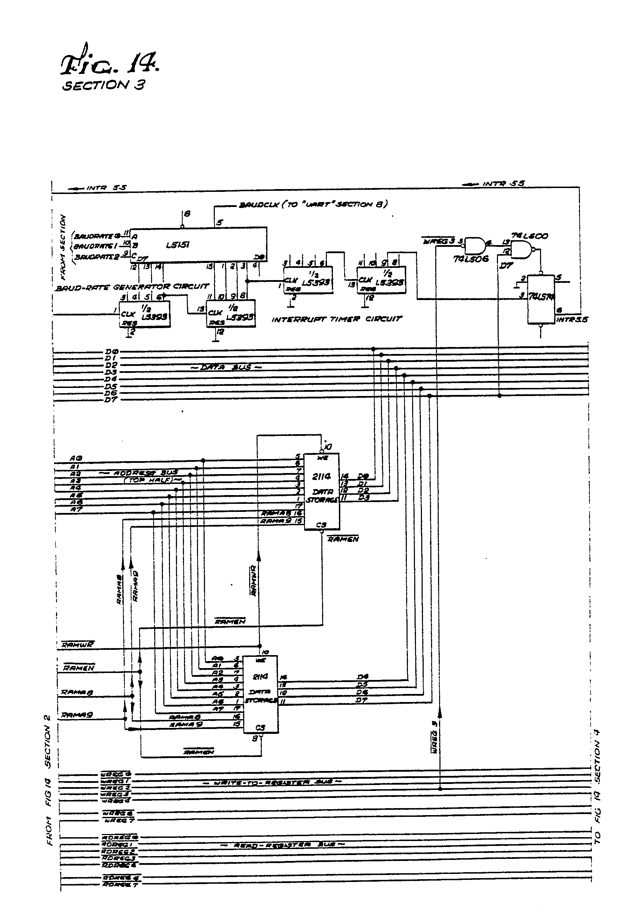

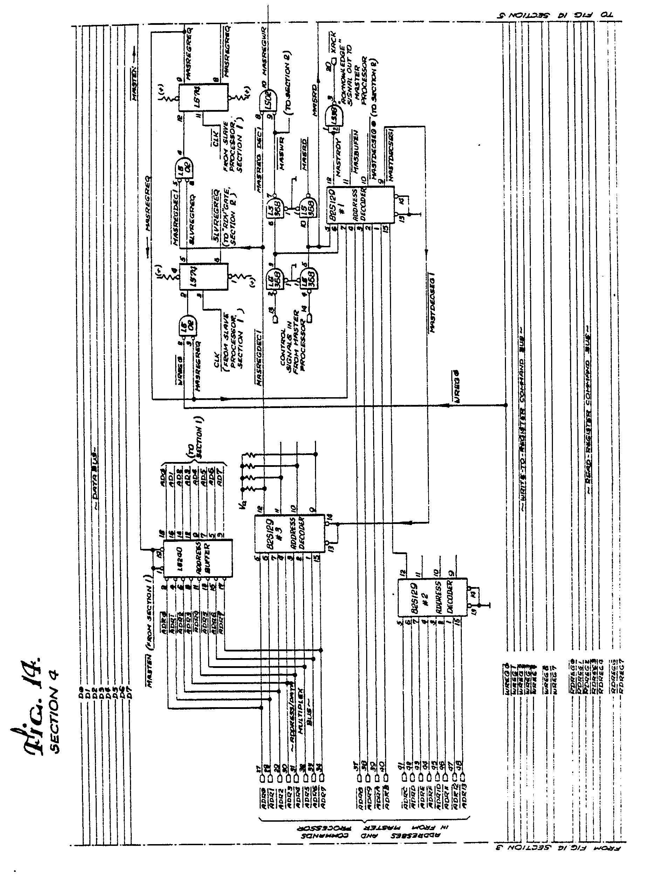

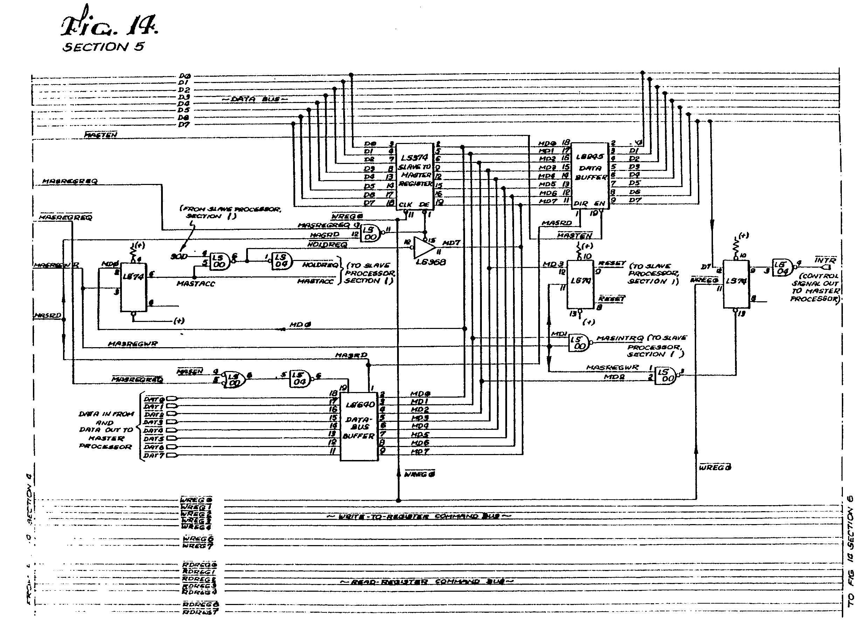

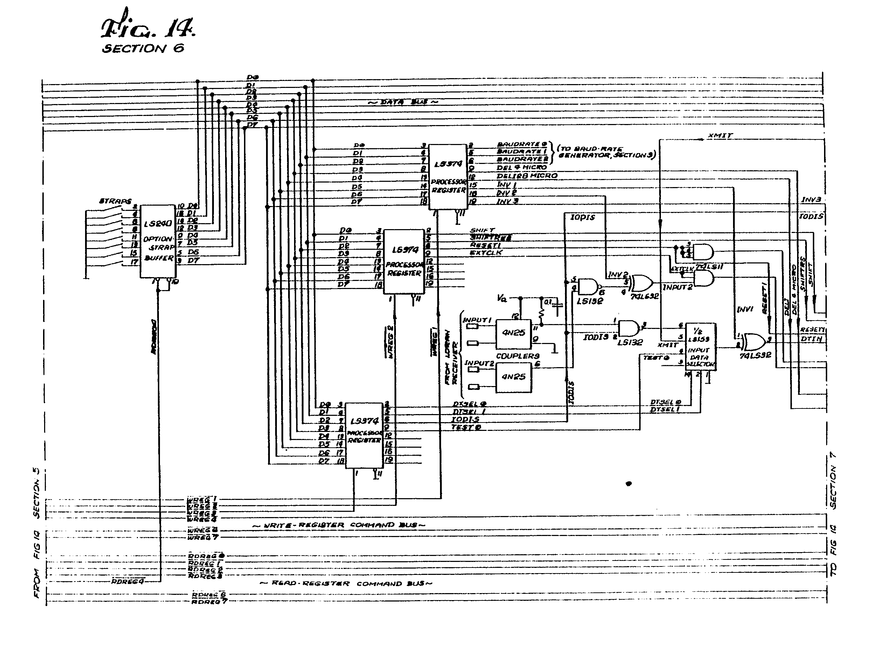

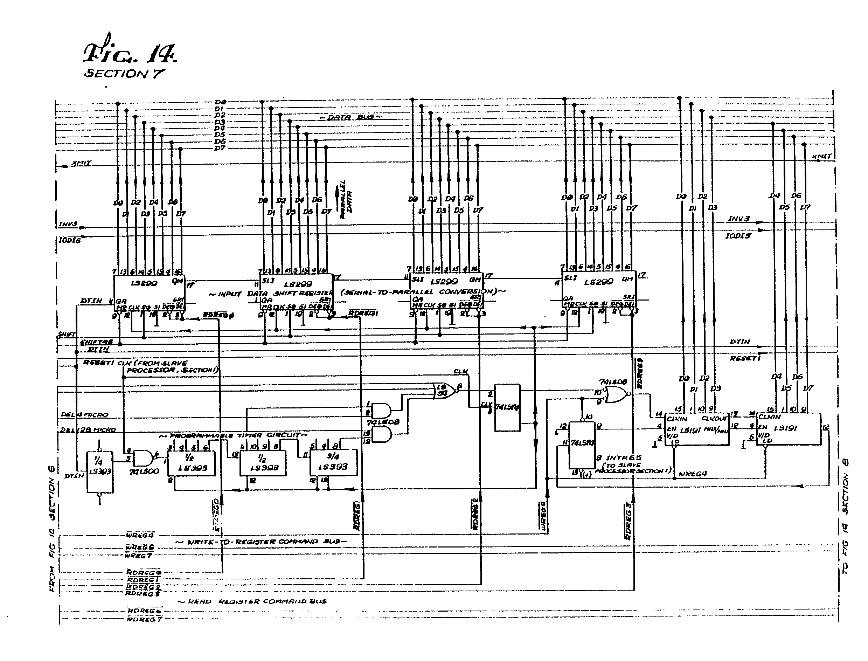

Fig. 14 - Loran Interface

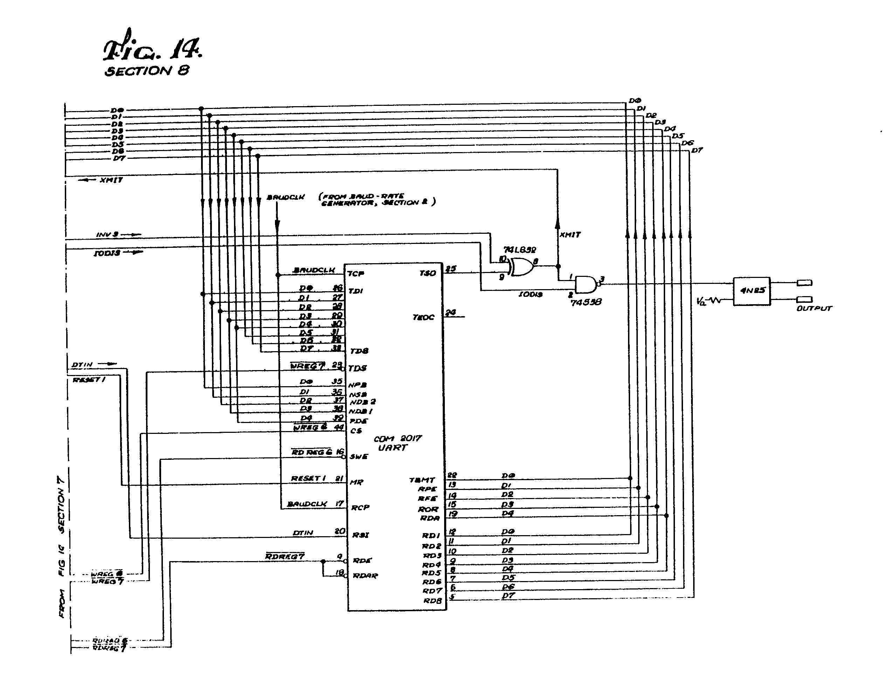

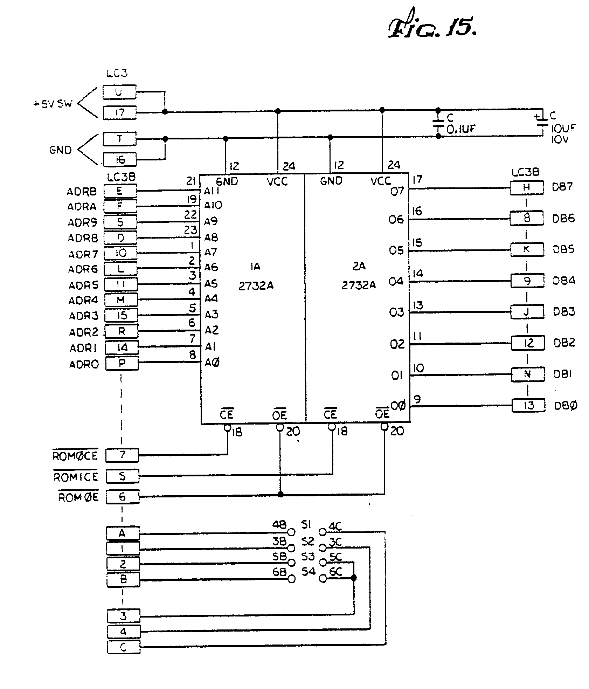

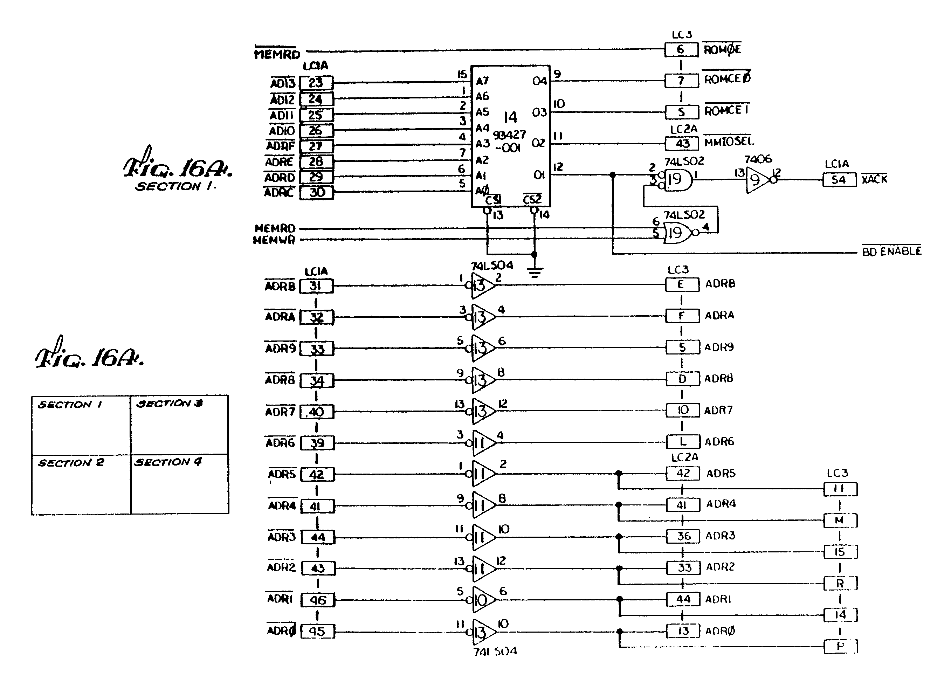

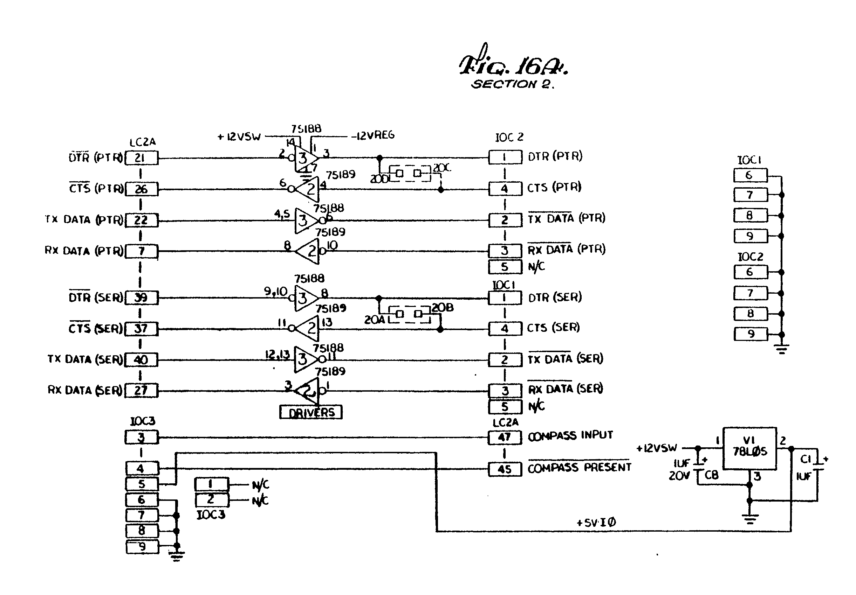

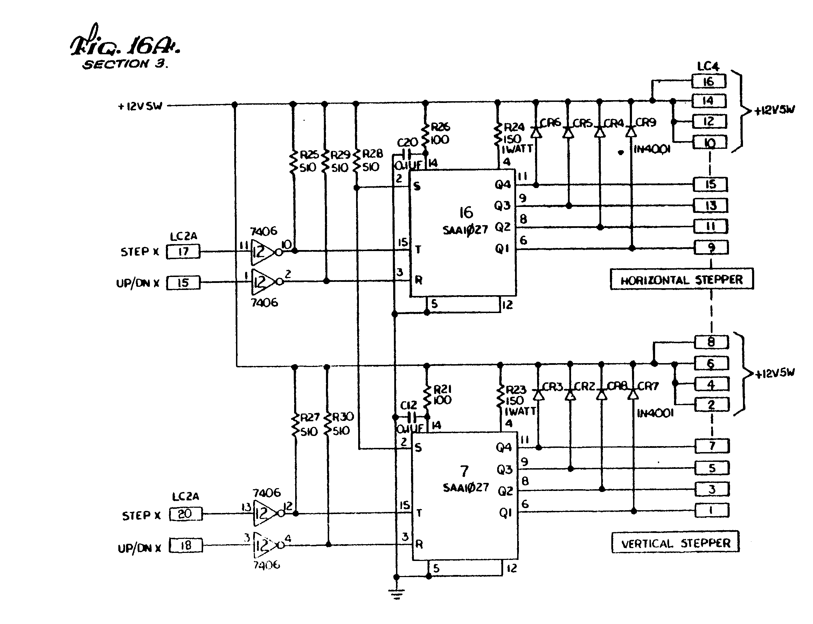

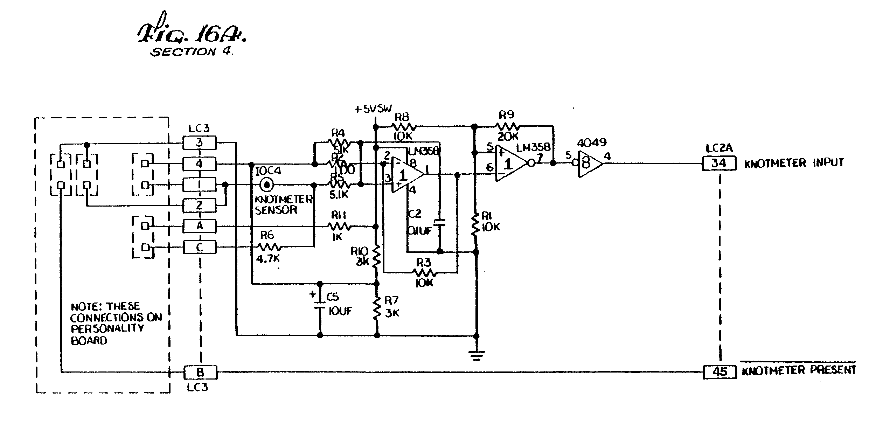

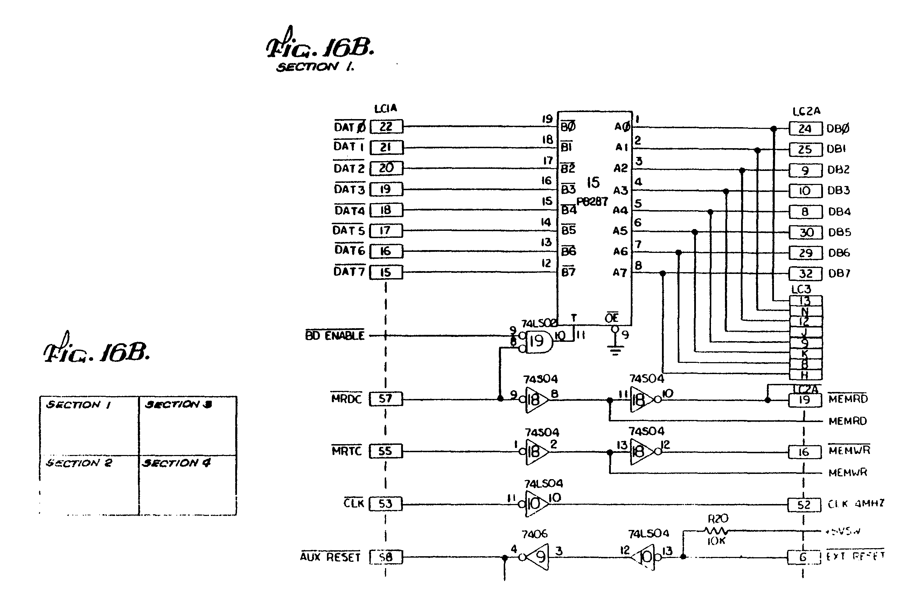

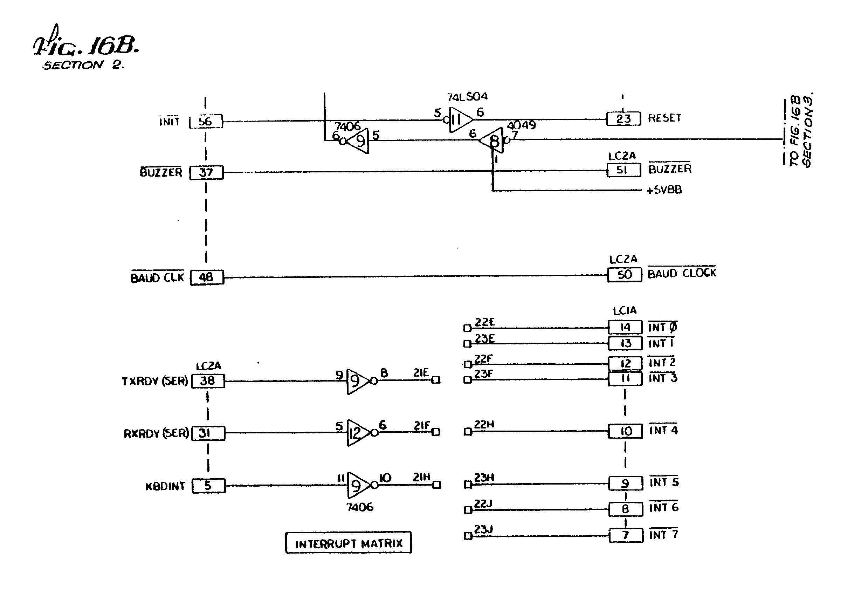

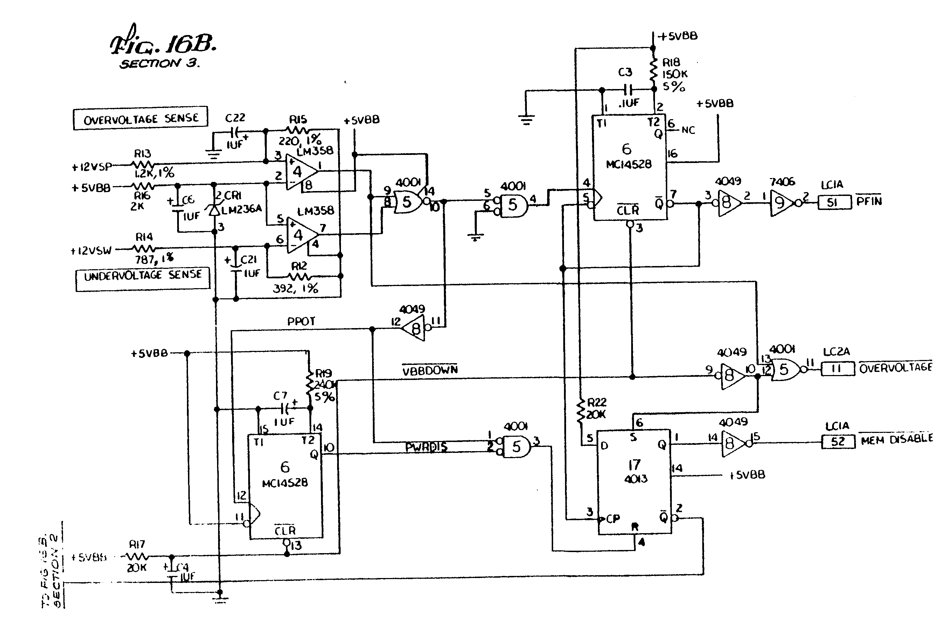

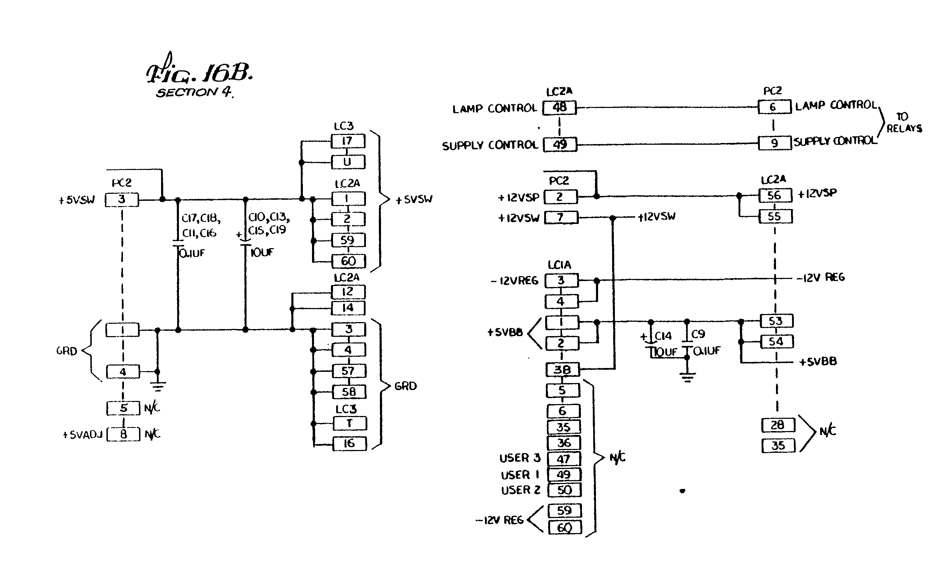

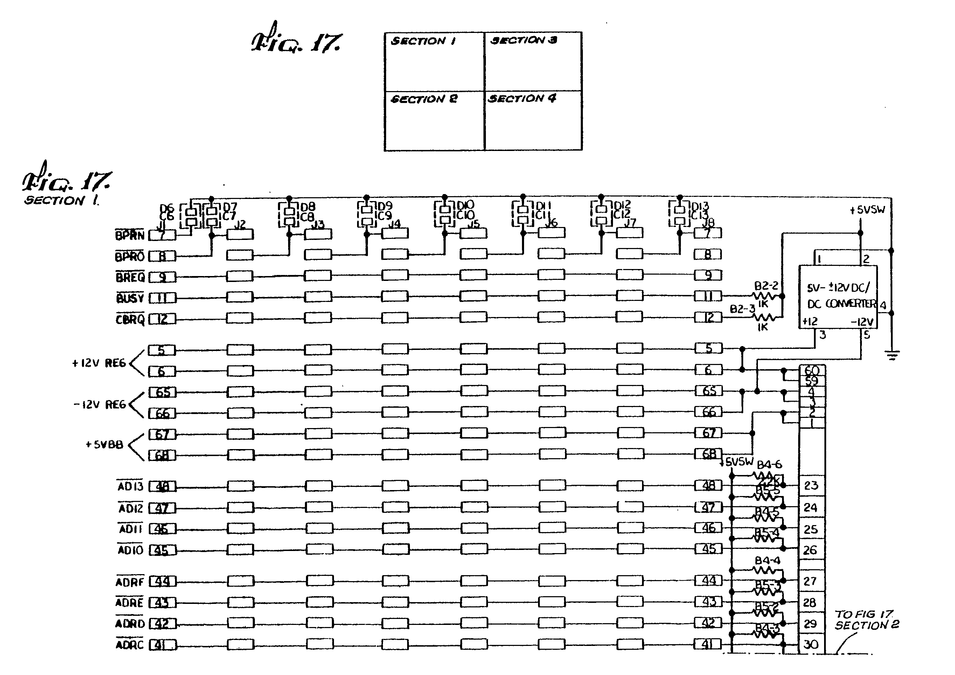

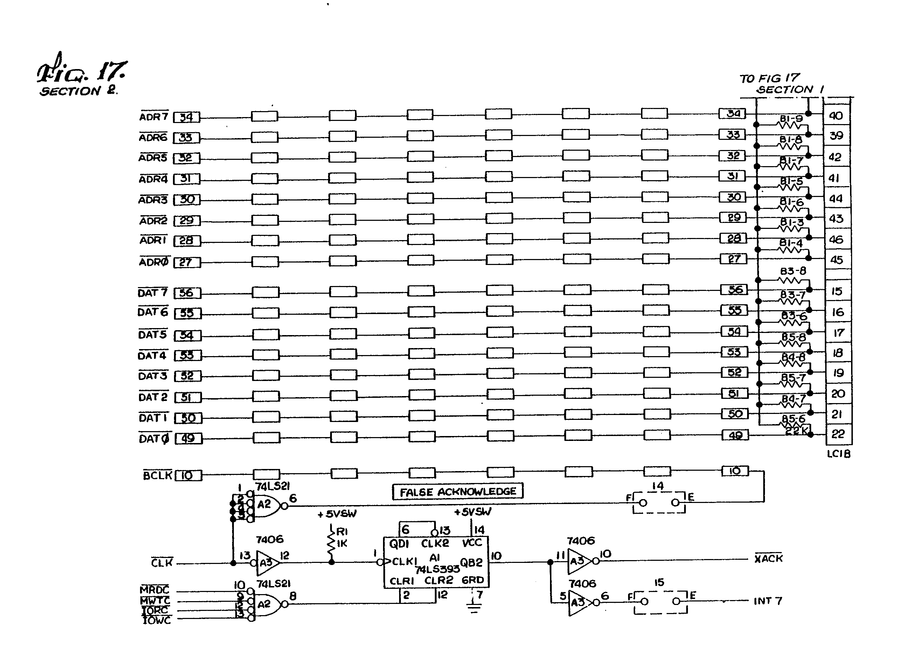

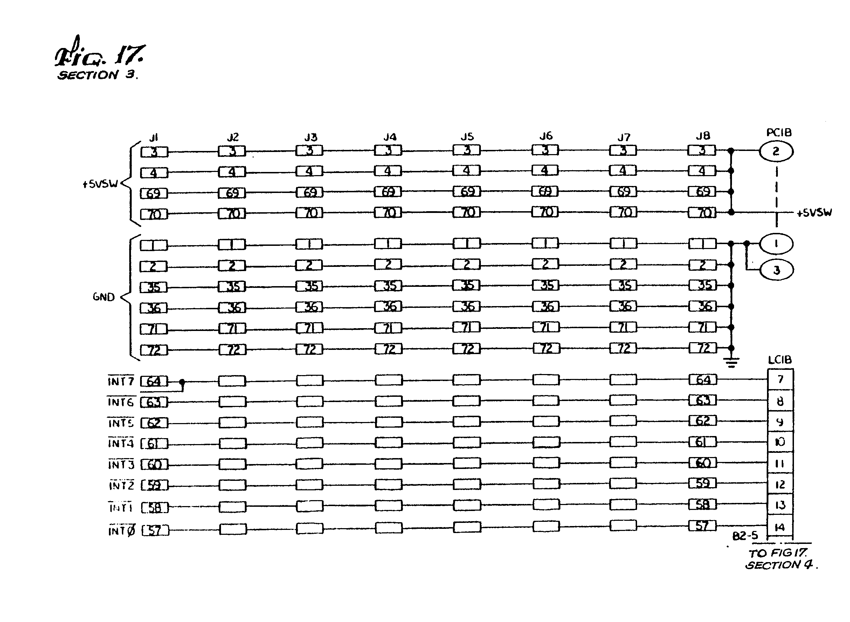

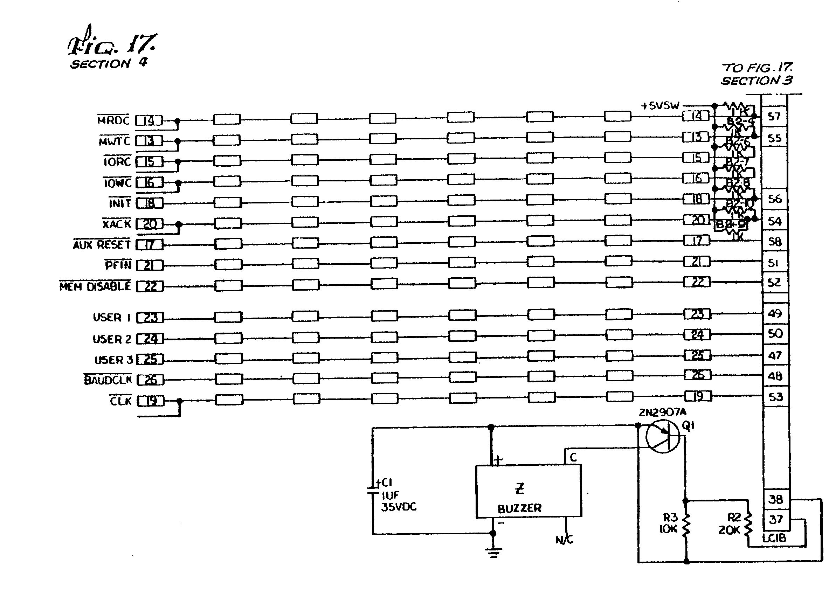

Fig. 15 - Personality Module

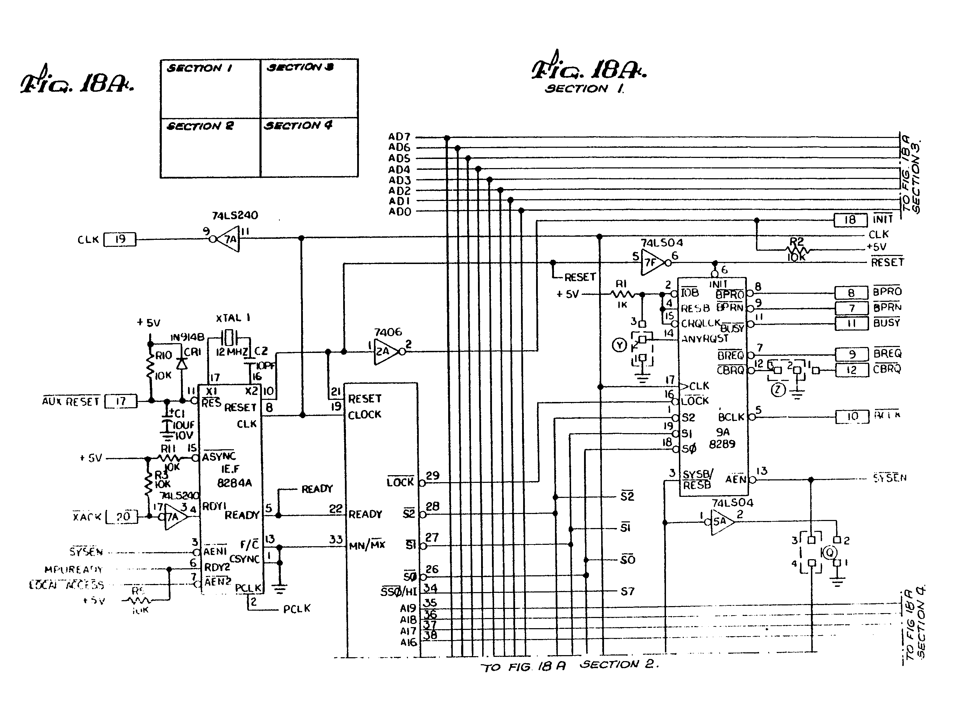

Figs.16A and B - Input/Output Module

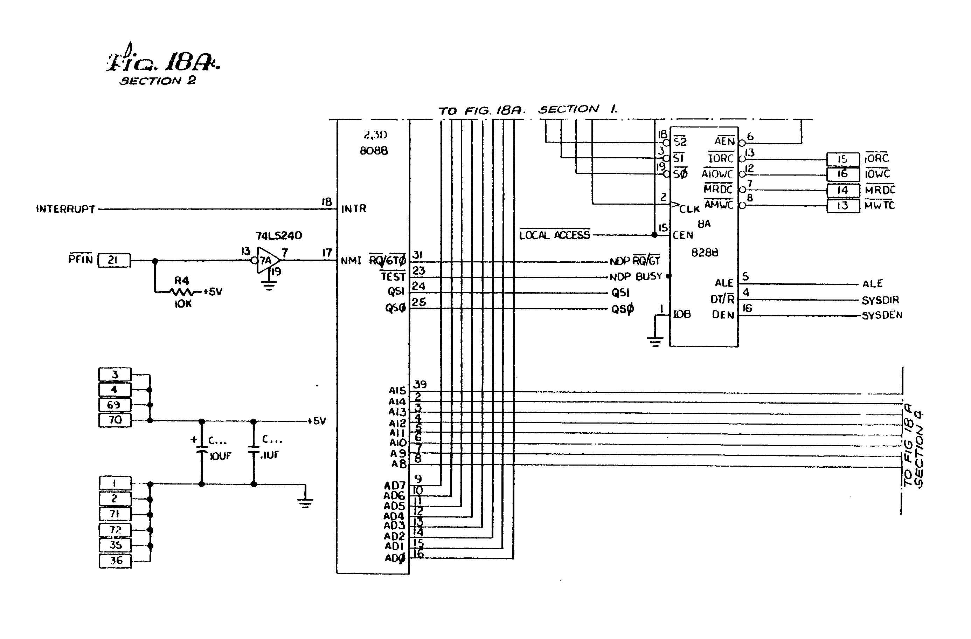

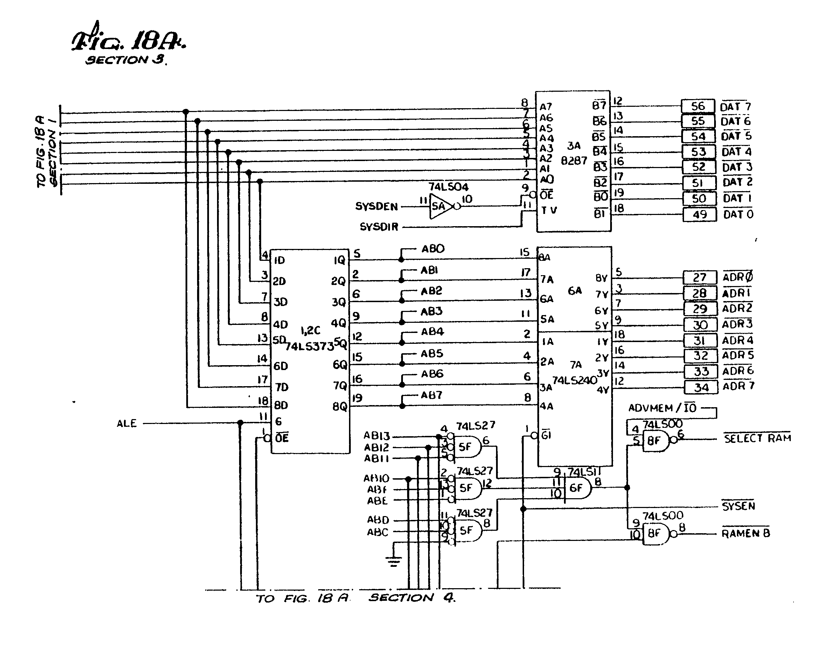

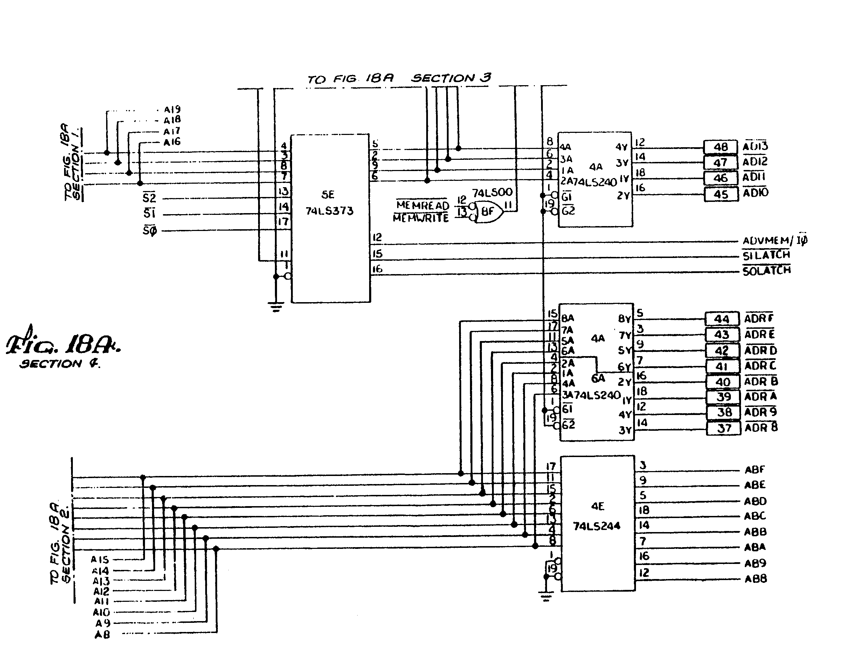

Fig. 17 - Bus Module

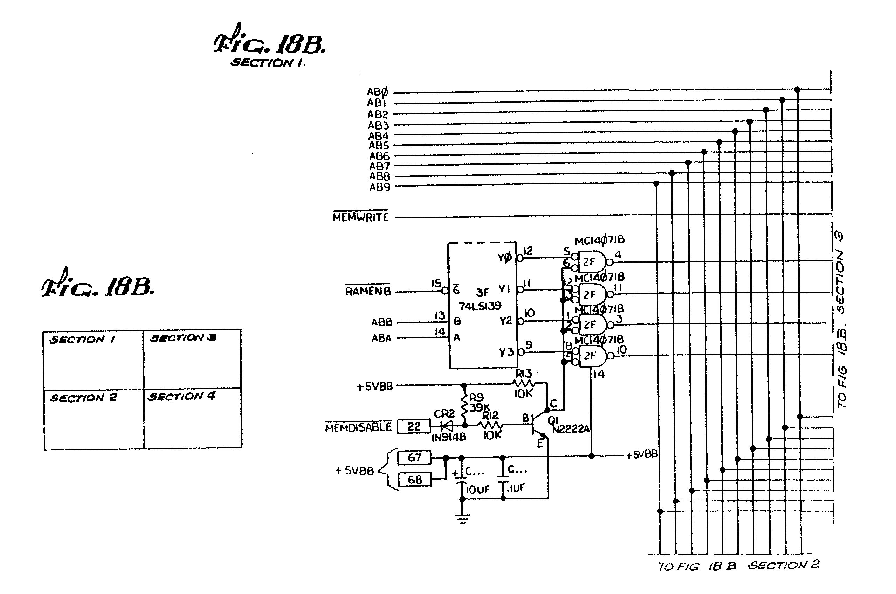

Figs. 18A, B and C - Master Processor Module

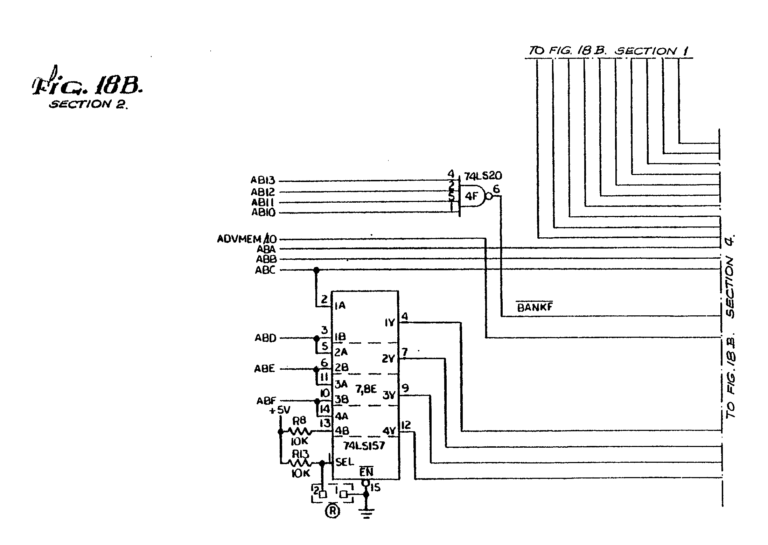

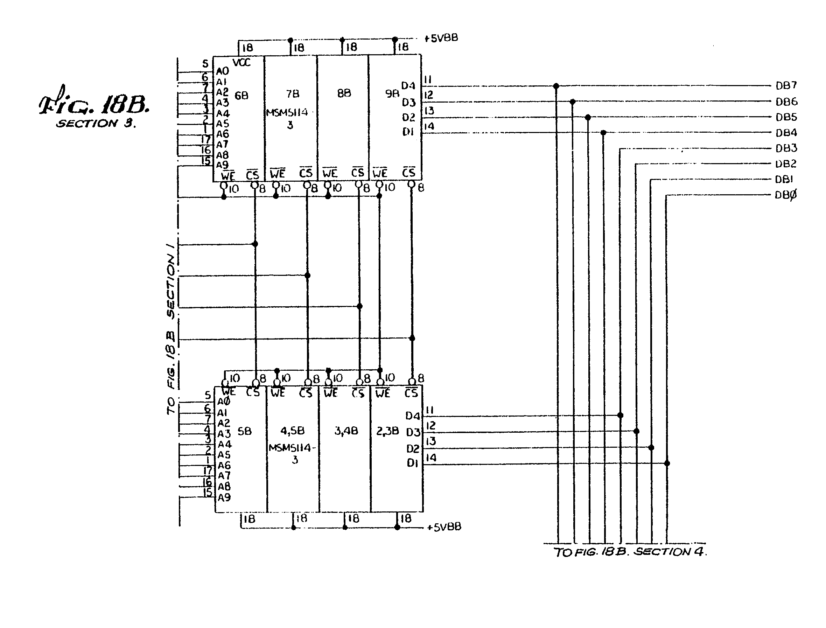

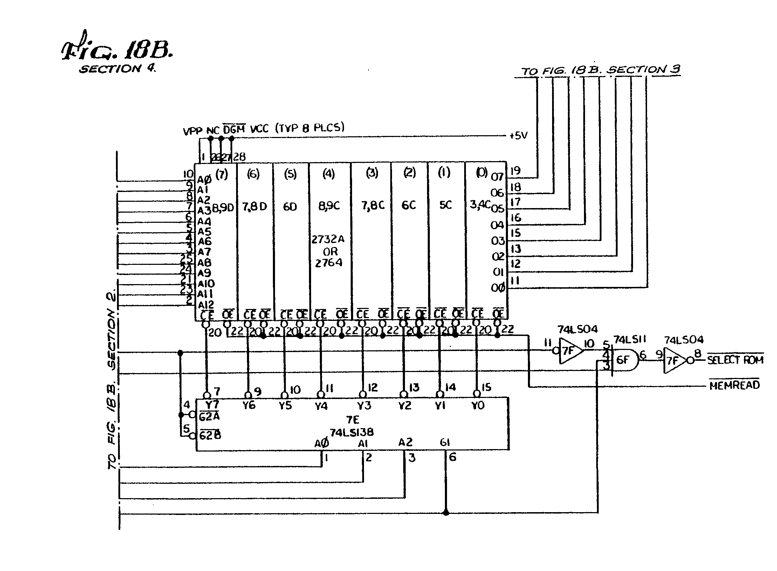

Fig. 19 - Power Control & Monitoring Module

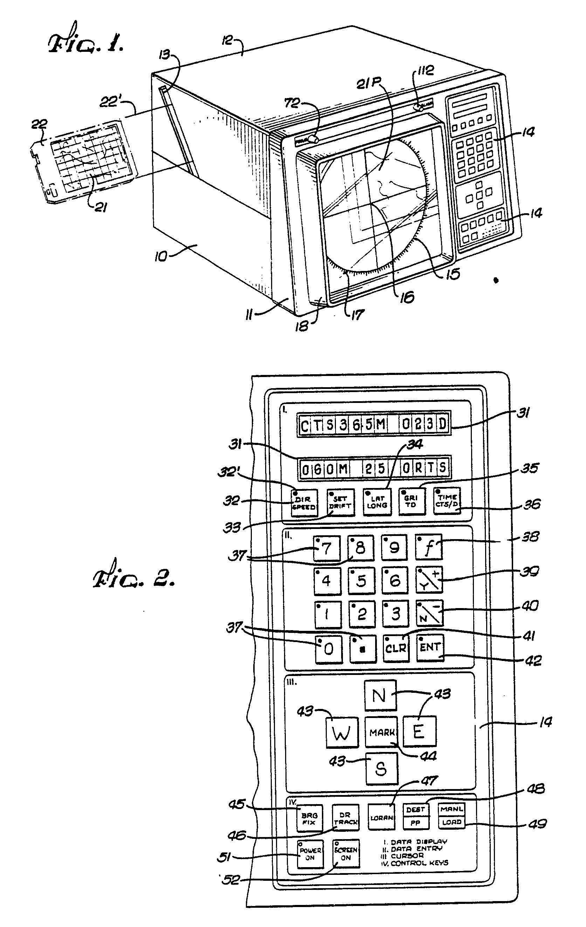

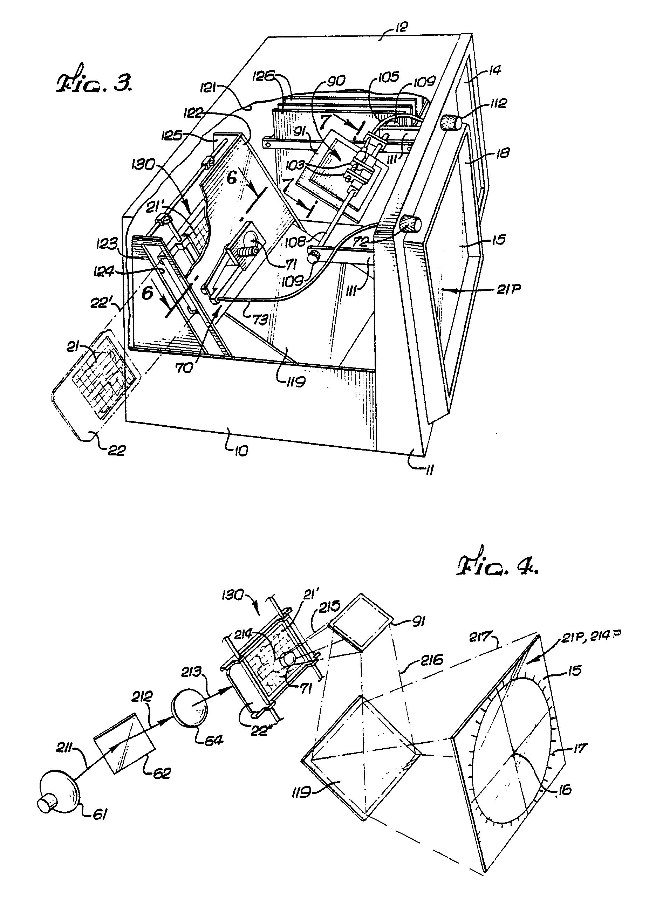

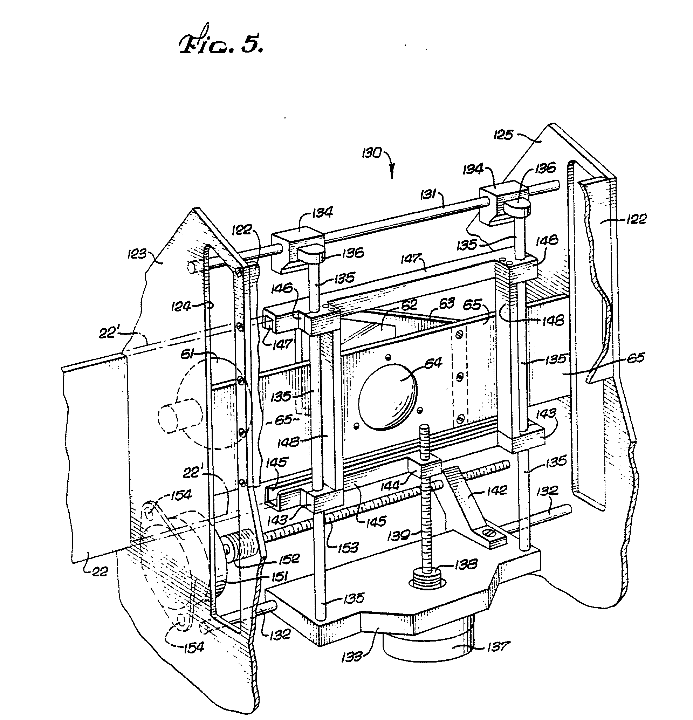

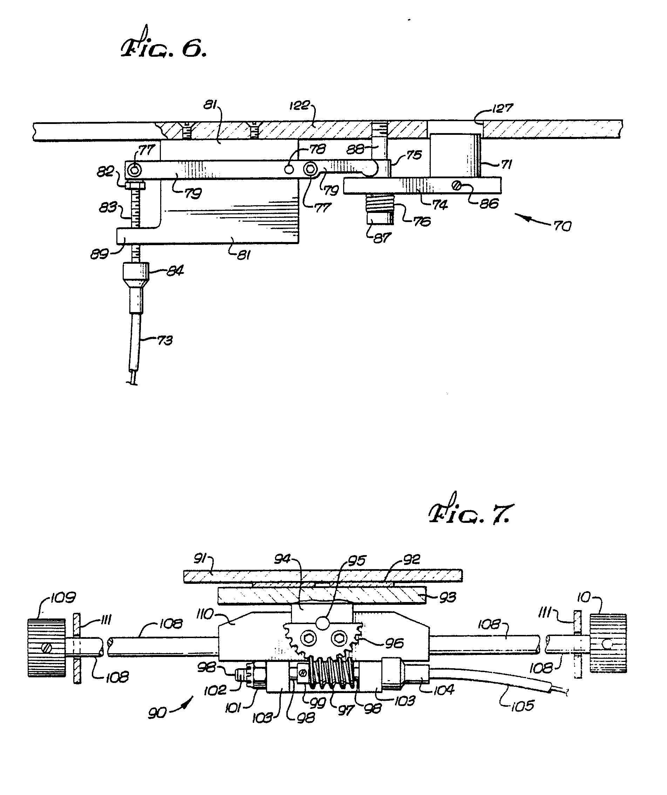

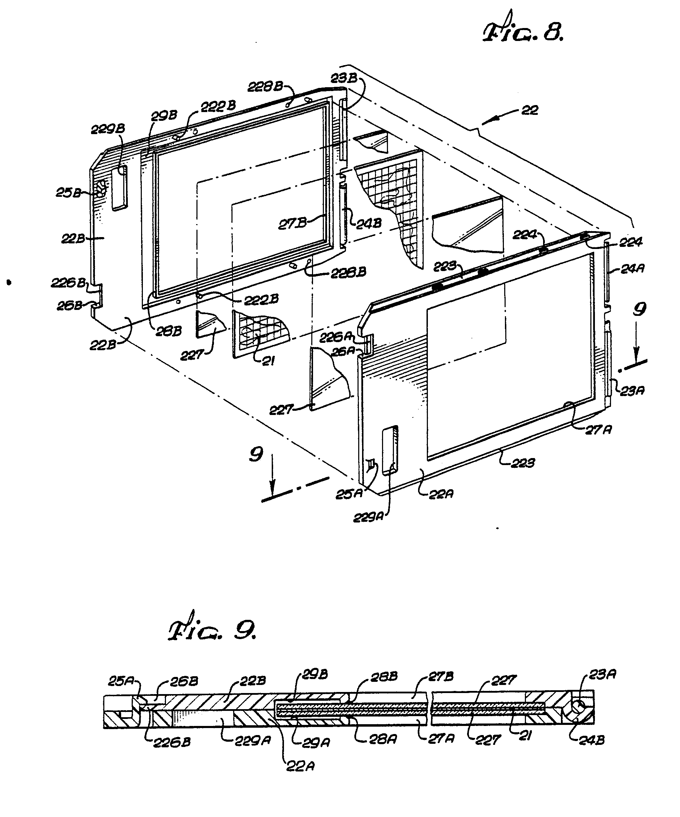

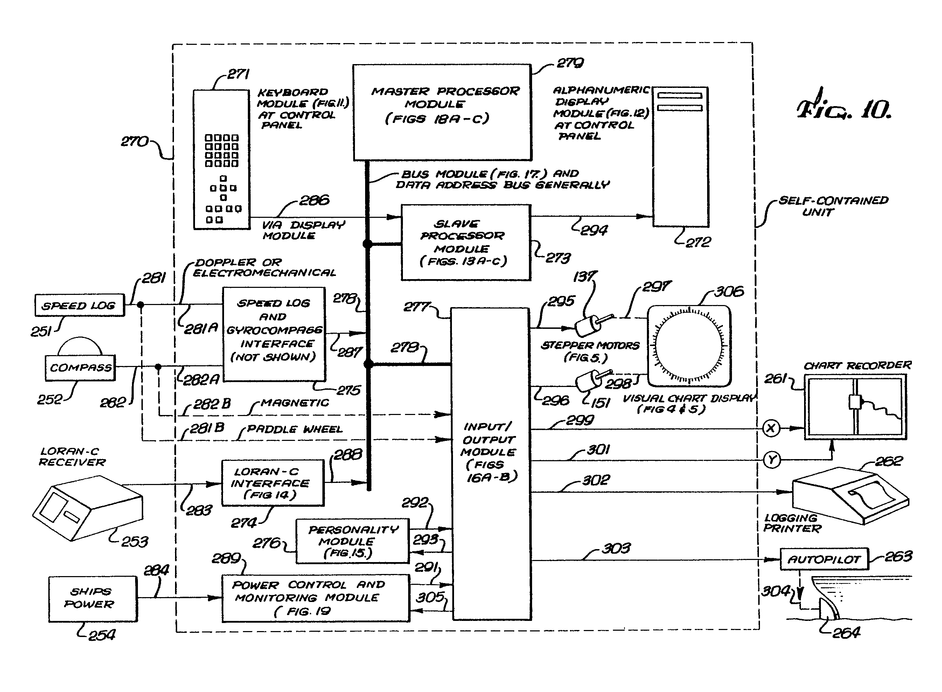

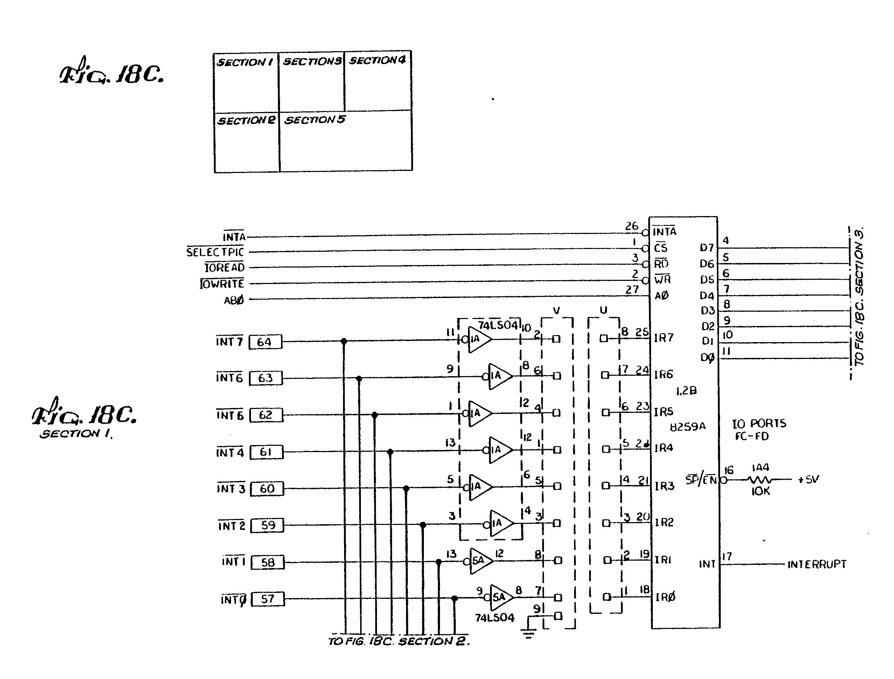

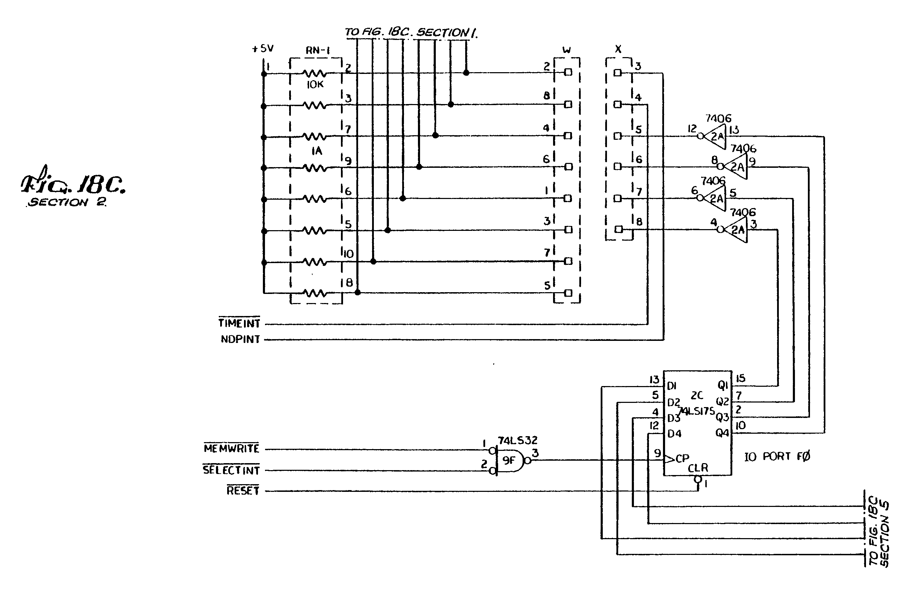

Figs. 20 through 23 are simplified diagrams of craft location and dynamics, illustrating use of the embodiment of Figs. 1 through 19 in certain practice navigating situations.

## 1. EXTERNAL FEATURES

A preferred embodiment of my invention appears to a user as shown in Fig. 1. The apparatus is enclosed in a case consisting of a lower section 10, a forward section 11 that is permanently secured to the lower section 10, and an upper section 12 that is removably fitted to the lower and forward sections 10 and 11.

The lower section 10 supports most of the hardware within the case. The forward section 10 provides a conveniently sloping control panel 14, a rear-illuminated projection screen 15, and a bezel or shade 18 to enhance daytime viewing. The projection screen advantageously bears an engraved or silk-screened central crosshair-type indicium 16 and a likewise engraved or silk-screened compass rose 17. Both these features may be provided as pointers or otherwise separately from the screen if desired. Forward section 10 also carries a focusing control 72 and an alignment control 112.

Upper section 12 is formed with an access slot 13 for insertion and removal of map 21, which is in the form of a full-color projection transparency on special microfiche-quality (that is to say, extremely high-resolution) photographic film. The chart or map 21 is enclosed in a special film mount 22, adapted to be manually inserted along a line of motion 22' through the slot 13 and into a map carriage within the upper case section 12. When the map is properly inserted, and when the apparatus is connected to draw electrical power from the craft's power system and is turned on, suitable manipulation of the keys at the control panel 14 produces on the screen 15 a projected image 21P of a small portion (approximately five percent of the linear dimension) of the map 21.

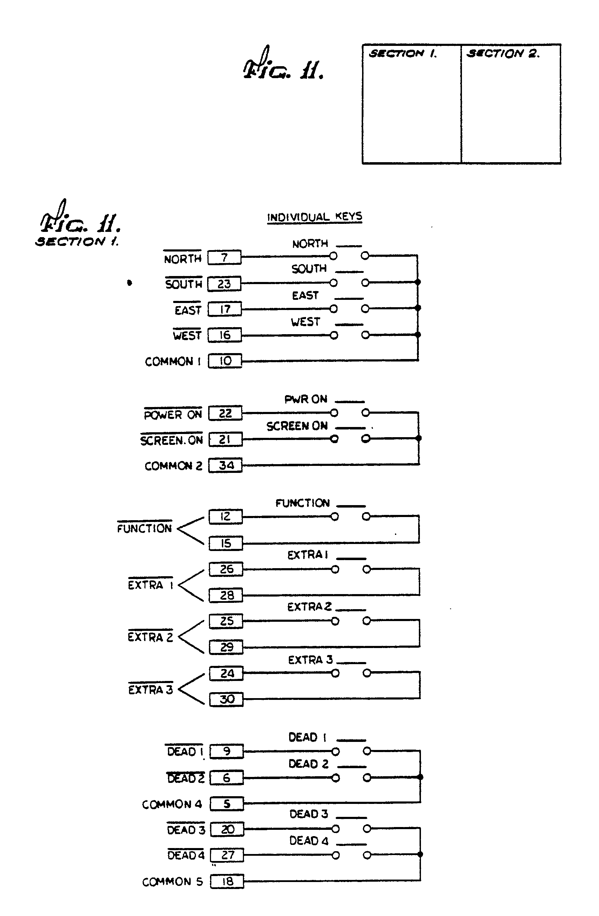

Fig. 2 shows the details of the control panel 14, namely a pair of twelve-character light-emitting-diode displays 31 and thirty-three control keys, here identified by reference numerals 32 through 52. Key 32 carries in its upper left-hand corner a small indicator light 32', furnished as a light-emitting diode. For simplicity of discussion, this description refers to the key 32 as the "DIR/SPEED light." Each of the other keys 33 through 52 likewise carries a small indicator light in the upper left-hand corner. To avoid cluttering the drawing in Fig. 2, these lights are not identified with reference numerals, but it is to be understood that, for example, the "W light" refers to the indicator light in the upper left-hand corner of the "W key" 43.

It is helpful in understanding the apparatus to think of it as having a hierarchy of capabilities -- "modes" of operation, and within each of the modes a variety of possible "functions". Some of the functions are unique to particular modes, or used in unique ways in particular modes; others are not. The three primary modes -- dead-reckoning, bearing-fix, and Loran -- are initiated by use of keys 45, 46 and 47 near the bottom of the control panel. Most of the other keys are used to perform or initiate functions: display, data entry, chart motion, or other operations.

As a general rule, mode operation does not stop when a function is selected and executed. The screen and keyboard display may be in use performing the function and so unavailable to show mode data; however, when performance of the function is complete the apparatus resumes showing current mode data as though no interruption had occurred.

Functions are initiated in two ways. Those that are often used have specific keys for the purpose; these keys and their functions are described immediately below. Those functions used less often are initiated by pressing the "f" (for "function") key 38, followed by specific other keys -- particularly numeric keys 37; these functions are described in subsection 4 below, "Operation".

Keys 32 through 36 are grouped with the displays 31 in a section of the control panel that is identified (by indicia at the bottom of the panel) as section "I. DATA DISPLAY". When the DIR/SPEED key 32 is touched, one of the two displays 31 indicates values of the craft's direction and speed, as computed within the apparatus -- or as entered by the operator at the control panel. When the apparatus is performing a function that involves entry of data, the displays 31 "prompt" the operator by displaying questions to guide him or her in operating the equipment. This prompting makes it unnecessary to memorize complex sequences of operations. Further, a "prompter" character (*) is shown to indicate character positions that are ready to accept data. All required data characters have been entered when the prompter no longer appears in the display. This assures correct format for use in the computer -- for example, entry of the zeroes and decimal point in "041 27.50 W," for forty-one degrees, twenty-seven and a half minutes west longitude, rather than "41 275 W." (Operating procedures are detailed in subsection 4, below, of this Detailed Description.)

When the SET/DRIFT key 33 is touched, the two displays 31 respectively indicate values of the set (that is to say, direction) and drift (velocity) of currents in the body of water (or, in aeronautical applications, in the air) through which the craft is moving. These values may be as computed within the apparatus or as entered by the operator at the control panel.

Similarly, touching the LAT/LONG key 34 causes the displays 31 to indicate respectively latitude and longitude, either calculated or entered. The values so indicated may represent position coordinates for a destination (or one of several way stations, which are for this purpose regarded as destinations), or for the craft's present position, or for a bearing point (to be explained shortly). The "f" key 38, DEST/PP key 48, and BRG FIX key 45 are used (as described below) to indicate which of these interpretations is to be applied to the indicated position coordinates.

Likewise, touching the GRI/TD key 35 causes the displays 31 to indicate respectively certain parameters related to the "Loran" ("long-range aid to navigation") system. The upper display reads the "group repetition interval" (GRI) for the craft's present operating area; this parameter simply represents a constant value that is characteristic of the Loran transmissions for the particular geographic area, and that must be supplied to the apparatus in order for it to properly decode the information from the Loran receiver. The lower display indicates two "time differences" (TDs) that are received from the Loran receiver, related to the selected GRI.

Some Loran receivers provide up to five TDs; the apparatus of the present invention automatically selects the two TDs that yield a position fix of greatest accuracy, and indicates only those two. Like position coordinates, the GRI and TDs displayed may be for a destination, present position, or bearing point, depending upon the implication selected by the "f", DEST/PP, and BRG FIX keys 38, 48 and 45.

Touching the TIME/CTS/D key 36 causes one of the displays 31 to indicate the date, time, and time zone for the craft's present location. If the DEST/PP key 48 is touched just before or after the TIME/CST/D key, one of the displays gives the same group of data for the next way station or destination. In addition, if the apparatus has been provided or has calculated adequate data regarding speed and location, one of the displays 31 will shift from indication of local date, time and zone to indication of a "course to steer" to make good the planned itinerary, and the distance to the next way station or destination.

Keys 37 through 42 are identified by indicia on the control panel as "II. DATA ENTRY" keys. The numeral and decimal-point keys, indicated generally at 37, are used for entry of numerical data.

The "f" (function) key 38 may be analogized to the shift key on a typewriter, or more closely to the "2d" key on many calculator keyboards: touching it changes the implication of touching certain other keys on the panel. For example, touching the " f" key and then certain numeral keys causes the apparatus to interpret the numerals not as data but rather as the numbers of certain operations -- functions -- for which specific, dedicated control keys are not provided. Touching the "f" key 38 and then any of the data display keys 32 through 36 prepares the apparatus to accept and display (rather than calculate and display) the particular type of information indicated by the data-display key used. The many different uses of the "f" key are detailed in subsection 4, "Operation", below.

The Y/+ key 39 is sometimes used for entry of numeral data -- as when it is necessary to indicate that a particular value is positive. This same key 39 is, however, also used in some parts of the operating procedure to respond in the affirmative ("yes") to an inquiry (or "prompting") that is automatically presented at displays 31. The N/- key 40 is similarly used to indicate negative algebraic sign of a quantity or negative response to a query, depending on the context.

The CLR ("clear") key 41 is used in the customary way to correct an entry that has been begun erroneously. The ENT ("enter") key 42 is used to finalize entry of a parameter or response that has been provisionally entered (or, to put it more conventionally, "keyed but not entered") using keys 37, 39 and 40. The ENT key also has certain other uses in special situations to be described later.

Keys 43 and 44, designed "III. CURSOR" by indicia on the control panel, do not actually move the crosshairs (or "cursor") on the screen, but rather move the map, within the apparatus, relative to the projection system so that the projected image moves with respect to the crosshairs on the screen. For instance, touching the "W" key moves the map image to the right, so that points further toward the west come under the vertical crosshair; touching the "N" key moves the map image downward to bring points further toward the north under the horizontal crosshair; and so forth.

If the operator touches one of the N, S, E and W keys 43 only briefly, the stepping drive system will advance only one step, but if the operator touches the key continuously the drive will advance continuously, at a rapid stepping rate -- thus providing both fine adjustment of position and coarse or "slewing" adjustments using only the four keys. The N, S, E and W keys are also used as data-entry keys, to indicate the compass direction when entering latitude and longitude of bearing points, present position, way points, or destination.

Touching the MARK key 44 indicates to the apparatus that the map location that is aligned with the crosshairs, at the time the key is touched, is a destination (or way station), or the craft's present position, or the location of a bearing point (see below) -- depending upon use of the "f", DEST/PP, and BRG FIX keys 38, 48 and 45. The MARK key also has certain other uses in special situations, to be described shortly.

Keys 45 through 52 are identified by indicia on the panel as "IV. CONTROL KEYS". As mentioned earlier, they select basic operating modes for the instrument. The BRG FIX key 45 alerts the apparatus to receive two kinds of data: (1) numerical entries, or "mark" entries (mentioned just above with regard to the MARK key 44), specifying the position of a bearing (BRG) point -- that is, the position coordinates, or map position as such, of a visible object, radio source (other than Loran transmitters, whose locations are stored within the apparatus), or other reference point relative to which bearings are to be taken; and (2) numerical entries for the actual bearing and distance measurements taken from the craft by radar, pelorus, compass, extant, rangefinder, etc. Operation in the bearing-fix mode is described in detail in subsection 4, below.

The DR TRACK key 46 directs the apparatus to apply dead reckoning (DR) to repetitively calculate and display (using both the projection screen 15 and the displays 31) the present position of the craft. This calculation is automatically performed once per second, based on the most recently furnished heading and speed data—whether from automatic sensors or manual entry and on the most recently entered or calculated set and drift data.

If automatic speed and heading sensors are not provided, the displays 31 prompt the operator to enter course and speed data manually. If the sensors are provided, the system automatically accommodates magnetic compass deviations and variations, and excessive fluctuations in the signals from either the compass or the speed log, as described below in subsection 4, "Operation".

In this DR mode the instrument will itself calculate set and drift, and compensate for them, if bearing fixes are periodically supplied by the operator to support determination of set and drift from the discrepancy between positions found by fix and by DR.

The LORAN key 47 directs the apparatus to repetitively calculate and display the present position of the craft based on Loran fixes, and to compare the progressive changes in Loran fix with the results of dead reckoning to find current set and drift of the water through which the craft is moving — and from this comparison to determine a set-and-drift-compensated "course to steer" for display and for direction to an autopilot (if available).

In its "normal" condition the apparatus displays calculated position coordinates, or GRI and TDs, or local time and date, for the craft's present position. Likewise, manually entered position coordinates, GRI and TDs, or local time and date, are interpreted as for the craft's present position. Touching the DEST/PP key 48, however, advises the apparatus to accept and/or display data for the craft's destination (or a way point) instead. Touching the "f" key 38 and then the DEST/PP key 48 advises the apparatus to return to its normal condition — accepting and/or displaying data for the present position.

Touching the MANL/LOAD key 49 prepares the unit to accept manual instructions at the N, S, E and W keys 43 for motion of the map image, as mentioned above with regard to those keys. This mode of operation, as distinguished from the bearing-fix mode, or the destination-locating or present-position-locating mode, merely moves the chart for the user's convenience in viewing areas of the chart that are not currently displayed. Which such viewing is going on, the basic operating mode of the apparatus was last previously in progress continues "in the background" — without affecting the chart position. When such manual direction of the displayed chart has been completed, touching the MARK key 44 returns control of the map position to the automatic operating mode that has continued during viewing, and the map automatically moves to the appropriate present position for that mode.

Touching the "f" key 38 and then the MANL/LOAD key 49 causes the map carriage within the apparatus to move to a position adjacent the slot 13 (Fig. 1) in the upper case section 12, for purposes of changing maps. When a new map is in place, touching the ENT key 42 informs the apparatus that the necessary procedure for accepting a new map is to be begun.

Touching the POWER ON key 51 has the effect of turning the instrument power on or off, depending on whether it is initially off or on repectively. The SCREEN ON key 52 has the same effect for the projection lamp within the apparatus. During extended times when it is not desired to view the map display of present position, approximately half the operating power for the apparatus can be conserved by operating it with the screen dark.

The small indicator lights in the upper corners of the keys 32 through 52 are automatically illuminated by the apparatus during operation, to indicate what mode the device is in, what is being displayed, or what data or other control keys are "live" as a group — that is, which keys can be used by the operator to enter information or instructions. Some of these indications will be mentioned below.

## 2. MECHANICS AND OPTICS

In Fig. 3 the upper section of the instrument case is broken away at 121 to show the general internal layout of equipment. Supported from internal side bulkheads 123 and 125 is a map transport mechanism 130, forward internal bulkhead and optical barrier 122, projection lens 71 and focusing mechanism 70, and large "folding mirror" 119. A slot 124, aligned with the slot 13 (Fig. 1) in the upper case section, permits a film-transparency map 21, in a film mount 22, to be inserted into and removed from the position 21' in the transport mechanism, along a line of motion shown at 22' in Figs. 1 and 3.

Suspended behind the map transport mechanism 130 and not visible in Fig. 3 are a projection lamp, a "cold" collecting mirror, a collimating (or "condensing") lens, and various other elements to be discussed shortly. At the rear of the case, also not illustrated, are heat siks to dissipate lamp heat, and removable access panels for lamp replacement and other servicing.

A small "folding mirror" 91 and its alignment mechanism 90 are suspended above and forward of the large "folding mirror" 119, upon a support rod 108 that is in turn held by brackets 111 anchored to the case front section 11. Three optical adjustments are provided for:

(1) focusing of the projection lens, via knob 72, cable 73 and mechanism 70 — which is detailed in Fig.;

(2) rotational alignment of the projected map with the compass rose 17, via knob 112, cable 105 and mechanism 90 — which is detailed in Fig. 7; and

(3) up-and-down alignment of the projected map with the screen, via knobs 109 — which simply rotate the support rod 108 relative to the brackets 111. The first two of these adjustments are accessible with the upper case section 12 in place.

Electronic circuit boards providing the display, map transport-mechanism control, logic, and computing functions required for an operational apparatus are housed generally at 126, in the right end of the case, and also just behind the control panel 14.

Fig. 4 illustrates the optical elements in their mutual relationship. Light from a thirty-watt tungsten-halogen lamp 61 is collected at 211 by a flat dichroic collector mirror 62, which transmits lamp heat (that is, the infrared component of the radiation from the lamp) away from the film-transparency map, while turning the visible components of the beam toward the map. This configuration permits enclosure of the lamp conveniently within the case below and to the rear of the transport mechanism 130 (Fig. 3), without the necessity of extending the case or using a collimating lens 64 of impractically short focal length. The redirected diverging beam at 212 from collector 62 is defocused by a 50.8 mm condenser lens 64, providing generally parallel rays at 213 for illumination of a small portion 214 of the map 21', here shown with mount 22'' held firmly in the transport mechanism 130.

The map is a twelve — or thirteen-times reduction of the original standard NOAA (or foreign) chart. A six-element, 25 mm focal-length projection lens 71 forms a fourteen-times magnified image of the map section 214 at 214P (or 21P, as with reference to the entire map 21 per Figs. 1 and 3) at a lowered nine-by-nine-inch screen 15.

The image distance is the sum of the distances from lens 71 to small "folding mirror" 91, thence to large "folding mirror" 119, and thence to the screen (center-to-center distances being the nominal ones). If that image distance were also the physical separation of lens 71 and screen 15 by the most direct center-to-center path, the optical system would require an unacceptably long case 10, fore-to-aft, and would in addition require that the map 21 and projection lens 71 be oriented parallel to the screen 15 — that is, almost vertically — further interfering with the convenient space-saving placement of the lamp 61, collecting mirror 62 and collimator 64 below and behind the tilted transport mechanism 130.

The two first-surface-coated "folding mirrors" 91 and 119 are therefore provided to "fold" the optical path into a more compact physical arrangement: the projected beam at 215 is deflected (at adjustable angles) by small "folding mirror" 91 along a downward path 216, leading the beam to large "folding mirror" 119, which deflects the beam forward at 217 to the screen. The mirrors are positioned and aligned so that the centerline of the projected beam strikes the crosshairs 16 normal to the screen surface 15, thereby imaging the plane of the map 21' upon the plane of the screen 15, to minimize nonuniformity of focus across the screen 15.

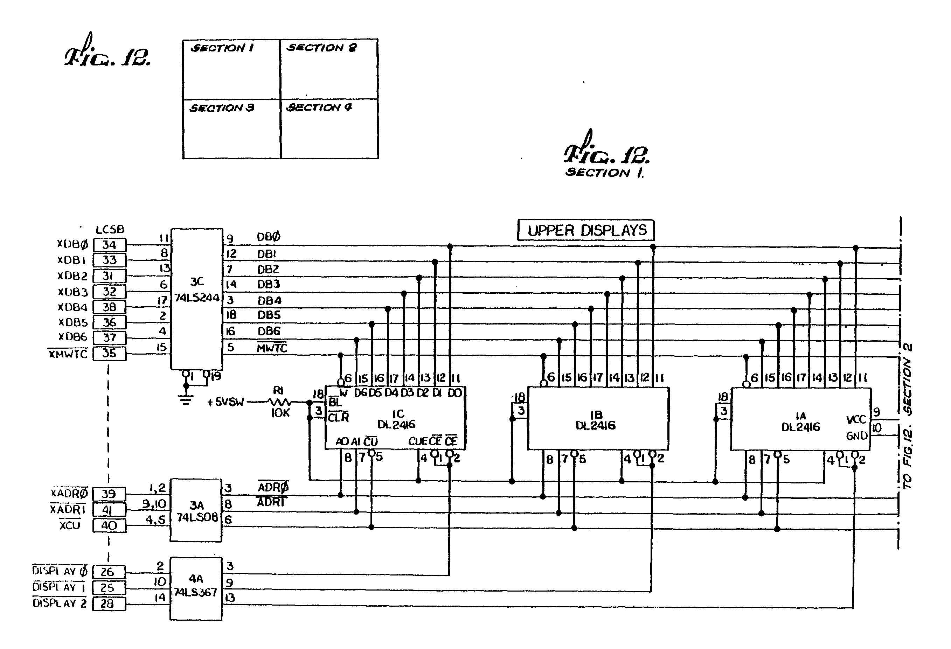

When a map 21' and film mount 22'' are properly oriented in the transport mechanism 130, the map image 21P, 214P is right-reading — that is to say, neither upside-down nor inside-out (like a mirror image). The film transparency 21' is prepared from north-up charts, so the image 21P, 214P is likewise generally north-up, and the compass rose 17 that is fixed with respect to the screen 15 is therefore generally correct-reading with respect to the projected chart image. By adjustment of the alignment control 112, the operator can bring the chart image into precisely north-up alignment with the compass rose, as will be explained in detail with reference to Fig. 7 below. These relationships of course require stable correct placement of the film in the film mount 22'', and of the mount 22'' relative to the transport mechanism 130; this requirement is satisfied by the design of the transport mechanism (to be described next) and film mount (Figs. 8 and 9).

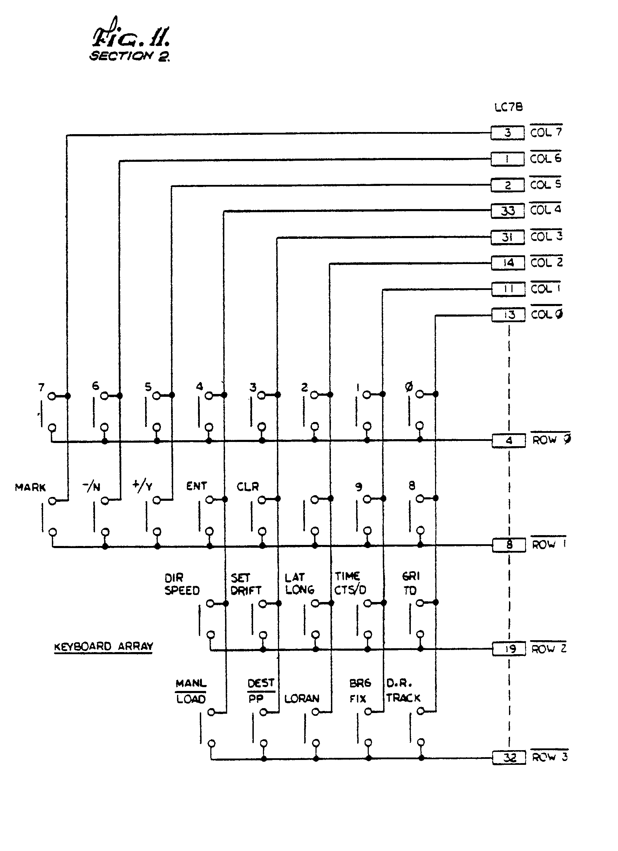

Fig. 5 shows the map transport mechanism and certain elements of the optical system, previously mentioned, that are positioned behind and below the transport mechanism — namely, the lamp 61, collector mirror 62, and collimator lens 64. Suspended between the left and right bulkheads 123 and 125 is a heat-absorbing panel and light barrier 65, which in turn supports the collimator 64 and an angled, apertured support bracket 63 for collimator 62. The lamp 61 is supported by a socket and brackets that are not illustrated. The aperture (not shown) in the support bracket 63 permits heat transmitted by the dichroic collector mirror 62 to escape toward the right end of the case, for dissipation (along with other heat from the lamp) by heat sinks (not illustrated) at the back of the case.

The map transport mechanism 130 is suspended from the bulkheads 123 and 125. Precision rods 131 and 132, accurately parallel and horizontal, are each secured at both ends to the bulkheads. These two rods 131 and 132 form horizontal tracks upon which move the lower carriage block 133 and the upper carriage bearings 134. The block 133 and bearings 134 are all fitted internally with linear ball bearings, for smooth motion along the horizontal rods 132 and 131 — which are hardened and ground to function effectively as part of the bearing races. The block 133 and bearings 134, together with all of the components which interconnect them and which they support, may be regarded as the horizontal carriage. Secured to the lower carriage block 133 is a lead-screw follower 142, which is threaded for operative engagement with a precision horizontal lead screw 153.

The horizontal lead screw 153 in turn is coupled at 152 to the drive shaft of precision stepping motor 151, which is secured at 154 to the left bulkhead 123. The coupling 152 between the motor 151 and the lead screw 153 is of a type which accommodates minor misalignment of the lead screw 153 relative to the horizontal track 132. The order of magnitude of misalignments so accommodated is not such as would introduce binding or significant inaccuracies in map position, but rather is of a substantially smaller magnitude that would interfere with attachment of an absolute minimum of friction reflected back into the operation of the stepping motor 151. It has been found that failure to provide friction relief at this point can lead to the motor's dropping steps, and thus a cumulative unknown error in map position.

Precision rods 135 are each journaled at their lower ends into the horizontal carriage block 133 and at their upper ends into journals 136 that are fixed to the upper carriage bearings 134. These two rods 135 form vertical tracks upon which moves the vertical carriage, sometimes referred to herein as the "map carriage," which is composed of elements numbered 143 through 148.

More particularly the vertical carriage or map carriage is made up of essentially four pieces: an upper (downward-facing) slotted or "U" rail 147, with extensions 146 that carry linear ball bearings for smooth motion along the hardened, precision-ground vertical track rods 135; a lower (upward-facing) slotted or "U" rail 145, with similar extensions 143 that carry linear ball bearings for smooth motion along the track rods 135, and an additional extension 144 precision threaded for operative engagement with a precision vertical lead screw 139; and two vertical spacer bars 148, which interconnect the upper and lower rails 147 and 145 and hold the rails apart at just the right distance to accommodate the film mount 22.

The vertical lead screw 139 is coupled at 138 to a precision stepping motor 137, which is mounted to the lower horizontal carriage block 133. Because the travel of the vertical carriage is somewhat less than that of the horizontal carriage, and because the motor 137 that drives the vertical carriage is mounted vertically and so is less likely to shift in position after adjustment, and because that motor 137 is somewhat more readily accessible for shimming adjustment than the horizontal drive motor 151, there is a substantially less severe potentiality for misalignment of the vertical lead screw 139 than the horizontal one 153. Accordingly an ordinary thrust bearing 138 may be adequate for the vertical drive, rather than a coupler of the type described above, and shown at 152, for the horizontal drive.

It should now be apparent that when the map 21 (Figs. 1, 3 and 4) in its film mount 22 is inserted, as along line of motion 22′, into position within the map carriage or vertical carriage 143-148, then suitable precision electrical stepping pulses applied to the motors 154 and 137 will respectively shift the map 21 horizontally and vertically. By virtue of this motion relative to the projection system (Fig. 4) — and particularly relative to the projection lens 71 — the displayed map image 21P, 214P is shifted horizontally and vertically relative to the screen 15 and its crosshairs 16.

It should further be clear now that the relationship between (1) the map scale and (2) the angular value of each motor step, as translated by the pitch of the lead screws 139 and 153 into linear motion, establishes a fixed calibration for the system in terms of mapped distance per motor step for any specified latitude. It must be borne in mind, however, that the map scale and therefore this calibration vary with latitude, in accordance with the principles of the Mercator (or other) projection system used in preparation of the chart from which the film transparency 21 is made. This latter variation must therefore be taken into account in the derivation of drive signals to the motors from latitude and longitude data.

Fig. 6 illustrates the details of the focusing system indicated generally at 70 in Fig. 3. The projection lens 71 is disposed in or adjacent an aperture 127 formed in the forward bulkhead 122 (see Fig. 3 for orientation). Motion of the lens 71 along its longitudional axis (that is, along the center line of the circular aperture 127) moves the plane of focus of the map image 21P, 214P normal to the plane of the screen 15, thus permitting the map image 21P, 214P to be focused on the screen 15. Such motion is effected by operating control knob 72 (Fig. 3), which in turn via a conventional cable termination (not illustrated) rotates the cable 73 about its own axis. The cable 73 rotates termination 84 (Fig. 6), which in turn is secured to and rotates an adjusting screw 83. The latter is threaded through an extension 89 of the focusing-mechanism mounting block 81, which is firmly fixed to the forward bulkhead 122.

The adjusting screw 83, through a force-transmitting bearing 82 which is rotatably secured to the end of the screw 83, engages one of the crosspins 77 of a dual (see Fig. 3) lever 79. The two arms (one on each side of the mounting block 81) of the dual lever 79 are both pivoted at 78, and forceably engage a lens-support bar 74 — to which the projection lens tube 71 is pinned at 86. The lens-support bar has press-fitted within it a bushing 75, which is internally dimensioned for sliding motion upon stud 88. The stud is threaded into the forward bulkhead 122, has a retaining head 87 at the end remote from the bulkhead, and carries a spring 76 between the retaining head 87 and the lens-support bar 74. The spring 76 urges the lens-support bar 74 (and with it the projection lens 71) toward the bulkhead 122 and thus into firm engagement with the lever 79.

Thus if the control knob 72 (Fig. 3) is operated in the direction that advances the adjusting screw 83 toward the bulkhead 122, then the lever 79 forces the lens-support bar 74 away from the bulkhead, against the action of the spring 76, and the corresponding motion of the projection lens 71 away from the bulkhead 122 shifts the plane of focus of image 21P, 214P forward relative to the plane of the screen 15. If the control knob 72 is operated in the opposite direction, the consequent removal of force upon the screw-driven end of the lever 79 enables the spring 76 to force the lens 71 toward the bulkhead 122, shifting the plane of focus of the image rearward relative to the plane of the screen.

Fig. 7 illustrates the details of the alignment mechanism indicated generally at 90 in Fig. 3. The small "folding mirror" 91, discussed earlier, is rotatable in two orthogonal directions by means of this mechanism. The support bar 108 is itself pivotable in brackets 111 by operation of knobs 109, to effect rotation about a horizontal axis that is parallel to the plane of the screen 15. This rotation moves the image 214P, 21P up and down relative to the screen, and so permits adjustment of the image to fill the screen — but more importantly permits bringing the plane of focus of the image 214P, 21P into vertical parallelism with the plane of the screen 15. The rest of the mechanism shown in Fig. 7 is provided to rotate the image on the screen, so as to bring the projected grid lines of the chart into parallelism with the crosshairs on the screen 15.

The mirror 91 is affixed by double-sided tape 92 or equivalent adhesive to a mirror mounting plate 93, which is secured to a mirror yoke 94. The latter is rotatably pinned at 95 to a support block 110, firmly secured to the support rod 108 for rotation with that rod about its own axis as explained in the preceding paragraph. The angle of pivot of the mirror 91, mounting plate 93, and mirror yoke 94 about pivot pin 95 is controlled by the action of worm 97 and worm gear 96, which are in turn rotates the cable termination 104 upon whose shaft the worm is pinned. The worm accordingly rotates, having as drawn a right-handed thread, in such a direction that the thread pattern shifts rightward in Fig. 7, rotating the sector worm gear 96 counterclockwise in Fig. 7. By reference to Figs. 4, 6 and 7 it may be seen that this rotation causes the right side of the small "folding mirror" 91 to dip, and the left side to rise.

This clockwise (as viewed from the front of the apparatus) rotational motion of the mirror 91 in turn has three effects. The effect for which the control is provided is to rotate or "twist" the projected beam at 216 and 217 (Fig. 4), and thus rotate the image 21P, 214P counterclockwise on the screen. The three effects are as follows.

Clockwise rotation of the mirror 91 shifts the projected beam at 216 and 217 (Fig. 4) leftward on the large "folding mirror" 119 and on the screen 15. Thus clockwise rotation of the control knob (1) moves the image to the left on the screen, and moreover (2) foreshortens the optical path for that part of the projected beam that reaches the right side of the screen while lengthening the path to the left side of the screen. These alterations in path length within the case 11 cause the horizontal dimension of the plane of focus of the image 21P, 214P to be rotated clockwise about the vertical crosshair on the screen — moving the plane of focuse forward (toward the operator) along the right side of the screen and rearward (toward the inside of the case 11) along the left side. This defocusing of the image along the left and right edges of the screen is generally — given the limited "travel" of the alignment mechanism 90 -imperceptible.

The leftward shifting of the beam, however, is greater at the edge of the mirror 91 that is closer to the projection lens 71, where the mirror has greater optical-path "leverage," than at the edge of the mirror 91 that is closer to the screen 15. Therefore, (3) the upper part of the image of the screen moves further to the left than the lower part, and this differential effect appears as a counterclockwise rotation of the image on the screen.

Conversely, counterclockwise rotation of the control knob 112 of course (1) shifts the image to the right, (2) rotates the plane of focus counterclockwise about the vertical crosshair, and (3) differentially rotates the image clockwise on the screen.

Since the image rotation on the screen is a differential effect, however, if the vertical grid lines on the film map as installed in the apparatus are not very close to parallelism with the vertical crosshair on the screen there will result adverse effects upon the left-right alignment of the image on the screen, and upon the horizontal parallelism of the focal plane with the screen plane. As suggested earlier, these adverse effects can be kept insignificant by limiting the travel of the alignment mechanism 90. This seeming solution, however, is illusory — for it may only result in a range of adjustment that is too small to compensate for rotational misalignment of the film map relative to the apparatus. The foregoing discussion serves to highlight the importance of providing a film mount that facilitates alignment of the film transparency in the apparatus in an orientation very close to the nominal one — that is, very close to north-up.

Figs. 8 and 9 show the film transparency map or chart 21 in conjunction with a custom mount that is designed to permit firm, reproducible location of the map in the map carriage 143-148 (Fig. 5), at very close to the nominal north-up orientation, while protecting the film from damage and promoting its dimensional stability. It will be understood that motion of any part of the film relative to the map carriage 143-148 will produce a positional error that can be very significant in terms of corresponding distance on the earth's surface — the relationship, of course, being determined by the effective map scale on the film.

This effective scale at the film is some fourteen times smaller than the scale at the screen display — which is slightly larger than the scale marked on the original chart from which the film was made. Hence a chart drawn to show a nautical mile as four inches will, when reduced to film, show a nautical mile as about a third of an inch; a positional error of only one hundredth of an inch at the film consequently would corresond, for such a chart, to nearly a thirtieth of a nautical mile, or some sixty yards. Such error sources can of course be minimized by use of large-scale charts when maneuvering in close quarters relative to shoals, narrow channel limits, and so forth. The point nonetheless remains that successful practice of the subject invention requires careful steps to minimize dimensional instability and gross motion of the film-transparency chart after the chart has been positioned in the apparatus and the apparatus has been "informed" of the chart position (as will be described in subsection 4, below).

Some precaution along these lines is represented by the heat-barrier plate 65 (Fig. 5), previously mentioned, which helps retard heating of the film by the lamp 61. Another precaution must reside in the selection of film that not only has good color fidelity and microfiche-quality capability as to high resolution, but also is of the utmost high quality in dimensional stability — particularly relative to temperature change. A third group of precautions is embodied in the design of the film mount 22 (Figs. 8 and 9).

The film mount 22 is made up of two identical molded-plastic panels 22A and 22B. Also part of the assembly, in addition to the film transparency 21 itself, are two protective glass sheets 227. The latter must be strong and of good optical quality. The plastic panels 22A and 22B are shown from opposite sides in Fig. 8, and since they are identical the details of both sides of both panels may be gleaned from this single exploded view, with some additional clarity as to their interconnection added by Fig. 9.

The two plastic panels 22A and 22B are hinged together at the right end (as drawn), each panel carrying a hinge pin 23A, 23B, and a linear hinge hook 24A, 24B. The hinge pin 23A of the nearer plastic panel (as drawn) 22A engages the linear hook 24B of the rearward panel 22B, as illustrated at the right end of Fig. 9. At the same time the hinge pin 23B of the rearward panel 22B engages the linear hook 24A of the onward panel 22A, and the two panels may then be brought together by rotation upon these hinges to the parallel relationship shown in Fig. 9. In this relationship the hook 25A of the nearer panel 22A engages the lip 226B formed in the notch 26B of the rearward panel 22B. Likewise the hook 25B of the rearward panel 22B engages the lip 226A formed in the notch 26A of the nearer panel 22A, and the two hooks and lips thus hold the panels firmly together.

Pins such as 222B projecting from the forward face of the rearward panel 22B fit into mating holes (not visible, but similar to those shown at 228B) in the nearer panel 22A, to minimize torsional distortion of the assembled mount. Similarly pins (not visible, but similar to those shown at 222B) projecting from the rear face of the forward panel fit into mating holes 228B in the rearward panel. Apertures 229A and 229B are finger holes facilitating application of force to separate the two panels 22A and 22B when disassembly is desired — as, for example, to change charts while re-using a particular mount.

The aperture or sight of the mount 22 is defined by aligned cutout edges 27A and 27B, through which shows the entire useful projectable area of the chart. Relieved areas 29B (and similar areas not visible on the back side of the nearer panel 22A in Fig. 8, but shown at 29A in Fig. 9) serve to accommodate cement used to secure the one-millimeter glass sheets 227 to the panels 22A and 22B. The dams 28B (and 28A in Fig. 9) prevent the cement, before it has solidified, from oozing out onto the "sight" portion of the glass. The relieved areas 29B, 29A also tend to accommodate any burrs, or other defects that may be present or may develop through accidents of handling, along the outer edges of the glass sheets.

The relieved areas 29B, 29A are sized to allow at most a very minimal rotational misalignment of the film map 21 relative to the mount panels 22B and 22A. In addition, the overall height of the panels 22B and 22A is controlled so that the flanges 223 slide smoothly into the channels or slots formed in rails 145 and 147 of the map carriage 143-148 (Fig. 5) — but with an absolute minimum of vertical play. These two constraints together ensure that rotational misalignment of the film relative to the optical system will neither exceed the adjustment range of the alignment control 112, nor require such a large adjustment range as to permit the adverse optical effects mentioned earlier to become significant.

Small bosses 224, projecting outward from the flanges 223, provide a snug but sliding press fit against the mating inner slot surfaces of the rails 145 and 147. Because of their small size the bosses 224 are slightly deformable -decreasing in their "height" by expanding slightly in their "width" — in response to pressure from the mating slot surfaces. This deformation provides a press fit that remains snug over many repeated insertions and removals.

This latter feature ensures that the map once inserted into the transport mechanism will not shift during operation. Such a precaution is crucial to maintaining "calibration" of the apparatus to the map — that is, correspondence between the fixed registration points on the film and the stepping-system step numbers identified with those registration points when the map is inserted into the mechanism. (This calibration process is decribed in subsection 4, "Operation," below.)

## 3. ELECTRONICS

Fig. 10 illustrates the overall scheme of operation of the preferred embodiment of the present invention, in its interaction with other equipments (outside the dashed boundary 270) as well as its internal functioning. "Input" devices and stages are arrayed along the left side of the drawing, both inside and outside the boundary 270 of the self-contained unit, and "output" devices and stages are arrayed along the right side of the drawing, both inside and outside that boundary 270.

It will be helpful to understand from the outset, however, that toward the central areas of the drawing is is progressively more difficult to make meaningful characterizations of the operating modules as "input" or "output." Rather, as is the case with most modern modular self-managing electronic systems, the hardware simply establishes usable channels of communication (such as bus 278 of Fig. 10) between the several modules. One or more of the hardware modules are impressed with an operating protocol (i.e., "program"), under which these modules control themselves and other units to transfer information and directives among themselves, along the established channels, as required. These transfers of information and directives flow in multiple directions and according to multiple patterns that constantly shift during operation of the apparatus.

In fact, even as to some of the devices that are customarily thought of as clearly "input" or "output" in character, such as a Power Control & Monitoring Module 289 within the subject apparatus, or an autopilot 263 outside the apparatus, feedback paths of various kinds exist. Such feedback paths may be purposely provided, as for example the power-shutdown path 305 that controls the Power Module 289 in event of various kinds of improper operating circumstance, or a return signal (not illustrated) from the autopilot 263 to the subject apparatus to acknowledge completion of a commanded operation.

Some feedback paths are present that are not "purposely provided" but rather are inherent in the character of the system. For example, a human operator who reads the "output" devices, such as the alphanumeric display 272 or chart display 306, and manipulates the keys at 271 and the ship's wheelhouse controls, directly exerts an effect upon the fundamental navigating parameters that are measured by the "input devices," namely the speed log 251, compass 252, or Loran-C receiver 253 — or even upon ship's power supply 254. The same is true of an autopilot 263 responding to electrical signals at 303 and automatically manipulating ship's rudder 264 through mechanical connection 304.

Preeminent among the input devices is a Keyboard Module 271, which corresponds to the keys 32 through 52 (Fig. 2) on the control panel 14, discussed earlier in subsection 1, "External Features". Information from the Keyboard Module 271 passes at 286 (actually via the Display Module 272, but without any signal processing in that module) to the Slave Processor Module 273.

With the exception of the ship's power supply 254 connected at 284 to energize the invention apparatus 270, all of the external devices 251, 252, 253, 261, 262, 263 are optional; the invention apparatus functions very satisfactorily without them. Addition of these "input" and "output" devices, however, greatly diminishes the amount of data to be estimated and/or manually entered, as well as the amount of data to be manually recorded — and implemented through manual control of the craft. Beyond the convenience factors, addition of a Loran receiver increases both the accuracy with which "course over ground" can be determined and (through interaction of DR and Loran computations as previously mentioned) the accuracy of calculated "course to steer".

If a speed log 251 is present and is a paddlewheel or equivalent type, and if a compass 252 is present and is a magnetic type, their respective signal lines 281 and 282 may be connected as at 281B and 282B directly to the Input/Output Module 277 within the apparatus. That module, as will be seen from Figs. 16A and 16B, includes circuits for suitable processing of such signals. If the speed log 251 is a Doppler or electromechanical type, however, it must be connected instead at 281A to a separate Speed Log and Gyrocompass Interface 275, which supplies the special circuitry for processing signals from such speed-log types; and similarly if the compass 252 is a gyroscopic type it must be connected at 282A to such a special interface 275. In such instances the interface 275 passes the preprocessed signal(s) on at 287 to the bus 278 mentioned earlier, from which the necessary information can be picked off by any of the primary information-handling modules 279, 273, 278.

The allocation of interfacing circuitry as between the Input/Output Module 277 and the separate Speed Log and Gyrocompass Interface 275 is a mere matter of engineering convenience and choice. The configuration illustrated reflects the particular balance of conveniences and choices adopted in my preferred embodiment of the invention.

Signals from a Loran receiver, if present, are applied at 283 to a Loran Interface module 274, which is designed in such a way that it can be quickly configured for virtually any make and model of Loran receiver. Over three dozen such types are now commercially available, and the interface 274 advantageously accommodates as many as possible of these different types. The interface selects from the time-difference (TD) signals made available by the receiver 253 those two signals that provide the best position-fix accuracy, sorts out various other data provided by the receiver 253, and converts the conventional sequential data format of the signal 283 to a parallel format for application at 288 to the bus 278. (In some Loran receivers data is available in parallel format, and the interface is simply configured to omit this step.)

Another device that may be regarded as an "input" device, although it is typically passive after initial installation of the apparatus 270 in a particular craft, is the so-called Personality Module 276. This device adapts the entire operation of the apparatus 270 to the "personality" — that is, operating region, type of speed log, etc. — of the craft in which it is installed. If a particular craft periodically moves from one operating region to another, then more than one corresponding Personality Module can be obtained, and easily interchanged in the apparatus as required.

Ship's power supply 254 provides electricity at 284 to the preferred embodiment 270. The power provided at 284 first enters a Power Control & Monitoring Module 289. This module permits switching the power to the rest of the apparatus (at 291) on and off by touch-type keys 51 and 52 (Fig. 2). Control signals from these keys and associated low-level logic circuitry are fed back at 305 to control the module 289. The signals at 305 also incorporate decision making within the Input/Output Module 277, by circuits that sense destructively high or low levels of the voltage supplied from ship's power 54. Thus the Power Control & Monitoring Module 289 also operates to interrupt power to the apparatus when necessary to prevent damage to the equipment or loss of stored information.

On the output side is the Alphanumeric Display Module 272, whose function is to illuminate the displays 31 (Fig. 2) and all of the lights, similar to 32', in the upper left-hand corners of the keys 32 through 52 (Fig. 2), based on specific instructions received at 294 from the Slave Processor Module 273. Also in the output column are the stepper motors 137, 151 (Fig. 5), which by respective mechanical connections 297 and 298 operate the rest of the visual chart-display system previously discussed in subsection 2, Mechanics and Optics, and here designated very generally at 306.

Optional external devices include two whose purpose is to produce permanent records of location and other operating parameters — a chart recorder 261, receiving x- and y-drive signals respectively at 299 and 301 from the preferred-embodiment apparatus 270; and a logging printer 262, receiving data at 302 from the apparatus 270. It would normally be contemplated that a particular section of chart corresponding to the area of travel would be fixed in the recorder — and the x-y recording mechanism of the recorder would make a permanent record of the craft's travel on a particular journey through that area. Similarly a logging printer can be useful in preparing a permanent ship's log addendum showing position, heading, speed, set and drift if desired, and possibly other parameters, for a multiplicity of times during a trip.

The function of the optional autopilot 263 is apparent, but it should be noted that when such a device is present and interconnected for control at 303 by the subject apparatus 270, there is a conceptually and significantly different result. Under these circumstances the computations and information-handling procedures carried on by the apparatus 270 directly control the gross physical position of the entire craft, its speed, heading, and "future history" — and those of all the people and goods aboard.

The allocation of functions of the remaining three modules 279, 273, 277 within the apparatus 270 is difficult to discuss meaningfully in the abstract — partially because the separation of functions as between these modules is not truly conceptual but to a degree arbitrary, being dictated in part by space limitations on various circuit boards, and like considerations. Moreover, as between the various modules certain functions may be regarded as split up, with "higher-level" portions of a given function occurring in one place, "lower-level" portions of the same function in another place, and "intermediate-level" portions of the same function in yet a third place. A very general introduction to the allocation of functions in these three modules will, however, be offered.

The Master Processor Module 279 generally manages the operation of the entire system, calling up the various functions of the many components within itself and in the other modules at the appropriate times. The Master Processor Module 279 also organizes the reaction of the entire system to demands for system "attention" created externally — as, for example, by operator commands at the Keyboard Module 271, or by drastic changes in voltage at 284 from the ship's power 254. The Master Processor Module 279 also contains most of the generalized memory banks in the apparatus 270, storing both the general system program and the necessary data for its implementation.

The Slave Processor Module 273 performs more specialized, repetitive tasks of interpretation and interfacing — but tasks still complex enough to require the power of a programmable microprocessor unit. This module 273 decodes the entries made at the Keyboard Module 271 and formats the decoded information for use by the various modules 279, 273, 277. The Slave Processor Module 273 also performs a similar function for speed-log and compass data, converting (where necessary) serially presented data to parallel data and reformatting the data for use throughout the system. This module 273 also contains a continuously operating "calendar clock," providing the system 270 with all necessary time data, and the Slave Processor Module 273 itself manages the reading of the calendar clock, performing decoding and reformatting functions analogous to those it performs for the keyboard, speedlog and compass.

On the output side the Slave Processor Module 273 also sorts out, organizes and formats data for display in the Alphanumeric Display Module 272. The Slave Processor Module 273 also manages the operation of stepper motors 137 and 151, translating between the stepping-system position information (in terms of step count) manipulated within the Master processor Module 279, and the actual serially presented stepping pulses at 295 and 296. The Slave Processor Module 273 performs this function even when the stepper motors are directed manually through the entry of commands at the Keyboard Module 271. It is the Master Processor Module, however, which deals with the relationships among the Mercator (or other) projection function, the map scale, and the present position of the map carriage.

The Input/Output Module 277 performs interfacing tasks of a lower order than those handled by the master and slave processors: voltage and impedance transformations (as, for example, to generate the higher-power signals 295 and 296 required to operate the stepper motors 137 and 151), analog-to-digital transformations (as for the sensing of overvoltage and undervoltage in the ship's power at 291, and the input of signals at 281B from a paddlewheel-type ship's log 251), lowlevel logic buffering, and some intermodule connections that require no signal processing at all.

Indicated generally at 278 are the composite of a Bus Module (illustrated in Fig. 17) with a data bus that consists essentially of cabling between and within the various modules as indicated. A few active circuit components have been placed on the Bus Module — a warning buzzer and its power circuit, a five-to-twelve-volt DC-to-DC converter, and others that will be mentioned later.

Fig. 11 shows the details of the Keyboard Module (271 in Fig. l0). As can be seen this module contains nothing more than switch closures and cable connections. The switch closures are all provided in the form of touch-type normally-open "keys," and the cable connections are all through a common cable to the Display Module (Fig. 12, and 272 in Fig. 10).

The keys are in two groups. At the left in the drawing are "individual" keys, some having individual connections at both sides of the switch closure, and some being wired in groups of two or four to a common point at one side of the switch but having separate individual lines at the other side. At the right side of the drawing are twenty-six keys in an eight-column, four-row array, as shown. All the keys in each row have one side wired to a common terminal for that row, and all the keys in each column have the other side wired to a common connector terminal for that column. By this means all twenty-six keys in the array are wired through only twelve connector pins -the sorting out of the information from the keys being performed, of course by logic elements elsewhere in the system.

Fig. 12 shows the details of the Display Module, corresponding generally to the Alphanumeric Display Module 272 of Fig. 10 but also incorporating certain other elements to be described. At lower right in Fig. 12 are the connections between the Keyboard Module just discussed (connector LC7A) and the Slave Processor Module (connector LC5B to the Slave Processor Module, 273 in Fig. 10), simply through-connections.

Throughout the following detailed disclosure of the electronics, the reference numerals used in drawings and text for semiconductor components are commercial component numbers, familiar in the semiconductor industry. Although this notation necessitates resolving some ambiguities, when two or more identical units appear in a particular drawing, the advantage in conveniently supplying a more complete disclosure is thought to outweigh the occasional inconvenience.

Across the top of the drawing are the LED displays 31 (Fig. 2) and closely associated circuitry. Each of the units labeled DL2416 provides four display digits, including the logic circuits to translate binary information into an alphanumeric character for those four places. In other words, the display units are of the so-called "intelligent display" type. Thus the left-hand three DL2416 units make up the upper one of the two displays 31 (Fig. 2), and the right-hand three DL2416 units make up the lower one of the two displays 31 — each with twelve characters.

Binary data enter from the Slave processor Module through connector LC5B, at upper left in the drawing, are buffered in the unit 74LS244, and are applied to all six display units DL2416 in parallel. Only one character of only one display unit DL2416, however, responds to any given binary data group. This selection is made on the basis of information from the Slave Processor Unit: the information enters in binary form on the six "DISPLAY" signal lines (pins 25 through 30). These binary control signals, indicating which display is to be actuated to accept data, are applied to the two display-select decoders 74LS367. The two decoders provide high-low actuating signals to pins 1 and 2 of each display unit, while the three command lines at pins 39, 40 and 41 of connector LC5B indicate which character position is to be actuated, and whether a numeral.

At lower left and center of Fig. 12 are light-emitting diodes 6, 32, 33 and CRI through CR30, which provide the small indicator lights, such as 32' (Fig. 2), in the upper left-hand corners of the keys 32 through 52. Three of these LEDs (at the center of the drawing) are treated as "discrete" — though they are operated from a common five-volt supply — and the other thirty-one LEDs are actuated in an array (lower left) analogous to the keyboard array discussed earlier. All the LEDs in each column of the array have their positive sides connected to a common power switch for that column (in switching units Q2T2905, above), and all the LEDs in each row have their negative sides connected to a common switching buffer for that row (in fourchannel buffer unit 7404, at left). The column and row drivers Q2T2905 and 7404 are of course in turn actuated by logic elements — to be described — in the Slave Processor Module.

Figs. 13A through 13C show the details of the Slave Processor Module, 273 in Fig. 10. The inputs from the Keyboard Module and data and address outputs to the Display Module just discussed appear at the pins of connector LC5A (right edge of Fig. 13A). The outgoing binary data to the displays are buffered in buffer 74LS244, and all the other data are decoded — going in both directions, from the keys and to the displays — by the decoder unit P8279.

The decoders are also connected to data lines DBO through DB7, which, as can be seen by reference to this and most of the other drawings, form an eight-wire data and command bus that runs throughout the Slave Processor Module and is cabled to other modules in the system. Within certain other parts of the system this data bus becomes part of a sixteen-line bus. As previously noted, information on the bus is simply presented to each of the several and separate address or command lines provide the directives to those same components — indicating which components units should use (or emit) information on the data lines, and when.

As can be seen here, however, the same eight lines DB0 through DB 7 that carry data as such to the buffer 74LS244, for transmission to the "intelligent displays," and from the decoder P8279, upon entry at the keyboard, also double as control lines to the decoder P8279, for selection of the LEDs and displays to be actuated. Due to such complexities it is not feasible to trace the informaton to and from the decoder P8279 completely, but a conceptual tracing can be suggested here, and more complete information is embedded in the programming section that follows (subsection 5).

Control of the decoder P8279 is provided by control lines shown entering it at pins 10, 11, 22, 21, 3, and 9 -- signals that are part of a control bus which enters (from the Input/Output Module) at connector LC2B, along the left-hand edge of Fig. 13A, and which is applied to various other components, in parallel with the decoder, to ensure that those components will all operate in synchronism to perform the various indicated functions, such as reading or writing to memory, selecting a particular keyboard display, and so forth.

Appearing in Fig. 13A are two slave processor units 8041A. The left-hand one of these controls the stepper motors 137 and 151 (Figs. 5 and 10), and the right-hand one controls the decoder P8279 and buffer 74LS244, to receive and send data and control signals from and to the keyboard and display units as just described. This slave processor controls the formatting and the timing of the incoming and outgoing data, fitting the information transfers into the overall schedule of uses of the data bus.

Appearing just to the right of this slave processor in Fig. 13A is the clock calendar MSM5832RS, held to a fixed time base by the 32,768 kHz crystal F1 appearing just to the right of the clock calendar. The calendar emits serial clock pulses that are received by the slave processor, accumulated and interpreted to yield usable time data for the overall system operation. This slave processor also receives serial data from the compass 252 (Fig. 10) and speed log 251, generally via the Input/Output Module 277, and accumulates and interprets these data to present speed and heading values to the data bus for use in the Master Processor Module 279.

A comparable function, but at a lower level, is performed by the port control unit P8251A at the lower right in Fig. 13A. This unit reformats outgoing data for use (after impedance adjustment and the like in the Input/Output Module) by a general-purpose two-way communication interface — advantageously a type RS232 — which can accommodate an x-y plotter, a fuelmeter for performance monitoring, or an autopilot. The port control P8251A also reformats incoming data from any of such devices, in the nature of "ready" or "acknowledge" signals, and upon command places such information on the data bus.

The port control unit P8251A may be helpfully conceptualized as permitting the processors to treat any of the external output devices as if it were an address in the internal memory of the apparatus (Fig. 18A). The equivalent job is done for an external logging printer by the "printer port" control P8251A that appears toward the lower left. Both units are connected to receive a suitable baud-rate pulse from the main processor (pin 50 of connector LC2B from the Input/Output Module), after countdown in the divider 74LS393 that is shown just to the right of the printer port control P8251A.

Similarly, the master processor is permitted to operate as if it were simply writing into its own internal memory in selecting the particular display unit DL2416 (Fig. 2) to which to write, by means of the upper decoding unit 74LS138, near the lower left-hand corner of Fig. 13A. This decoding unit is connected to the Display Module by pins 25 through 30 of connector LC5A.

In just the same way the lower decoding unit 74LS138, drawn immediately below the one just discussed, permits the master processor to "think" that it is merely writing into its own internal memory when it is actually generating signals to select the general-purpose interface, the printer, or other units for exchange of information. As can be seen on the drawing, it is also by use of this lower decoder 74LS138 that the master processor generates selection signals enabling it to communicate with one or the other of the slave processors 8041A, or with the display module considered as a unit, or with the direction keys ("cursor keys") 43, 44 (Fig. 2) as unit, or with the warning-buzzer circuitry.

The left-hand slave processor 8041A in Fig. 13A manages the operation of the stepper motors. It translates numerical instruction, received in terms of binary-coded stepper-motor position (that is to say, step number), into properly timed and ramped serial pulses to the motors, via the Input/Output Module. "Ramping" is provided to accommodate the inertial characteristic of the drive system. In addition to data-bus connections and output connections to the stepper motors, this slave processor also receives various control bus signals. Such signals include the selector signal from the lower decoder 74LS138 just discussed, as well as read, write, and address signals from the control bus mentioned earlier, and signals from limit switches installed (though not illustrated in Fig. 5) on the map transport mechanism 130.

In addition, the left-hand slave processor 8041A receives directly from the keyboard and display board, at pins 13, 14, 19 and 20 of connector LC5A, direction signals for manual control of the stepping system. These same direction signals are also connected to another memory port unit 74LS240, shown on Fig. 13B, which permits the master processor to read the status of the direction signalling keys 43 (Fig. 2) as if they were internal memory locations.

Several components on the Slave Processor Module receive a "reset" signal, which is generated by the Master Processor Module when the system is first turned on — so that all components "power up" in a systematic controlled fashion.

Certain component positions shown in Figs. 13A and 13B are blank; that is to say, they represent integrated-circuit receptacles ("sockets") in which no integrated circuit is to be installed. These receptacles are either jumpered — as indicated for receptacle 1C just below and right of the clock calendar MSM5832RS — or have installed in them connections to a small auxiliary component carrier (of the type sometimes called in the electronics industry a "piggyback board") with replacement circuits. These latter circuits are shown in Fig. 13C, for all the unjumpered receptacles that appear in Figs. 13A and 13B.

Fig. 13B, still part of the Slave Processor Module, shows at the lower right a regulated voltage supply as required by certain circuits. The ship's power entering at pins 55 and 56 of connector LC2B is first regulated at 78L05, and filtered by the network C28, CR9, R15, C31, C30, CR8 and C29. This relatively coarse regulation furnished by the commercial 78L05 regulator is sufficient for supply to relay logic, as indicated at top left in Fig. 13B and in Fig. 19.

Additional, finer regulation, however, is required to supply a reference voltage for use in the power-fail logic circuits in the Input/Output Module. Such fine regulation is supplied by the circuit that includes transistors Q1 and Q2 in Fig. 13B, and the resulting very stable voltage level is transmitted to the Input/Output Module via Pins 53 and 54 of connector LC2B, at the lower left in Fig. 13B.

At upper right in Fig. 13B is a memory port, mentioned earlier, that permits the master processor to treat signals from the direction keys 43 as arising in memory locations. When any one of the direction keys 43 is in use to direct the map transport mechanism manually, the memory port 74LS240 permits notification of the master processor that the direction keys — as a group — are in use, so that the left-hand slave processor 8041A (Fig. 13A) can take control.

The memory port also, however, accommodates the dual use of the direction keys: when they are used to indicate a coordinate direction for the keying of latitude and longitude, their individual status is significant to the master processor. The memory port also receives signals indicating whether a compass or knotmeter is present in the system, and permits this information to be transmitted, as a bit in memory, to the master processor.

Fig. 13C shows the auxiliary component-carrier circuits for the Slave Processor Module. The three 74LS04N gates and single 74LS20 gate near the upper left of the diagram are a "debounce" circuit: they eliminate erraticisms in the switchclosure resistance when the corresponding control keys (POWER ON key 51, SCREEN ON key 52, and "f" — function — key 38) are touched by the operator (see Fig. 2 for keyboard locations).

The three upper flipflops 74LS113 at the right side of Fig. 13C respectively provide toggling or latching action for the same three control keys, so that when any of these keys is touched the resulting pulse generates a status signal that continues after the key is released. The resulting status signals are returned to the main circuit Slave Processor Module, where they generate buffered control signals for passage to the indicator lights on the Display Module (Fig. 12), the power relay circuits on the Power Control & Monitoring Module (Fig. 19), and the decoder P8279 at upper right in Fig. 13A.

The three flipflops 74LS113 are reset (turning off the power to the system or to the projection lamp, and cancelling the "shift key" effect of the function key) by various conditions. The upper one, the lamp-control flipflop, is reset when the next one down, the power-control flipflop, is reset. Thus the lamp power is turned off when the logic circuits are turned off.

In addition, the lamp-control flipflop (upper one) is reset when the SCREEN ON key 52 is touched while the lamp-control flipflop is already set — subject to an inhibit signal applied from the upper debounce flipflop 74LS123, this debounce flipflop introduces a fraction of a second's delay, established by R3 and C2 as a minimum interval between actuations of the SCREEN ON key 52 that will produce a response. Thus, touching the SCREEN ON key 52 several times in succession will alternately switch the projection lamp on and off, but not if the key is touched at too short intervals.

Similar operation is provided for the POWER ON key 51 and the "f" key 38, except that the powercontrol flipflop 74LS113 (second from top) is also resettable by a signal from the overvoltage circuitry on the Input/Output Module (Figs. 16A and 16B, and 277 on Fig. 10), via pin 11 of connector LC2B (left end of Fig. 13B), if the supply voltage to the system rises above seventeen volts; and the function-control flipflop 74LS113 (third from the function-control flipflop 74LS113 (third from the top) is also resettable from the master processor. It may be noted that the toggling action of the function-control flipflop permits the operator to reverse his own error if he accidentally touches the " f" key when he really does not want the results of doing so.

The fourth flipflop 74LS113, at lower right in Fig. 13C, latches the warning buzzer on and off in response to control signals from the master processor.

The external-reset flipflop 74LS123, at lower left in Fig. 13C, provides "debounce" action for an additional key on the control panel 14 — one that is not labeled but rather is camouflaged and intended only for use by a qualified serviceman. This key is shown as the "EXTRA 3" key on Fig. 11, wired through pin 51 of connectors LC5B (Fig. 12) and LC5A (Fig. 13B) to test point TP2 (Fig. 13C). The output status signal from the lower debounce flipflop 74LS123 provides an external-reset signal at test point TP1 that is suitable for application to the logic circuit.

This system is used by the serviceman in the event that unforeseen operational procedures have somehow caused the system to stop out of sequence and therefore to "lock up". The external-reset signal resets the entire logic system to an initialized condition, while preserving most of the information in the system's memory, and initiates a test routine. The lower of the two flipflops 74LS123 in the bottom left-hand corner of Fig. 13C is necessary to complete the debounce circuit. For all the other debounce circuits shown in Fig. 13C, this latter function is performed in common by another flipflop elsewhere in the system, but the serviceman's hidden key requires a separate unit -because the rest of the system (including the common debounce flipflop) is assumed to be "locked up".

Figs. 14A through 14D illustrate the circuitry of the Loran Interface 274 (Fig. 10). In Fig. 14A is the heart of the interface, a slave processor 8085A-2, which decodes data obtained from the Loran receiver, screens the data and selects the best data for use in the rest of the apparatus 270 (Fig. 10), and reformats the selected data for passage at 288 and 278 (Fig. 10) to the Master Processor Module 279 (Fig. 10). Program storage for the slave processor 8085A-2 is provided in memory unit 2732 (at upper right in Fig. 14A), and data storage is provided in the two random-access memories 2114 at the right edge of Fig. 14A.

Before reaching the slave processor 8085A-2, however, incoming data received as serial pulses from the Loran receiver are converted to parallel binary presentation in the four shift registers LS299 that appear at the upper right-hand corner of Fig. 14B. The programmable timer circuit shown in Fig. 14B, at right center, permits generation of a local clock signal to accommodate the operating rate of the Loran receiver, thereby synchronizing operation of the receiver and the Fig. 14A-D interface. The COM2017 "UART" (universal asynchronous receiver/transmitter) unit at the lower left of Fig. 14B manages the coordination of the Loran receiver's internal logic circuits and their timing with the internal logic and timing of the Fig. 14A-D interface.

The various address decoders LS138 and LS139 and the master-slave signal select LS157 shown in Fig. 14A permit information transfer between the memory units mentioned above and the slave processor 8085A-2, and between the slave processor 8085A-2 in Fig. 14A. The three address decoders 825129 at the left end of Fig. 14C decode addresses received from the master processor, and the LS74 flipflop at the upper right corner of Fig. 14C synchronizes the master processor in module 279 with the Loran interface. The master-to-slave register LS74 and related circuitry at the center of Fig. 14C, and just below that the slave-to-master register LS374, respectively provide repositories of information to be transferred between the two processors, so that neither processor is required to wait for the other to be ready to use or supply information.

The three processor register LS374 at the right end of Fig. 14D store intermediate data and control signals generated and reused during operation pf the interface 274. The baud rate generator LS151, LS161A and two LS393's at upper left in Fig. 14D divide down the clock pulse train from the programmable timer (Fig. 14B) to derive a suitable character transfer ("baud") rate. The interrupt timer, consisting of the additional two LS393's just below the upper two, further counts down the baud clock train to generate a Loran signal interrupt, which is periodically directed to the Master Processor Module 279. The Loran signal interrupt occurs roughly every five minutes, and cases the Master Processor Module 279 to interrupt its other processes when next possible, and to receive a current set of Loran time differences (TDs).

The option-strip buffer LS240 at the lower center of Fig. 14D is wired to terminal straps that are to be suitably jumpered to cause various features of the interface 274 to come into operation — to accommodate the Loran receiver 253 commercial type that is in use. The various other buffers in the Loran receiver Figs. 14A through 14C are utilized conventionally.

Fig. 15 shows the Personality Module, 276 in Fig. 10; this unit contains a dual 2732A read only memory (ROM), in which are stored regional geographic data, Loran transmitter locations for the operating region(s) of interest, and certain constants used in computations. This information in this dual memory is selected — as between the two halves of the memory — by the two signal lines at pins 7 and S of connector LC3B, and by address signals at the twelve pins shown just above those. Actuation of a ROM select line and an address select line causes binary data to appear on the data bus, at right, for transmission to the Input/Output Module 277.

Also shown in Fig. 15 is a set of wiring terminals SI through S4, for hand-jumpering to tailor the voltage log 251 (Fig. 10) in use to the speed-sensing circuitry in the Input/Output Module 277.

This last point may be better understood with reference to the speed-sensing circuitry where it appears at the lower right-hand corner of Fig. 16A. Figs. 16A and 16B present the electronics of the Input/Output Module, block 277 in Fig. 10. As seen in Fig. 16A, pin 3 of connector LC3 is grounded within the Input/Output Module, and pin B is connected to a logic signal line at pin 46 of connected LC2A; when these two lines are wired together by jumpering directly across at S4 (Fig. 15), the Slave Processor Module 273 (and particularly the right-hand slave process or 8041A, shown in Fig. 13A) receives a "low" signal indicating that a knotmeter is in use — and therefore that dead-reckoning calculations should be based on the knotmeter output signals rather than on numerical entries at the keyboard.

Various other possible combinations of jumpers have the effect of applying various degrees of attenuation or division of the voltage from the knotmeter sensor for presentation to the circuitry in the Input/Output Module. The first stages of that circuitry, including analog operational amplifiers LM358, square off the typically sinusoidal signal from the knotmeter to provide a pulse stream at terminal 34 of connector LC2A, for application to the slave processor via pin 34 of connector LC2B, Fig. 13A.

At the upper right in Fig. 16A are twin stepper controllers SAA1027, servicing respectively the horizontal and vertical stepper motors. These controllers receive directional control status signals at, respectively, pins 15 and 18 of connector LC2A, and receiver serial drive pulses at, respectively, pins 17 and 20. Each of the two controllers, in turn, produces at its four output terminals a pattern of four voltages which shifts with each successive step input pulse; when these four output lines are connected to the four coils of the four-phase stepping motor 137 or 151, the result is a rotating pattern of voltages at the motor coils — and hence a rotating magnetic field that precisely positions the rotor of the motor, and rotates the rotor in precise synchronism with the step pulses applied to the controller inputs. These controllers may if preferred be placed with powerlevel translators (from logic levels to drive levels) in a separate circuit module adjacent to the motors.

The address decoder 93427-001 at the upper left-hand corner of Fig. 16A translates the system of memory-selection address lines in the Personality Module (Fig. 15) ROMs into address locations of the Personality Module as "seen" by the Master Processor Module. That is to say, a range of address locations as called out by the Master Processor Module is translated into the addressing system of the Personality Module. In addition, the gates 74LS02 and inverter 7406 to the lower right of the address decoder 93427-001 provide a signal that — in combination with control signals from the master processor — generates an acknowledgement signal to the master processor, indicating that the Personality Module ROM is ready to be read.

At bottom center of Fig. 16A is a voltage regulator circuit that includes regulator 78L05 and that provides a regulated voltage to an external magnetic compass, 252 in Fig. 10. This regulated voltage is used by the compass repeater to provide a compass-input signal at pin 47 of connector LC2A, for passage to the Slave Processor Module 273 (Fig. 10), and particularly to the right-hand slave processor 8041A (Fig. 13A) in that module.

The compass signals so produced are generally in the form of a series of pulse bursts, the number of pulses in each burst representing a compass heading, in degrees and fractional degrees. When received at pin 47 of connector LC2B on the Slave Processor Module, Fig. 13A, the pulse burst is applied directly to pin 39 of the right-hand slave processor, and is also applied with a short time delay to pin 34. The signal at pin 39 directs the processor to prepare to start counting the pulses in the burst, and the signal at pin 34 then provides the pulses to be counted.

Returning to Fig. 16A, the twelve buffers 74LS04 at left center in the drawing operate conventionally to buffer signals from the Master Processor Module 279 (Fig. 10) in passage to control addressing within the Slave Processor and Personality Modules 273 and 277. The drivers 75188 and 75189 in the lower left of Fig. 16A lower signal impedance for transmission to and from output devices such as the logging printer (the upper four drivers) and a recorder, autopilot, or fuelmeter (the lower four drivers).

Other Input/Output Module 277 components appear in Fig. 16B. In particular, buffering of additional signals between the Master Processor Module and the Slave Processor Module appears along the left side of the drawing. The terminal lugs provided for manual jumpering in the lower left-hand corner permit custom tailoring of the response of the unit to the timing requirements of external output devices such as a logging printer 262 (Fig. 10), autopilot 263, or fuelmeter or the like (not shown).

The input signals to this manual-jumpering interrupt matrix" are "KBDINT" or "keyboard interrupt," which is generated by the keyboard decoder P8279 in the upper right on Fig. 13A; and "TXRDY (SER)" and "RXRDY (SER)" or "ready to transmit serial data" and "ready to receive serial data," which are generated by the port control P8251A at the lower right on that same drawing (Fig. 13A). The relative prioritization of these signals relative to each other, and relative to the other priorities among the many operations carried on by the apparatus 270, can vary with the character of the particular commercial output units 262, 263, etc., employed.

The Master Processor Module 279 operates on a well-defined system of priorities, in which each device that must communicate with the master processor 279 or send or receive information over the bus 278 — whether it be the keyboard decoder P8279 in the Slave Processor Module (Fig. 13A), responding to actuation of keys at the control panel 14 (Fig. 1), or the Loran Interface (Fig. 14), responding to its own internal interrupt clock (the pair of LS393's at the center of Fig. 14D) — generates an "interrupt" signal, announcing, to the master processor that it is prepared for a communication.

If all of these "interrupt" signals had the same priority, of course, the apparatus would rely upon chance to avoid interference between communications from more than one source at a time, and such operation would be unfeasible. Consequently all of the "interrupt" signals, or, more concisely, all of the "interrupts," are assigned specific priorities, and any that can possibly occur simultaneously with each other are assigned priorities that are different from each other. The interrupt signal lines, designated "INT0" through "INT7," are given priorities in the Master Processor Module (Fig. 18C), as will be noted later.

The "interrupt matrix" at bottom right of Fig. 16B thus permits the keyboard interrupt, the serial-data-transmission interrupt, and the serial-data-reception interrupt to be appropriately assigned to "interrupt levels" — that is, to priority levels — that are appropriate for the types of external equipment involved. This handjumpering must of course be performed in accordance with adequate insights into the structure of the priority levels assigned to all the operations in the system, and the significance of that structure.

The upper right quadrant of Fig. 16B illustrates protective circuitry designed to shut down the system systematically and safely, with a minimum of memory loss, when general supply voltage "+12VSP" rises above seventeen volts or memory voltage "+12VSW" falls below nine. The voltage line "+5BB" appearing at upper left in this quadrant of Fig. 16B is the fine-regulated reference voltage developed in the regulator cir-

The comparators LM358 compare the two supply voltages, respectively divided down by R13 and R15 (for the general supply) and by R14 and R12 (for the memory supply) against the reference voltage — further well defined by application to zener diode LM236A.

If either comparator detects unacceptable supply voltage levels it triggers "OR" gate 4001, resulting in initiation of a systematic power-down routine. In addition, in the case of overvoltage, the upper comparator LM358 output signal is applied directly to generate an overvoltage signal at pin 11 of connector LC2A. That signal becomes the powerre-set signal applied to terminal 10 of the power-control flipflop at the right end of Fig. 13C. When that flipflop is set, the input ship's power is immediately interrupted to protect the lamp and all other systems from sustained overvoltage.

When the upper-left OR gate 4001, mentioned just above, is triggered, it immediately produces a power-disable ("PWRDIS") signal, which is latched by lower-left flipflop MC14528. This power-disable signal resets flipflop 4013, generating a memory-disable signal that immediately operates to prevent any further transfer of information into or out of the memories in the Master Processor Module — thus preserving all the information in those memories as well as conserving the power required to continue any information transfer that may be in progress.

The output of the upper-left OR gate 4001 is also applied to the upper-right latch flipflop MC14528, which initiates and holds a "power-failure in" ("PFIN") signal to the master processor. As may be seen from the left end of Fig. 18A, this signal is applied to the central processor unit 8088 via an input terminal ("NMI", for "nonmaskable interrupt") which is separate from the terminal ("INTR," for "interrupt") to which all the other interrupts are applied. Thus the "power-failure in" signal has a priority that cannot be masked by appearance of any other interrupt signal, a priority that is higher than that of any of the "INT" signals at the lower left in Fig. 16B. This signal initiates a five-millisecond countdown in the central processor, during which time certain critical data and partial results of certain computations are stored in the working memory units (MSM5114-3, Fig. 18B) of the Master Processor Module — which are CMOS-type lowpower-drain memory units.

These data are preserved in the CMOS memory by power from a small backup battery (not illustrated), for a number of hours. During this time the power problem should if possible be corrected. The battery is normally recharged by a few milliamperes of trickle current from ship's power. This current bypasses the input power-switching circuitry in the apparatus, and so is maintained whenever ship's power is available to the apparatus. When ship's power is interrupted the battery can maintain data in the CMOS memory for about ten hours without recharging.

The lower-right quadrant of Fig. 16B of course simply shows through-cable connections, between the Personality Module, Slave Processor Module, Bus Module, and Power Control & Monitoring Module.

Fig. 17 represents the Bus Module, which with the data and control bus segments previously discussed (in connection with Figs. 13A through 13C, and Figs. 15, 16A, and 16B) and other segments to be discussed shortly (in connection with Figs. 18A through 18C) makes up the bus system 278 of Fig. 10. The Bus Module shown in Fig. 17 is of a type sometimes referred to as a "backplane" — that is, a circuit board that is positioned at right angles to the other boards in a card cage, and that carries soldered-on connectors into which the other circuitboard modules are inserted, thereby completing interconnections among the other boards.

Most of the present Bus Module is unused, being reserved for system expansions as they may be conceived and brought into use. Each column of pads indicated on the Bus Module schematic (Fig. 17) represents, in effect, a connector set to which a circuit board can make connections. The terminal pins provided for manual jumpering, as shown along the top left of the drawing, permit future use of multiple additional processor modules. The bus priorities among the several processes will be established by a unit provided for that purpose in the Master Processor Module — under control of the jumpers manually installed here. The Bus Module as presently used makes connections only between two units — the Input/Output Module (Figs. 16A and 16B, and block 277 in Fig. 10), to which it makes contacts through conventional connector LC1B; and the Master Processor Module (Figs. 18A through 18C, and block 279 in Fig. 10), to which it makes connection at column J1.

In addition the Bus Module carries a few circuit components itself. At top center of Fig. 17 is a DC-to-DC converter, which provides regulated positive and negative twelve-volt power to the Master Processor Module from the five-volt logic supply. (The latter supply is conventional, and located on a separate power-supply board cabled to connector PC1B — see upper right corner of Fig. 17. The five-volt supply itself is not illustrated.) In the lower right-hand corner of Fig. 17 is a buzzer, power transistor Q1, and connections to the buzzer control circuit, previously discussed, on the Input/ Output Module. The "false acknowledge" circuit shown in the lower left-hand corner is provided primarily for troubleshooting purposes — to simulate acknowledgement signals from external output devices 261, 262, 263, etc., and thereby to determine whether a fault is in one of those devices or is internal to the apparatus 270.

The Master processor Module 279 (Fig. 10) is detailed in Figs. 18A, 18B and 18C. The data bus that was discussed to some extent in connection with the Slave Processor Module (Figs. 13A, 13B and 13C) may now be seen to be an extension of half of the data and control bus system that is internal to the Master Processor Module. The "address/data" (AD0 through AD7) bus lines, appearing in Fig. 18A, are "multiplex" lines that carry either data or addressing information, at various times, from the central processor unit 8088 (near the left end of the drawing) to numerous other components within the module.

Data on these eight lines of the bus system are applied to data-bus buffer 8287, shown in the upper right-hand corner of Fig. 18A, and then transferred via the Bus Module 278 (Fig. 17) to the Input/Output Module, where they appear in the upper left-hand corner. The data are again buffered there in unit P8287 before passage to the Slave Processor Module, and — after decoding — to the Display Module and the Keyboard Module, as previously described. The address/data bus is also connected to data buffer 8286, shown in the lower right-hand corner of Fig. 18C, forming a local "data bus" DB0 through DB7 that services the components shown in Figs. 18B and 18C. It must be understood, however, that data can flow both ways along the paths just recited, and in particular data from the Personality Module (Fig. 15), or from the memory port 74LS240 in the Input/Output Module (Fig. 13B), can flow back to the central processor unit 8088 in the Master Processor Module (Fig. 18A).

Similarly, the same signal lines may at different times be used to carry address or control signals — but in this mode of operation the flow is generally unidirectional, the address or control signals being provided by the central processor unit 8088 to other units in the system. When addresses or control signals are carried on this (multiplex) half of the bus, they are generally followed by data; thus it is necessary to provide a "latching" action for the address information so that it is retained and operative upon its target components after the address signals have been removed from the bus itself. This action is provided by address latch 74LS373, near the upper right-hand corner of Fig. 18A. The latched address bits AB0 through AB7 are held available for whatever components they are intended for, freeing the multiplex half of the bus to carry data.

The multiplex half-bus within the Master Processor Module is also connected to a mathematical processor 8087, shown at the right side of Fig. 18B. This math processor is not in use, in my present preferred embodiment, having been supplanted by expanded mathematical processing within the central processor unit 8088.

The address bit lines AB0 through AB7, just mentioned, pass through the uppermost of the three address-bus buffer sections 74LS240 (at the right end of Fig. 18A), to become ANDR0 through ANDR7 complement signal lines, which perform the addressbus functions previously noted for the displays and the ROM on the Personality Module. Meanwhile the address bit lines AB0 through AB7 also branch just to the left of the address-bus buffer, and are shown in Fig. 18B as applied to the address terminals of the several memory sections appearing in that drawing.

The other half of the bus system originating within the Master Processor Module starts at output lines A8 through A15 of the central processor unit 8088. These eight lines are usable for addresses only. In addition to branching for connection to the match processor, now unused, these eight lines are applied to the lowermost (as drawn) of the three address-bus buffers 74LS240, mentioned earlier, forming complement signal lines ADR8 through ADRF, which with the eight lines previously mentioned complete a sixteen-line intermodule address bus. In addition, the eight lines A8 through A15 are applied to internal buffer 74LS244, forming address signal lines AB8 through ABF for control of the programmable read-only memories (PROMs) 2732A or 2764, shown in Fig. 18B. These lines in effect, in combination with the eight complement signal lines ADR0 through ADR7, also complete a sixteen-line address bus.

Eight status signal lines from the central processor unit are directed to the CPU status latch 74LS373 — the lower of these two latches in Fig. 18A -which performs for the status lines a function similar to that performed for the multiplex bus lines by the upper latch, as previously described. In this instance, however, the signals for which the status lines are freed are not data signals but simply other status signals. The latched signals are used to generate other complex status signals (in the gates 74LS27, 74LS11, and 74LS00, just to the right and up from the CUP status latch 74LS373). The latched signals are also applied to the center one of the three address-bus buffers 74LS240, where they are buffered and passed on to the Slave Processor and Display Modules.

Some of these eight signal lines from the central processor 8088 are passed to a bus controller 8288, which produces appropriate signals when the central processor is reading or writing via the bus. Some of the same signals are also passed to a "multiple-processor bus arbiter" 8289, not in use in the present preferred embodiment but provided — as the extra channels in the Bus Module discussed earlier -for system expansion by addition of other functional microprocessor units. In the event such units are added, the multiple-processor bus arbiter 8289 will resolve priorities as between them — based in part on additional manually applied jumpers between the wire-wrap terminals marked "Y," "Z" and "Q" on Fig 18A.

The ready generator 8284A, at left in Fig. 18A, functions in cooperation with the 12 MHz crystal shown just above it to provide clock signals for use throughout the system, and also collects various "acknowledge" and "ready" signals from other parts of the Master Processor Module and constructs an overall "ready" signal for passage to the central processor 8088. This "ready" signal informs the central processor that the system has completed tasks it was previously instructed to perform, if any, and is now ready for reading or writing of the next item of data or address information on the data/address bus system or status lines.

Fig. 18B illustrates primarily the memory system of the Master Processor Module. In the upper portion of the center of the diagram are two banks of random-access memories (RAMs) MSM5114-3, each bank having four memory chips. The system has already been described whereby the central processor unit 8088 (Fig. 18A) addresses the memories, but the address lines previously described all carry addressing information in numerical location form. Some of the signal lines carrying this data must be decoded to determine which chip is being addressed by the other address signal lines, and to generate high-low "strobe" or "command" signals to the individual chips. Thus, lines AB0 through AB9 call out memory locations in all of the MSM5114-3 individual chips, without discriminating among them, and likewise as to the 2732A or 2764A PROM chips (taking into account the additional bit lines ABA, ABB and ABC to the PROMs).

The additional decoding step is provided in RAM-select decoder 74LS139, at the left end of Fig. 18B, and in PROM select decoder 74LS138, at the bottom of the drawing. The former unit selects a RAM chip pair for actuation, subject to inhibition when the RAM is in use (by the complement "ramenable" or "RAMENB" signal applied to the decoder) or when the power is too high or low (by the complement "memory disable" signal, at pin 22 of the connector, as discussed earlier in connection with the Input/Output Module, Fig. 16B). The two binary bits at lines ABA and ABB are sufficient to specify four conditions, corresponding respectively to establishment of a "high" logic level at any one of the four chip-select lines 4, 11, 3 or 10, from the four MC14071B "AND" gates.

Similarly the PROM select decoder 74LS138 receives chip-select signals A0, A1 and A2 — sufficient to specify a high logic level for any one of the eight PROM chips.

Depending upon the functional capacity demanded of the apparatus 270, in its various possible expanded applications, it may be desirable to use either a 32K capacity PROM chip in each of the eight positions — where diagrammed near the bottom of Fig. 18B — or a 64K capacity PROM chip in each of those positions. The PROM "size" selector 74LS157, in the lower left-hand corner of Fig. 18B, accommodates the resulting ambiguity in memory locations — and this is the reason for the added signal line to terminal G1 of the chip selector 74LS138.

Once the address of a memory location has been called out, the next step is to strobe the memory to read or write, as the case may be. In the case of the PROMs, in which is stored the program for the central processing unit 8088, the strobe line is the complement "MEMREAD" line drawn from the lower right of the PROMs. When the address has been established and the voltage on this line is lowered to strobe the PROMs, the next program instruction is read from the PROMs onto the data bus DB0 through DB7, where it traverses the data buffer 8286, in the bottom right-hand corner of Fig. 18C, and then joins the portion of the data bus previously discussed (AD0 through AD7) for transmission to the central processor unit 8088 on Fig. 18A.

In the case of the RAMs in the upper center portion of Fig. 18B, the addressing operation and readout are substantially the same, except that the "read" strobe line is — as is conventional — omitted from the drawing. To write into the RAMs, the addressing is performed in the same fashion as for reading, but the complement "MEMWRITE" signal line, rather than the "read" line, is brought low to enable writing into the RAMs; data from the same data bus is then applied to the RAMs for storage.

Most of the components shown in Fig. 18C are devoted to internal "housekeeping" functions, the only exceptions being the data buffer 8286 at lower right and the math processor 8231 at upper right center. The data buffer, as previously mentioned, is positioned at a point where the multiplex half-bus AD0 through AD7 becomes devoted more exclusively to handling data. The math processor is provided to perform certain computations that require special machine-language programs for execution in reasonable time — such as small-argument arctangents and other transcendental functions.

Most of the other circuitry shown in Fig. 18C is related to the prioritization and management of the "interrupts" mentioned earlier in connection with the Input/Output Module (lower right corner of Fig. 16B). The various externally generated interrupt signals are collected at pins 57 through 64 of the Master Processor Module connector strip, along the left edge of Fig. 18C, and applied to wire-wrap pins V and W, just to the right in the drawing.

Other interrupts, generated internally by the program, are applied to the interrupt register 74LS175, at lower left in the drawing, where one four-bit word represents the status of four interrupts. The bits in this register are simply held until used. The output lines from the interrupt register 74LS175 are applied to wire-wrap pins in the X set, along with other interrupts from other points within the Master Processor Module, as shown.

The interrupt counter has as its inputs either prioritized lines IR0 through IR7, and five other lines shown at top left that also function as interrupts. Coordinating and prioritizing all of these input signals, the interrupt counter generates an output "interrupt" signal only when no higher priority interrupt is already in effect. The relative priority of the externally generated interrupts and the internal, program-generated interrupts mentioned previously is determined by manual strapping. The strapping is custom-applied between the previously mentioned wire-wrap pin sets V, W and X and the pin set U that is connected directly to the input terminals of the interrupt counter. Here again, of course, proper application of external jumpers at these terminals requires a thorough understanding of the significance of the interrupt structure and the requirements of the external apparatus involved.

As previously mentioned, the "interrupt" signal from the interrupt counter is applied to the master processor unit 8088 (Fig. 18A), where any arriving interrupt signal is treated as a "maskable" interrupt — in that it maybe overridden, "masked," by an interrupt of higher priority as determined in the interrupt counter. Also applied to the master processor unit is a "nonmaskable interrupt" signal (NMI), which overrides any of the interrupts processed through the interrupt counter. As also previously mentioned, the NMI signal is generated by the overvoltage and undervoltage sensing circuitry in the Input/Output Module (upper right in Fig. 16B).

The periodic interrupt timer 8253-S, at right center of Fig. 18C, receives from the master clock 8284A (left end of Fig. 18A) either a 4 MHz or 2 MHz clock signal (selected by manual strapping at wire-wrap pins S, shown in the center of Fig. 18C), and generates periodically a complement "time interrupt" (TIME INT) signal. This signal, applied to terminal 4 in the wire-wrap pin set X, shown at left center of Fig. 18C, is used to announce when certain regularly scheduled processes should be utilized — such as, for instance, the updating of position by dead reckoning.

Such interrupts will generally be assigned a very low priority, since they can be effectuated a few milliseconds or even seconds late without adverse result. The periodic interrupt timer obtains its complement time-interrupt" output signal by dividing down the input clock signal; it is accordingly easy to use the same timer to produce another necessary divided-down signal, the complement "baud clock" signal, which establishes a character-transmission rate for communication of data between the apparatus 270 (Fig. 10) and external devices 251, 252, 253, 261, 262, 263, etc.

At upper right in Fig. 18C is a system controller 8288, which receives various status signals from the central processor unit. The controller commands the other components in the Master Processor Module to read or to write into or from input or output devices (note the complement signals IOREAD and IOWRITE), or into or from memory (note the complement signals MEMREAD and MEMWRITE). The controller 8288 also generates a local interrupt (complement signal INTA) when required to avoid certain kinds of priority conflict not handled by the interrupt counter. In particular, the system controller 8288 receives a "local access" signal from the group of gates 74LS00, 74LS04, 74LS20, and 74LS32, drawn just below it. These gates generate the local-access signal to inhibit operation of the system when conflicting uses of the bus would otherwise occur — such as, for instance, in using the bus to communicate with memory-mapped input-output devices and at the same time with the internal RAMs or PROM in the Master processor Module.

Below and just to the left of the internal — inhibit gates just discussed is an internal-memory mapped-device selector 74LS139. Whereas the various input and output devices previously discussed are "mapped" into memory locations by "port controls" such as P8251A in the Slave Processor Module (Fig. 13A), the apparatus also "maps" into memory locations the data terminals of certain components that are internal the apparatus, but not actually memory modules as such. The internal-memory-mapped-device selector 74LS139 generates signals that select these internal nonmemory devices for communication on the data bus. The control signals for this purpose are shown at complement lines "SELECTPIC" (select programmable interrupt counter 8259A), "SELECTMPU" (select master processor unit 8088), "SELECTPIT" (select programmable interrupt timer 8253-S), and "SELECTINT" (select interrupt register 74LS175).

Fig. 19 illustrates the circuitry in the Power Control & Monitoring Module, 289 in Fig. 10. Ship's power is first applied across diode CR1, provided to protect the apparatus by blowing a fuse if the supply voltage is of incorrect polarity. Zener diodes VS1, VS2, VS3, capacitors C1, C2 and C3 and inductor L1 form a spike filter, to protect the apparatus against high-voltage transients from the supply. A protected but unregulated twelve-volt supply is cabled to the Input/Output Module via pins 2 and 9 of connector PC3.

This voltage is also supplied to power switching relays K1 and K2, which respectively are controlled by signals at pins 4 and 1 from the previously discussed lamp and supply-control circuits in the Slave Processor Module. The output voltages of these power relays are cabled at connector pins 3 and 8 to the projection-lamp socket, and at pins 5 through 7 to the regulating circuitry in the Slave Processor Module (Fig. 13B) and elsewhere in the system.

4. OPERATION

As pointed out above in detailed-description subsection 1, "External Features," the preferred embodiment of my invention has a hierarchy of capabilities that are conveniently described as "modes" and, within each mode, "functions". Some characteristics of the modes and functions have already been presented in that earlier subsection, and the hardware required to implement the modes and functions has also been described, in subsections 1 through 3. Since parts of that hardware, however, are programmable microprocessors, much of the detailed implementation is embodied in programs. Subsection 5, which follows, presents the structure of the programming. This subsection 4 provides a bridge between the hardware and program structures, by describing some of the things that the apparatus is expected to do under various conditions.

## a. Use of the "function" key

The "function" key 38 (Fig. 2), as noted earlier, changes the implication of most of the other keys on the control panel 14. These changes may be grouped into three categories: (1) changes in the functions produced by the MANL/LOAD and DEST/PP keys 49 and 48; (2) changes in the functions produced by the display keys 32 through 36; and (3) changes in the implication of the numeral keys 37.

The first of these categories has already been introduced, in subsection 1. To load a map, if the overall power to the apparatus and the power to the projection screen are both turned on, the operator presses the "f" key 38 and then the MANL/LOAD key 49 — thereby calling up the "LOAD" function of the latter key. The displays 31 present the words "PLEASE WAIT" and the map transport mechanism moves the map carriage 143-148 (Fig. 5) toward its loading position, adjacent the slot 13 (Fig. 1) in the left side of the upper case section 12. The operator removes any map (in its mount) that may be in the carriage, inserts a desired map (in its mount) into the carriage, and presses the ENT key 42 (Fig. 2) to indicate that the new map has been loaded. The displays 31 then indicate "INITIALIZE CHART", and the N, S, E and W lights (on keys 43) all glow to indicate the manual direction of the map transport mechanism is enabled.

The operator touches the E key continuously, for about ten seconds, while the map moves well into the housing and until the left edge of the projected map appears on the screen. The operator then touches the S key continuously until the upper left corner of the map appears on the screen. By manipulating the direction keys 43 the operator positions a corner target on the map precisely under the crosshairs 16 on the screen, and then presses the MARK key 44. The operator then again touches the S key continuously until the lower left corner of the map appears on the screen, manipulates the direction keys 43 to position a second corner target in that corner precisely under the crosshairs, and again presses the MARK key.

The Master processor and Slave Processor Modules 279 and 273 (Fig. 10) now have enough information to determine the chart's precise position — particularly including rotation relative should be precisely parallel to the vertical tracks 135 of the transport mechanism, Fig. 5). The processors now should be able (with suitable programming, of course) to translate any latitude-longitude data into vertical and horizontal drivemotor (137 and 151 in Fig. 5) step numbers, and vice versa.

The display then indicates "CHART NO." and the numeral lights (on numeral keys 37) all glow, indicating that the apparatus is ready to accept numerical entries. The operator enters an identifying number for the map, reading the number from the lower left-hand corner of the screen. I prefer to program the apparatus so that it recognizes the standard NOAA system of chart numbers, and a specially assigned six-digit number for foreign charts.

The procedure now branches, depending upon whether the particular map now in the apparatus has been used before, and on whether certain data are stored in the memory within the apparatus. If these data are not already stored, the display indicates "L1? DDD MM.MM". At the lower left corner of the chart, appearing on the screen, are four numbers labelled L1, L2, L3, and L4. These values are the latitude and longitude of the upper right and lower left corners of the chart, respectively, given in degrees minutes and hundredths of a minute. The operator keys in the data for position L1 — copying the degrees and minutes exactly as called for on the display. The operator then checks that the keyed-in data as displayed agree with the information on the chart — and, if not, touches the CLR key 41 and repeats the attempt.

When agreement is obtained, the operator touches the ENT key 42 to enter the keyed-in data in the portion of the apparatus memory reserved for chart data. The display then requests "L2? DDD MM.MM", and the operator responds similarly with the data for the second value. This cycle is repeated until the entire sequence of four points in sequence has been entered.

The display now indicates "CALIBRATED," and the mode lights (on keys 45 through 49) light, indicating that the apparatus is ready for the next procedure. The apparatus has stored the calibration points with their corresponding chart number for future reference. The apparatus stores data for up to ten charts. Therefore, as long as the backup battery has not run down, the operator will not have to enter the calibration data again -- only the chart number. If the ten-chart memory is already full, the display indicates "TABLE FULL," but operation can proceed with this (eleventh) chart in a temporary memory position. Alternatively, the operator can substitute the data just entered in place of the data, already in the permanent memory, that correspond to another chart -- one that will not be used soon. This procedure will be described shortly.

The display then indicates "VARIATION". The operator enters the degrees of magnetic variation (generally finding this information on the chart itself) for the operating area, and touches the ENT key 42. The display now indicates "EAST OR WEST", and the E and W lights glow, indicating that the E and W keys are active for keying-in of the direction of the variation. When this information has been keyed in correctly, as verified at the display, the operator again touches the ENT key. The variation information is stored with the other chart-calibration data corresponding to the chart now in the apparatus; however, the operator must take care to change the variation value if the craft moves to a part of the map where variation is significantly different. (This will of course be necessary only for relatively small-scale charts.)

If any calibration or variation data are entered incorrectly, and the error is such that the apparatus is unable to calculate the internally used constant values that it uses during operation, the message "CHART TOO BIG", or "OUT OF RANGE", or "VARIATION TOO BIG" appears on the display and the corresponding steps must be repeated correctly — by touching the "f" and MANL/LOAD and ENT keys in sequence and reentering the data without error. During all of these data-entry steps the apparatus continues to update the craft's present position in whatever mode was previously in operation, although of course the chart display is not visible.

Taking up the other branch of the map-loading procedure, if the calibration data for the map that is now in the apparatus have already been loaded into the memory, then the apparatus recognizes the chart number and skips all of the data-entry interrogations. The two branches of the procedure now reconverge.

If the apparatus was operating in a DR or Loran mode before the new chart was installed, and if less than ten minutes have elapsed during the chart installation, and if the present position is in fact on the new chart just loaded, then the operator can touch the DR TRACK or LORAN key 46 or 47 to cause the apparatus to automatically position the new chart and continue tracking. If more than ten minutes have elapsed, the present-position track is cancelled and a new position must be established -- either automatically by Loran fix or manually by entry of a bearing fix or the last available DR position.

Still within the first category of three "f" key uses enumerated above, the effect of touching the "f" key and then the DEST/PP key 48 has already been described adequately in subsection 1, "External Features". The second category, use of the "f" key in conjunction with the display keys 32 through 36 has already been introduced in subsection 1, but some additional discussion will be presented here.

Under certain circumstances direction and speed, or set and drift, or both, must be entered manually. At this point the discussion will digress briefly to explain what determines the necessity for manual entry of these quantities. Generally, direction and speed need not be entered manually when automatic sensors for these quantities are attached; and set and drift need not be entered manually when a Loran receiver is attached. In addition, manual entry of set and drift can sometimes be avoided when bearings fixes are taken — to be used by the apparatus in calculating set and drift. The reasons for these statements may be understood from Fig. 20, which illustrates the relationship between three pairs of parameters: (1) direction (or "course" or "heading") steered, and speed through the water, (2) set and drift, and (3) course made good (CMG) and speed made good over the ground. (It is to be understood that this discussion applies equally well to aircraft, with the necessary minor changes in terminology.)

Fig. 20 represents each of these pairs of parameters as a vector quantity. The heading-and-speed vector 321 is a vector quantity whose magnitude is proportional to the craft's speed (e.g., as suggested in the drawing, 10 knots), and whose orientation is parallel to the heading (e.g., 80 degrees clockwise from north). This vector represents direction and speed of the craft relative to the body of water through which the craft is moving. The set-and-drift vector 323 is a vector quantity whose magnitude is proportional to the speed of the body of water (e.g., as shown, 3 knots), and whose orientation is parallel to the motion of the body of water (e.g., 140 degrees). This vector represents direction and speed of the water relative to the ground which is beneath the water. The vector sum is 322, which therefore represents the direction and speed of the craft relative to the ground — that is, the CMG, course made good (e.g., 11.8 knots) and speed made good (e.g., 93 degrees) over the bottom.

From any two of these vector quantities the third may be calculated — and such calculations are in fact performed by the apparatus when input information is sufficient to establish any two sets of values. (The necessary equations are set forth in subsection 5, below.) Five cases will be described.

1. If set-and-drift vector 323 and heading-and-speed vector 321 are both entered, the apparatus will calculate the CMG vector 322 — and this quantity will be accumulated and output as the DR track, which controls the map transport mechanism to graphically display DR-computed present position.

2. If the heading-and-speed vector 321 is known and the CMG vector 322 is measured by the operator over a relatively short distance — by taking bearing fixes, and entering the bearing-fix data into the apparatus -the apparatus will compare (a) the dead-reckoning prediction from the heading-and-speed vector 321 with (b) the established CMG vector 322 to find (c) the discrepancy vector 323, which it will attribute to set and drift.

3. If the set-and-drift vector 323 is estimated and input to the apparatus, and the CMG vector 322 is measured over a short course by entering bearing-fix data as in the second example, the apparatus could in principle calculate the heading-and-speed vector 321. In practice this case would seldom be useful as such and is therefore not implemented.

4. If the course-made-good vector 322 is set equal to the desired track to a particular way point, the set-and-drift vector 323 is known, and the present speed is known, then the necessary heading-and-speed vector 321 is calculated by the apparatus and from that value the necessary heading if found. The heading is displayed (or directed to an autopilot) as "course to steer."

5. Combining calculations 2 and 4 above, if the set-and-drift vector 321 can be determined by measurements over a short distance, as in calculation 2, then the set-and-drift vector 321 can be regarded as known for the purpose of calculating "course to steer," as in calculation 4. If the two- step process is then repeated at regular intervals, continuously resetting the "course to steer" to accommodate changes in the short-distance determination of (1) set and drift and (2) speed, then the actual track will closely approach a straight line, approximating the desired course to be made good to the way point.

The closer together the bearing fixes are obtained, in the compound calculation 5, the more closely will the actual track approximate the desired course to be made good. It is for this reason that it was stated above that manual entry of set and drift can sometimes be avoided when bearing fixes are taken; the only constraint is the availability of bearing points on which to take fixes.

When a Loran receiver is attached and in use, within the part of the world where the Loran system is in place and operating, the constraint of bearing-point availability is removed. Loran fixes can be taken at very frequent intervals, permitting updating of the set-and-drift vector 323 and revising the desired course-to-be-made-good vector 322, so that the "course to steer" or heading aspect of the heading-and-speed vector 321 can be frequently reoriented and the actual CMG vector 322 will very closely approximate the desired one. It is for this reason that it was stated above that set and drift need not be entered manually when a Loran receiver is attached. This topic will be considered further in parts e and f below.

When only one of the three vectors is known, the other two are indeterminate. For example, suppose that bearing fixes are obtained over a short distance, to actually measure the CMG vector 322 for that distance, but that no set-and-drift or heading-and-speed data are provided to the apparatus. The CMG vector 322 calculated by the apparatus will then have incorporated within it the effects of both the set-and-drift vector 323 and the heading-and-speed vector 321, with no means of separating the two effects. This indeterminacy might at first seem unimportant, but it is actually very undesirable because it prevents determination of a "course to steer" that compensates for set and drift. Thus even a rough estimate of one of the two vectors 321 and 322 — whichever is available with greater accuracy — is somewhat preferable to none.

These relationships establish the circumstances under which heading-and-speed and set-and-drift information must be entered manually. With these relationships in mind, the discussion now returns to the mechanics of data entry. When course and speed are to be entered, the operator touches the "f" key 38 and then the DIR/SPEED key 32, and the numeral lights (on keys 37) glow to indicate that the apparatus is ready for the entry of numeric data. Further, the displays 31 "request" course-and-speed data, indicating the necessary format, by the same sort of colloquy as described above for map-calibration data. When set and drift are to be entered, the operator similarly touches the "f" key 38 and then the SET/ DRIFT key 33, and the numeral lights (on keys 32) glow while the displays "request" set-and-drift data.

Whenever the apparatus is relying upon the operator for either course and speed or set and drift, it is essential for the operator to be aware of the necessity to enter any changes in any of these four parameters — course and speed from his visually read compass and knotmeter, or from estimates; and set and drift from a chart or from estimates.

To enter latitude and longitude numerically, the operator touches the "f" and LAT/LONG keys 38 and 34 in that order, along with either the DEST/ PP key 48 (to indicate that it is the coordinates of the destination that will be entered) or sometimes the combination of the "f" and DEST/PP keys in sequence (to indicate that it is the coordinates of the present position that will be entered). The latter keystrokes are unnecessary if the apparatus is already in its "normal" condition of displaying and accepting present-position data.

The displays 31 will then "request" the appropriate coordinates in format, by a series of indications analogous to that described above for map calibration. If the operator enters no direction for latitude or longitude, north and west respectively are entered automatically by the apparatus. If this results in a position that is incompatible with the chart in use, the display indicates "OFF CHART" to prompt the operator to correct the entry.

By numerical entry of latitude and longitude the operator can locate for the apparatus any point that is either on or off the currently loaded chart. Alternatively, for points that are on the chart, the direction keys can be used to align the point of interest directly at the crosshairs, and the MARK key 44 can be touched to identify the particular point for the apparatus — which can convert the position of the map transport mechanism to latitude and longitude.

The numerical entry method and the "mark" method are both available for entry of present position, way points, destination, or navigational bearing points such as buoys and lighthouses. Navigational bearing points (as explained in part d below) are entered only in the "bearing fix" mode, and are identified as such by the fact that the apparatus is being operated in that mode. It is therefore unnecessary to provide a "bearing point" function key as such. As will shortly be described, an entire table of coordinates for present position, destination, and way points can be entered into the apparatus for storage and for use in calculations; when this operation (function) is in progress, the distinctions between these various types of points are inherent in the procedure, and it is therefore not necessary to use the DEST/PP key to discriminate among them.

In Loran operation, the apparatus automatically calculates time-difference (TD) equivalents for any latitude-and-longitude combination that is significant to the Loran calculations or is to be displayed. It is therefore usually unnecessary to enter TDs manually; however, in some situations the operator may know the TDs but not the latitude and longitude. Accordingly the apparatus is programmed to accept the TDs instead of the coordinates, and perform the reverse translation to derive the coordinates where needed. In short, the apparatus is "fluent" in both coordinate language (when the LAT/LONG key 34 is touched) and TD language (when the GRI/TD key 35 is touched), and will either accept or display information (depending upon the function being performed) in either language.

To enter a new group repetition interval the operator touches the "f" key, then the GRI/TD key and then the numeral keys as required -- and as prompted by the displays 31, in a manner similar to that described earlier for map calibration. To enter TDs manually, when that is desired, the operator must identify the point as present position, destination, way point, or bearing point -- either by use of the DEST/PP and "f" keys 38 and 48, or by entering the bearing-fix or destination and-way-point-table function, as mentioned above for entry of latitude and longitude.

The third category of uses of the "f" key, as stated at the beginning of this part a, is changes in the implication of the numeral keys 37. When the operator touches the "f" key and then certain numeral keys, the apparatus initiates certain functions for which no specific display or control key has been provided. These functions are generally operations that are performed relatively infrequently, or in some cases operations that are actually a formatted series of suboperations (to obviate the necessity for the operator's memorizing an entire formatted series). The functions of this type that are used in my preferred embodiment of the invention are listed below, along with the numerals used to initiate them. It will be apparent that a great many variations on the listed functions — and of course on the numbers that call them up — can be conceived, without departing from the spirit or scope of my invention.

Keying in "f", the "0" (zero), and then "ENT" initiates the "enter present position" function. (The key series may be specified more succinctly as just "f0 ENT"; this format will be used without explanation for the following functions described.) In this operation the operator enters present known position into the apparatus. The apparatus will use the entered value for future DR, for initial calculation of "course to steer", for calculation of estimated arrival time at and distance to the next way point, and for calculation of TD local error (as described below in regard to "f54").

Latitude is entered and displayed in this operation (and in the situations previously discussed) with two digits for degrees, and with two digits, a decimal point, and two more digits for minutes and decimal fractions of minutes. The display also includes an N or S for north or south; in entry of data these designations are keyed in using the direction keys 43. Longitude is entered and displayed similarly, except that three digits are presented for degrees, and of course an E or W for east or west. The numeral and direction lights (on numeral and direction keys 37 and 43) glow when the "f0" function requires their use to enter information. A prompter symbol (*) appears in the display to indicate digits called for but not yet entered.

If the present position is shown on the map that is in the apparatus, the operator touches "f0 ENT," then MANL/LOAD (the direction lights glow), and then the direction keys to move the present position directly behind the crosshairs on the screen. Then the operator touches MARK -- and the apparatus records the corresponding latitude and longitude, identifying them with the craft's present position. If preferred (or if the present position is not on the map that is in the apparatus), the operator touches N or S and E or W as appropriate to complete the data format. The operator then touches ENT to enter the keyed-in data, and proceeds to the next operation or to initiate a particular operating mode, as desired. (The same result can be achieved using the "f" and LAT/LONG keys, and if necessary the "f" and DEST/PP keys, as described earlier, but the "f0" function helps the operator to be certain that what is accomplished is what is intended.)

Keying in "f1 ENT" initiates the "enter destination and way points" function. In this sequence the apparatus prompts the operator to enter locations for destination and/or as many as nine way points. The apparatus will use these data for calculation and updating of "course to steer," estimated arrival time and distance to the next way point. The latitude and longitude are entered either numerically (in the same format described for "f0") or by use of the MARK key, as before. Way points, in the order in which they will be traversed, are numbered from zero up, the destination being assigned the last number. For example, five way points would be numbered from zero to four, and destination would be point number five, the apparatus of course simply treating the destination as the sixth point. A way point or the destination is called out, in this function, by its assigned number when the operator wishes to display its latitude and longitude for any reason — including a decision whether to keep it or change it.

The procedure for use of this function is as follows. The operator touches "f1 ENT." The displays 31 indicate "WAY PT NO?" The operator keys in any numeral from 0 to 9 and then touches the ENT key. The displays 31 then indicate latitude and longitude for the correspondingly numbered point. To keep the same latitude the operator touches ENT; to keep the same longitude the operator touches ENT again. To change either figure by numerical entry, the operator keys in the data as described for the "f0" function, touching ENT to enter the new value in place of the displayed value (if any). If it is preferable, the operator can instead touch the GRI/TD key 35, and enter the Loran TDs for the point of interest. If the point of is on the map that is in the apparatus, the operator can use the alternative procedure of touching MANL/LOAD, then the direction keys to register the point with the crosshairs, and then MARK to enter the location. The operator can then key in any other numeral from 0 through 9, followed by the ENT key, to review and/or revise any of the other stored points of interest, or to add new ones beyond the original table.

Keying in "f2 ENT" initiates the "current set and drift" function. In this operation the apparatus prompts the operator step by step through a procedure for entering set and drift -- determined by the operator from charts or other sources external to the apparatus. The apparatus will apply these data as corrections to ship's heading and speed for accurate DR tracking, for advancing of lines of position (to be explained below) in the bearing-fix mode, and for calculating set-and-drift compensated "course to steer".

Although usually described as the direction and velocity of currents in the medium (air or water) through which the craft is moving, set and drift in maritime applications should be described more precisely with reference to the combined effects of wind and current. If set and drift are calculated by the apparatus, from either Loran or bearing fixes or from known positions, the offsetting influences of wind and current cannot be separated in the resulting data. For manual entry, however, the operator should take account of both wind and current, using values obtained externally or estimated as accurately as possible.

The operator can obtain values of set and drift for tidal currents from tidal-current tables, diagrams and charts published by the National Ocean Survey; and for ocean currents from pilot charts and pilot-chart atlases published by the Defense Mapping Agency Hydrographic Center (DMAHC). In addition, the operator should consider abnormal tide and current conditions and of course local wind conditions in the entered set and drift values. Especially when entering or leaving tidal-current areas, it is essential to use updated values of set and drift to avoid gross errors in DR and in the advancing of bearing-fix lines of position. Drift is to be entered in knots; when using data from charts and atlases that show drift in nautical miles per day, the operator must divide such data by twenty-four before entry.

The procedure for function "f2" is as follows. The operator touches "f2 ENT," and the displays indicate "SET XXX," where "XXX" is the previously entered value, if any, of the set — in degrees clockwise from north. The operator either touches the ENT key to keep the value XXX, or touches the appropriate numeral keys 37 and then the ENT key to enter the direction of the known or estimated set. The displays 31 then indicate "DRIFT YYY," where "YYY" is the previously entered value, if any, of the drift — in knots. The operator touches ENT to keep the value YYY, or uses the numeral and ENT keys as before to enter updated value in knots; this use of the ENT key also completes the "f2" function and the operator can proceed to the next operation or mode desired. (The same result can be achieved using the "f" and SET/DRIFT keys 38 and 32, but the "f2" function helps the operator to be certain that what is accomplished is what is intended.)

Keying in "f50" initiates the "compass damping" function. This operation adjusts the amount of weighed averaging automatically applied by the apparatus to heading values successively received from the ship's compass, if any. The averaging or "damping" is used to smooth or steady the compass signal, to minimize the erratic fluctuations due to yaw. The amount of yaw varies considerably — between slight, in calm waters, and great, in heavy seas. The exact effect depends on ship design, helmsman skill, shape and frequency of swells, etc. The amount of damping must be varied correspondingly.

The apparatus of the preferred embodiment applies damping in different degrees, identified on a scale of zero to nine (light to heavy damping). When the apparatus is first powered up, damping is automatically preset to five. The apparatus is to be set by the operator to light-damping values when there is very little compass swing, or in particular when it is necessary for the DR track to follow course changes very closely (for example, within a half-minute). The apparatus should be set to heavy-damping values when the compass swings are wide and irregular. The compass signal can be observed, to determine the degree of damping desired, by touching the DIR/SPEED key 32 while the apparatus is in the DR or Loran mode.

The procedure is simple. The operator touches "f50 ENT"; the displays indicate "CMPS DMP X" where " X" is the damping value previously set; and the operator touches either (1) the ENT key, to keep the preset value X, or (2) a numeral key and then the ENT key, to change the setting and complete the f50 function.

Keying in "f51 ENT" initiates the "speed damping" function, which smoothes the automatic input from the "ship's log" — that is, the knotmeter. Like compass damping, the speed damping applied by the apparatus is a weighted averaging of values successively received. The damping is applied in varying strengths designated from zero (lightest) to nine (heaviest). The apparatus automatically sets its own speed damping to five at power-up. The operator can control the effects of speed variation — caused by pitch of the craft at sea, at adjustment of the speed damping factor.

The need for this adjustment will vary even in heavy seas, depending upon ship design, heading relative to the direction of wave motion, wave height, and so forth. Strong damping will be particularly essential in heavy seas, especially when swells are from ahead or following; light damping will be in order in light seas and particularly when the DR track should respond accurately and quickly to speed changes arising from maneuvering.

To assess the need for speed-damping adjustment, the operator touches the DIR/SPEED key and observes the averaged knotmeter reading. If this value is changing rapidly or excessively, the operator keys in "f51 ENT"; the display reads "SPD DMP X," where "X" is the damping value previously set, and the operator touches either (1) the ENT key, to keep the preset value X, or (2) a numeral key and then the ENT key, to change the setting and complete the f51 function.

Keying in "f52 ENT" initiates the "variation maintenance" function. In this operation the apparatus prompts the operator to update the stored value of magnetic variation, to a value that is appropriate for the region in which the craft is operating. This variation value is automatically applied by the apparatus to magnetic compass headings and bearings, unless the operator specifically indicates (see "f91" and "f92" below) that the correction is not applicable.

Compass variation is the difference between the direction given by a magnetic compass — after correction for deviation (see "f93" below) -- and the true direction. Variation is caused by the fact that the earth's magnetic lines of force are not aligned with the meridians of longitude, but rather, in general, run at angles to the meridians. A magnetic compass, of course, is subject to the corresponding misalignment. The error angle or "variation," in degrees clockwise from true north, is thus essentially constant (subject generally to a slow, perennial drift of the variation value) for any given region.

The preferred embodiment of my invention corrects for variation — if the operator enters the local variation angle -- by adding easterly variation or subtracting westerly variation to obtain the true direction. The values of variation are shown on DMAHC chart number 42, "Magnetic Variation Chart of the World for 1975." For small areas, variation and its annual rate of change are shown on the compass rose of navigation charts. The present value should be calculated using the annual rate.

Where there are significant local irregularities in magnetic force lines, within the area covered by a single chart, the compass rose appears in several locations on that chart. As described above in relation to the chart-loading operation, an initial value of variation for the region of interest is entered into the apparatus in conjunction with the calibration data for the chart. Even while using the same chart, however, it may be necessary to revise the variation setting, as follows.

The operator keys in "f52 ENT"; the displays indicate "MAG VRY XXX," where "XXX" is the previously entered value, if any; the operator then touches either (1) the ENT key, to keep the same value XXX, or (2) numeral keys, and one of the direction keys E or W, and finally the ENT key, to enter the value and complete the f52 function.

Keying in "f53 ENT" initiates the "chart table maintenance" function. This operation prompts the operator step by step through a procedure for removing or replacing chart-data sets previously entered in the apparatus memory. The procedure for entry of chart number, calibration data and variation value has already been described; the "f53" function simply represents a way of systematically eliminating the data that correspond to a particular chart — to make room for data relating to a different chart. Although the apparatus holds data sets for as many as eleven (counting the temporary memory) charts at a time, in some situations a craft changes operating regions or for some other reason incurs a change in the pattern of frequently used charts. Such changes can require a shifting of the "memorized" chart-data sets.

This f53 function is typically initiated by the operator at the point in the chart-loading procedure (described earlier) when a new chart-data set has been loaded into the temporary memory and the displays have indicated that the permanent memories are full. To review the collection of chart-data sets that are filling those memories, the operator keys in "f53 ENT". Depending on the type of chart that is first in the "table" or "list" within the apparatus, the display indicates "DELETE XXXXX?" or "DELETE YYYYYY?" — where "XXXXX" is a five-digit United States NOAA chart number, and "YYYYYY" is a six-digit foreign chart number. The apparatus is inquiring whether the operator wishes to delete the corresponding chart data from the stored table. These data, of course, are related to only one of the ten charts for which data are stored in the apparatus. The operator may therefore prefer to leave this particular data set in the memory — or may prefer to review all of the other charts in memory first, to see which chart's data set it would be least inconvenient to erase. If this is the case, the operator can answer "No" to the inquiry, by touching the "N" key 40 and then the ENT key 42.

The display then indicates a similar query for the next chart in sequence, and this series of operations can be continued until the operator reaches a chart number that is acceptable to erase, or until the entire ten-chart table has been reviewed (in which case the operator can start the process again by repeating the entry "f53 ENT"). When the apparatus displays a chart number for a chart that the operator considers dispensable (relative to the new one in temporary memory), the operator answers the display query by touching the "Y" key 39 — which deletes the data set for the selected chart, and substitutes the data set (if any) standing in temporary memory.

Keying in "f54" initiates the "TD offset" function. This function enters a constant adjustment value to be applied to Loran TDs, when the apparatus calculates a position fix. The apparatus is preprogrammed to automatically apply generally known corrections for certain sources of Loran error — "secondary phase factor" (SF) and "additional secondary phase factor" (ASF). If, however, the operator has dependable information concerning additional errors, such as local variation in ASF, or other errors arising from local conditions, the operator should total these errors and enter the total as a correction to the received TD values.

One way to determine such errors very exactly is to compare the received value with the theoretical values at a known location. Present position may be exactly known from a chart location, such as a mooring or buoy alongside. This location fix is of course independent of any TD errors, and the corresponding theoretical Loran TD values can be determined by using the GRI/TD key 35 as previously described — with the apparatus in the DR mode.

By comparing these theoretical TD values with the TD values displayed in the Loran mode, the operator can determine the extent of any error in the received Loran signal. Such an error, as suggested above, can arise through a local variation in the additional secondary phase factor caused by a local physical peculiarity of the area, or through an imperfection in the receiver. The delay may amount to only a fraction of a microsecond or could be as large as several microseconds, although applicable only within a small area in the immediate vicinity of the known position. If the operator notes this discrepancy and wishes to improve the accuracy of the position computation in the local area; he or she may apply a correction by entering the number of microseconds, positive or negative, in the "f54" function.

Another situation in which the "TD offset" or "f54" function may be used is the coordinated operation of several craft — as, for instance, during search and rescue operations. Loran receivers on the different often read out different values for the same point, leading to failures of complete aerial coverage or even to accidents. The corrective procedure is analogous to synchronizing watches. Each operator, reading the display of an apparatus (i.e., the preferred embodiment of my invention) aboard his or her craft, enters TD offsets that bring the TDs on all the apparatuses into agreement.

The procedure follows. The operator keys in "f54 ENT". The upper display indicates "TD 1 ASF," to invite entry of an additional secondary-phase-factor increment or offset, for the first TD that is output from the Loran receiver. The lower display indicates the offset value, if any, previously entered. The operator touches (1) the numeral keys 37, then the + or − key 39 or 40, and then the ENT key 42, to enter a new TD offset calculated to bring the TD display in Loran mode to the desired value, or (2) the CLR key 41, to remove the previously entered offset, if any, without substituting any new value, or (3) the ENT key to retain the previously entered offset value. The displays then will indicate "TD 2 ASF" and an offset value for the second TD. The operator responds similarly to this information, and may if desired proceed in the same way for all the available TDs of the GRI chain that is in use; the operator then presses the ENT key twice to complete the f54 function. While it is possible for the operator to determine correct Loran TDs for all the stations in the GRI chain, and to key in offsets for all of the TDs, it will generally be satisfactory to correct only those two TDs that the invention apparatus is selecting for use in the local area — since, outside that area, the offset values may well be inapplicable anyway.

Keying in "f55 ENT" initiates the "automatic log interval" function. This operation commands an immediate printout and continuing subsequent periodic printouts of positions, date, and time, at an optional printer — if one is attached to the invention apparatus — and invites the operator to revise the frequency of automatic printout. The apparatus is set, when it first powers up, to produce hourly printouts. An immediate printout at the recorder, without disturbing the periodic printout, can be obtained using the operating controls of the recorder.

The operator keys in "f55 ENT"; the display indicates "PERIOD AA MIN," where "AA" represents any previously entered number of minutes (with a maximum of two digits), or is 60 if no value has been previously entered. The operator then touches either (1) the ENT key, to retain the present printout period, or (2) numeral keys (a maximum of two digits) and the ENT key, to revise the period. The first printout in the periodic series (as newly established) occurs as soon as the ENT key is touched. To end the printout series, the operator keys in "f54 ENT CLR".

Keying in "f90 ENT" initiates a "memory maintenance" function. This operation leads the operator step by step through a series of data presentations and queries which are actually the same as five other functions, taken one after the other: f91, f92, f93, and f94 (all discussed below), and "f MANL/LOAD" — the chart-loading function described earlier. The f90 function thus provides for rapid and orderly review and restoration of data, instructions and information previously entered by performing other functions. The f90 function is to be performed when there is a possibility that the apparatus has developed "digital amnesia" — due to loss of ship's power for an interval longer than the ten-hour capacity of the backup battery.

While the f90 function guides the operator through a review of those data that should be replaced in memory immediately to resume navigation modes, there are certain other data that the apparatus holds in memory for up to ten hours that are not reviewed by the f90 function; they are instead to be restored while performing mode operations or by performing the related "f"-key functions. These items are (1) destination and waypoint coordinates, (2) chart data, (3) bearing-point coordinates, (4) set and drift, (5) compass damping, (6) speed damping, (7) TD offset, (8) automatic log interval, (9) present position, and (10) group repetition interval.

In my preferred embodiment certain data are immediately lost from memory upon loss of ship's power: (1) direction and speed, (2) estimated arrival time, "course to steer" and distance to next way point or destination, and (3) previous mode and function operations. It will be apparent that the selection of data for maintenance by the backup battery, and the selection of data for review by the f90 (or equivalent) function, and the selection of data items to be discarded upon loss of power are all matters of design choice, constrained by the limited capacity of a CMOS memory that can be supplied with power for a reasonable time from a backup battery of reasonable size and cost.

Keying in "f91 ENT" initiates the "bearings are true" function. This function prompts the operator to indicate to the apparatus the character of bearings taken visually on navigational objects such as buoys or lighthouses. If these bearings are made using the ship's magnetic compass — the same compass that is connected for automatic provision of bearings to the navigating apparatus of my invention — it is necessary to inform the apparatus that the bearings are magnetic, and therefore subject to the variation and deviation corrections stored in the apparatus. Otherwise it is necessary to inform the apparatus that the bearings are "true" bearings, such as might be obtained with a gyrocompass. The answer to this query is of course essential to proper performance of the calculations made by the apparatus using bearing data entered manually. A gyrocompass, needless to say, is not perfect, but error in a well-adjusted gyrocompass can be kept to a fraction of a degree and is not considered significant in design and operation of the preferred embodiment of my invention.

The operator keys in "f91 ENT"; the display indicates "BRGS TRUE?" — and the operator keys in either (1) Y and ENT to reply, "Yes" or (2) N and ENT to reply, "No, bearings are magnetic".

Keying in "f92 ENT" initiates the "display true headings" function. This operation is performed if the operator desires the apparatus to display true headings, rather than magnetic headings directly comparable with those taken automatically at the magnetic compass. This function does not affect the corrected headings used for calculations within the apparatus. If a gyrocompass is connected to provide the apparatus with true headings, then the deviation and variation corrections available in the apparatus are presumably set to zero and it does not matter how the f91 and f92 queries are answered.

When the operator keys in "f92 ENT" the display indicates "DIS TRUE HDGS"? The operator answers by touching either (1) the Y and ENT keys to reply, "Yes," or (2) the N and ENT keys to reply, "No, display magnetic headings."

Keying in "f93 ENT" initiates the "load deviation table" function. This operation prompts the operator through a procedure for entering compass deviation values to be applied automatically to all magnetic compass inputs. Like the f52 variation-maintenance function, this operation provides a correction to magnetic compass readings, to obtain more nearly true direction signals for calculations made within the invention apparatus and for readout at the displays. The deviation correction, however, unlike the variation correction, is independent of natural disturbances in the earth's magnetic field. The deviation correction instead compensates for magnetic influences aboard the craft itself. Metallic objects, structures (such as tanks), and electrical circuits contribute to a magnetic field pattern that is unique to the particular craft, and generally varies with heading.

The deviation is the angle by which the compass is deflected, east or west, from alignment with the earth's lines of magnetic force. Measurement of deviation for different headings — taken at fifteen-degree heading intervals — produces a table of deviation values which is to be loaded into the memory of the navigating apparatus, using the f93 function. The apparatus then automatically applies these deviation corrections, with interpolation between the fifteen-degree measurement points, to headings and bearings taken by magnetic compass — adding easterly deviation and subtracting westerly deviation. The operator must take care that nothing is done to alter the ship's magnetic field and change the deviation values — or, when a change is necessary, the operator must take care to revise the deviation table after the change. Small metallic objects placed very near the compass, or larger metallic aggregations, electrical wiring, or electronic equipment even though placed further away, can all change the value of deviation.

When the operator keys in "f93 ENT," the display indicates "DEV XXS 000", where "000" identifies the first heading interval in the table — namely, the interval −7.5 to +7.5 degrees. The indicated value "XXX" is the initially preset amount (if any) of deviation for that first heading interval, and "S" is the direction — E for east and W for west — of that initially preset deviation value. The operator uses the numeral keys 37 and the E or W key as appropriate to specify the deviation measured at the center (i.e., zero degrees) of this heading interval. The operator then touches the ENT key to enter this keyed-in value, and the display indication shifts to "DEV XXS 015" — requesting the deviation entry (measured at fifteen degrees) for the interval +7.5 to +22.5 degrees. This procedure, with different interval and deviation values of course, is continued to complete the table and the f93 function.

Keying in "f94 ENT" initiates the "time set" function. In this operation the operator enters the present date and Greenwich mean time to set the internal clock in the apparatus. The clock is then able to provide precise time labelling for DR and fix positions, for calculation of arrival times, and for convenient display of correct local time. The internal clock, which operates on the traditional naval twenty-four-hour system, should be set after initial installation, and should be checked (and if necessary reset) after interruption of ship's power longer than ten hours. The backup battery powers the clock directly during loss of ship's power for ten hours or less.

Time is displayed as "DDHHMMX MON" where "DD" is the date of the month, "HH" is the hour of the day in local-zone standard time, "MM" is the minute of the hour, "X" is a local time-zone designator and "MON" is the name of the month, abbreviated. The time-zone designator is actually a "Z" for the fifteen-degree time zone centered on the Greenwich meridian at zero degrees, an "A" for the next fifteen-degree time zone to the east, then a "B," and so forth (the letter "J" being omitted) to the zone between 157.5 and 172.5 degrees east longitude. The seven-and-a-half-degree zone between 172.5 and 180 degrees east longitude is assigned designator "M". Similarly the designation is an "N" for the fifteen-degree time zone to the west of the Greenwich-centered zone, then an "0," and so forth to the zone between 157.5 and 172.5 degrees west longitude. The remaining seven-and-a-half-degree zone between 172.5 and 180 degrees west longitude is assigned designator "Y." As an example, 121423R SEP is 1423 hours (2:23 pm) standard time, in zone R (67.5 to 82.5 west longitude) on September 12. The time zone R is the zone in which New York City is located; hence the time displayed is United States eastern standard time. (Simple geometrical time zones, defined in this way by the principal meridians, are used rather than the complex zone boundaries established in some areas.)

Once the clock is properly set, the displayed time when the operator touches the TIME/CTS-D key is the local time for whatever point is designated — either present time at present position, or estimated arrival time for a way point or destination. The displayed time thus is not necessarily the time that would prevail at the craft's present position, for the way point may be in a different time zone.

The operator keys in "f94 ENT"; the display indicates "CURRENT TIME" and "YEAR YY", where "YY" is the current year. If YY is indeed the current year, the operator touches the ENT key; if not, the operator uses the numeral and ENT keys to enter the last two digits of the current year — e.g., 93 for 1993. The display then shows "CURRENT TIME" and "MONTH MM", where "MM" is the month number of the present month. The operator touches the ENT key if "MM" is correct, or uses the numeral and ENT keys to enter the correct number — e.g., 11 for November.

The display then continues to prompt the operator in similar fashion through entry of the day, hour, and minute (all in Greenwich mean time). When the operator has entered the minute, the displays indicate "ENT ON TONE" and "DDHHMMX MON". The second portion of the display gives the date and time information the operator has just entered, but now converted to local date and time, for convenience of checking against local time, before the entered value is finally set on the clock. The first portion of the display, "ENT ON TONE", reminds the operator that the time should ideally be set on the clock in coordination with a Greenwich-mean-time signal tone obtained from a standard time service such as WWV or WWVH (see DMAHTC Publication 117A, "Radio Navigational Aids"). The operator presses the ENT key at the time tone, to complete setting of the clock.

b. Startup

Operation of the apparatus will begin under one of the following conditions.

(1) On initial installation or after a long powerless shutdown, the operator should perform function f90, "memory maintenance", described earlier. The final portion of this procedure will include the function obtained by keying in "f MANL/LOAD", also described earlier, which will reestablish variation and chart data for the map to be used first. Other chart data may be reestablished whenever convenient. Compass and speedometer damping are preset to strength of five, on the damping scale described in connection with functions f50 and f51 in part a above, and the operator may reset them too whenever convenient. The desired operational mode may then be selected using keys 45 through 47; and the use of the apparatus can proceed as desired.

(2) On startup in a new area with a new chart, if power has not been down more than ten hours the operator need only perform the "f MANL/LOAD" function — the chart-loading function described earlier — and select the desired mode, proceeding with use of the apparatus.

(3) On startup with the chart for the local area still in place in the apparatus, again assuming that power has not been down more than ten hours, the chart and its data are both ready for service, and the operator need only key in the desired mode and proceed.

c. DR Mode

In the dead-reckoning mode, operation is largely automatic — unless heading, speed, set, and drift data must be manually entered as previously described. If not, the operator's function is simply to observe the various information presented at the screen and displays, and use it as appropriate in guiding the craft.

This description is only true, of course, between bearing fixes (using the bearing-fix mode, discussed below), so unless the craft is in the open ocean the operator will generally not be inactive, as to the navigation process, for very long intervals.

d. Bearing Fix Mode Details

The BRG FIX key 45 is used in piloting to determine (or "fix") the craft's current position, based on "observations" of navigational aids — that is, stationary objects of known position. The known positions of these objects are called "bearing points". Usually, but not necessarily; these socalled "bearing points" appear or can be located on the chart being used. "Observations" may be made on one, two, or three such "bearing points". Each "position fix" found using a bearing point requires two kinds of data: (1) the known, fixed position (e.g., latitude and longitude) of the bearing point itself — as found from the chart or other reference literature — and (2) the bearing and/or distance from the craft to the bearing point, as "observed".

The words " observed" and " observation" are placed in quotation marks because these "observations" are not necessarily visual. A bearing taken with compass, perlorus, radar or (as a last resort) radio direction finder (RDF) is useable to determine a line of position (LOP). A distance measured by radar, stadimeter or sextant is useable to determine a distance circle of position (COP). Bearings and distances observed by other means — for example, a range line of bearing, or a short distance measured on the chart from a buoy alongside to a bearing point — can be used also. In air navigation a somewhat different group of bearing points and observation systems is available — including, for example, a "distance-measuring equipment" (DME) radio receiver, in the so-called "TACAN" system.

Bearings are entered in three digits — for example, 030 or 153 — including the zeroes where applicable. Distances are entered in two digits on each side of the decimal point — for example, 09.10 or 13.70 — likewise including the decimal point and 1 zeroes where applicable. The apparatus automatically records time of entry of the bearing data, for a particular bearing, as the time of that bearing; and it advances LOPs by dead reckoning to take account of ship movement between bearings. The operator's procedures will be illustrated shortly, and the calculations which the apparatus performs in response are detailed in subsection 5, "Programming". The time of the fix position (that is, the calculated present position of the craft) is the time the last bearing is entered for the fix.

After the apparatus has calculated two or more fixes in succession, the apparatus proceeds automatically to calculated the effective set and drift between the two positions, and applies these calculated values as a correction to subsequent course and speed for dead-reckoning tracking.

A general description of the fix procedure will be presented first, and then a more detailed stepwise procedure. The operator selects bearing points or objects in advance, numbering them "1," "2," "3," etc., to prepare for entry into the apparatus for later use. The apparatus advantageously accepts and stores up to nine points. The operator places the apparatus in its bearing-fix mode, and the displays 31 ask whether location data are to be entered for new bearing points, and, if so, how many points. The operator enters new bearing points, if any, with their position data — replacing those points no longer needed. A new point 2, for example, is entered by "writing over" the old point 2; the latter point is automatically erased from the apparatus memory. Bearing points, unlike way points, need not be entered in the anticipated order of use.

The operator is then asked whether bearing data are ready for entry. If it is not yet time to make the bearing observations, the operator has completed bearing-mode operation for the time being. The bearing points with their position data will remain in memory until the craft moves into the area where the bearing data are to be taken.

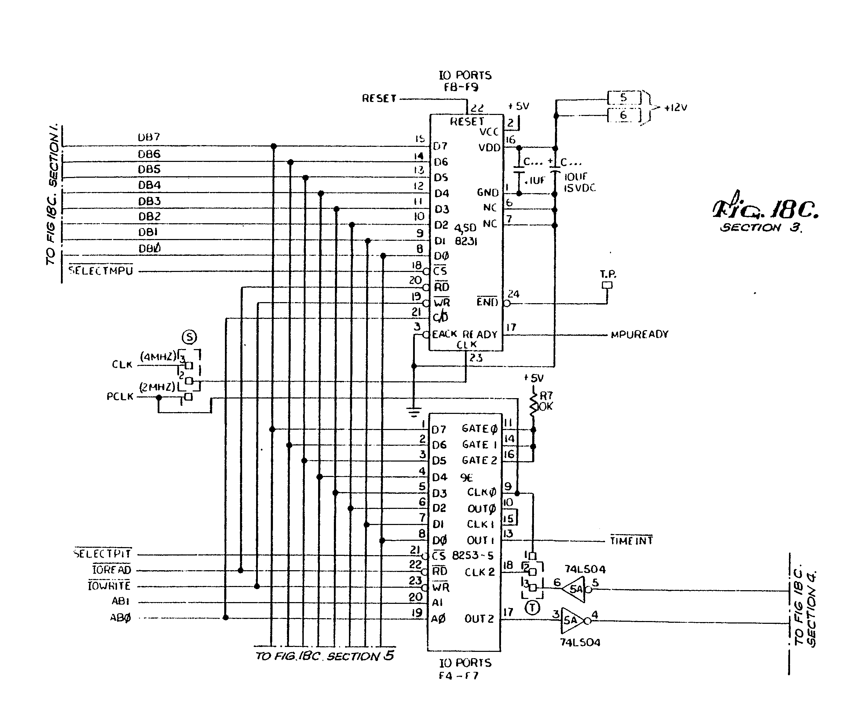

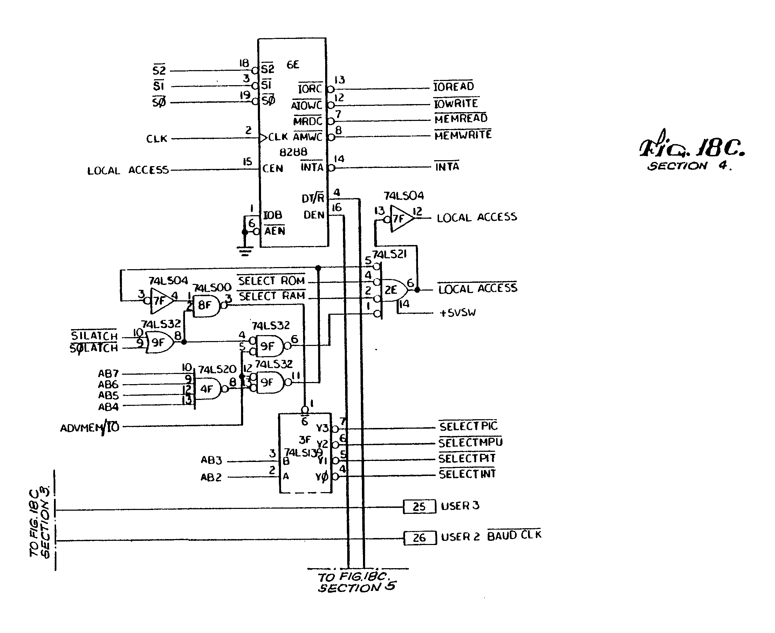

When the operator decides to make the bearing observations, he again places the apparatus in its bearing-fix mode, and the apparatus requests bearing data. The operator enters bearing (or distance) data in responses to questions in the displays, identifying each item of data with the previously entered bearing-point numbers (and therefore the corresponding position data). As data are entered, the apparatus will then calculate position fixes in this programmed order of preference: (1) bearings on two points — Fig. 21c, (2) bearings on three points — Fig. 21d, (3) bearing and distance to one point — Fig. 21a, and (4) bearing on point plus later bearing on the same point — Fig 21b.

The apparatus automatically finds the fix position (i.e., craft's calculated present position) whenever enough data are entered fór any of the above four cases. The fix position is displayed in either latitude-and-longitude or GRI-and-TD format, las determined by the display key 34 or 35 last pressed. The display blinks on and off if it was necessary for the apparatus to advance an LOP by dead reckoning for more than thirty minutes for the fix; it continues to blink until a more reliable fix is obtained.

The map transport mechanism then moves to align the calculated fix position (on the map) with the crosshairs; and from this position the craft's present location continues to be advanced by tracking in whatever mode (DR track or Loran) the apparatus was in prior to entering the bearing-fix mode — or by tracking in whatever new mode is now selected. The optional recorder, if present, automatically records fix latitude and longitude, with the corresponding bearing (and distance, if any) data and the date-time group of the fix.

The foregoing procedure will now be described in terms of keystrokes and display indications. To enter the premliminary bearing-point identification and location data, the operator touches the BRG FIX key 45, and the apparatus displays read "NEW BRG PTS?" and "ENTER Y OR N". It is assumed for the purposes of this discussion that the operator wishes to enter new bearing points with their positions; therefore the operator's appropriate response is to touch the Y (yes) key. The displays 31 will then indicate " HOW MANY PTS?" The operator touches one of the numeral keys and then the ENT key in reply, to indicate the total number of bearing points which the operator wishes to have active in the bearing-point list.

The apparatus then initiates a systematic review of all the bearing points, if any, that are already in its memory — up to the number of points just indicated. If no bearing points are in memory already, or there are some but fewer than the number of points just indicated by the operator, the apparatus will ask the operator to fill the empty memory positions as part of the "review". The review procedure is as follows.

If one or more bearing points were previously entered, the apparatus automatically operates the map transport mechanism to move the charted location of bearing-point number 1 to the crosshairs — if this bearing point is on the chart at all — and the displays 31 indicate the position coordinates for bearing-point number 1. The operator touches the MARK key 44 if point number 1 is to be kept in the list. If, however, no bearing points were previously entered, the displays indicate "MOVE TO PT 1," and the operator responds by operating the direction keys 43 to align the desired point-number-position with the crosshairs — or, if point number is off the chart, the operator keys in coordinate or GRI-and-TD data as previously described in part a -and then touches the MARK key to enter point number 1 on the list.

The apparatus then proceeds to bearing point number 2 (assuming that the operator indicated that there would be more than one point in the list), and again either presents the previously entered bearing-point location or invites the operator to "MOVE TO PT 2," depending upon whether there are previously entered data in the point number-2 memory bank. This sequence is repeated for higher-numbered points, up to the total number of active points indicated by the operator, prompting the operator to reivew and update all of the point numbers and positions in the active list of bearing points. Higher-numbered (i.e., inactive) bearing point memory locations, if any, are neither reviewed nor disturbed in this procedure.

When the last point in the active part of the list has been reviewed, the map transport mechanism returns the craft's present position to the crosshairs, and the displays indicate "BRGS?" and "ENTER Y OR N". Assuming that the operator has not yet reached the area in which the first actual bearing (or distance) measurements are to be made, the appropriate response is to key in N and ENT; the apparatus then automatically returns to whatever tracking mode was last in use.

When ready to make the actual observations, the operator again touches the BRG FIX key, and the displays again query "NEW BRG PTS?" and "ENTER Y OR N". Assuming now that the operator has now new Points to add to the list, but only wishes to make and enter the measurements, the appropriate response this time is to touch the N and ENT keys. The apparatus responds by initiating a procedure for accepting measurement data. The displays indicated "PT NO?...0", and the operator responds by touching the numeral key for the bearing point he is observing — e.g., 4 for point number 4 and then the ENT key. The displays indicate "BRG X 000000" to ask for bearing data for the selected point ("X" being the selected point number), and the operator touches the numeral keys and the ENT key to enter the bearing.

The apparatus then asks the operator whether there are data for another point, by indicating at the displays "PT NO?...0". In accordance with the order of preference listed earlier in this discussion, the apparatus does not invite entry of distance (as opposed to bearing) data unless there are bearing data for only one point. If there are bearing data for more than one point, the operator now keys in the next bearing-point number for which bearing data are available, and the display again requests the data by displaying "BRG X 000000"; the operator responds with the bearing for this point, and so forth until all bearing data have been entered. The operator then touches the ENT key. It is still assumed for purposes of this discussion that bearing data have now been entered for more than one point. The apparatus calculates a position fix (as described below with reference to Figs. 21c and 21d), completing the bearing-fix mode of operation and returning to the tracking mode previously in use.

If, however, there are bearing data for only one point, then when the operator touches the ENT key (the second time) after entering the data for that one point the display indicates "DIST 000000" — asking for a distance measurement on that one point, to complete the calculation (as described below with reference to Fig. 21a). If the distance is known the operator uses the numeral keys and the ENT key to enter the distance in nautical miles; or if the distance is not known the operator touches the ENT key again. In the latter case the display then indicates "BRG 000000" -- asking for a second bearing on the same point, to be taken later, after the craft has moved to a significantly different position, but preferably within a thirty-minute period to minimize dead-reckoning inaccuracy. When the craft has reached a suitable second position, the operator takes the second bearing on the same point and uses the numeral and ENT keys to enter the measurement. The apparatus then completes the calculation (as described below with reference to Fig. 21b), and then returns to the tracking mode previously in use.

Numerical examples of the calculations for the four types of bearing fix will now be presented. Fig. 21c illustrates a two-bearing fix in a coastal piloting situation, with bearings to be taken on a lighthouse 343 an a channel departure buoy 341. Assuming that the bearing-point position data have previously been entered, the key operation sequence is: BRG FIX (enter mode), N ENT (no new points), Y ENT (bearing data are available...), 1 ENT (... for point 1), 015 ENT (the bearing to point 1 is 015 degrees.

It is also assumed here that the last touching of the ENT key occurred at precisely 0900 hours, and that the previously entered location of bearing-point number 1 was the location of the buoy 341. Accordingly, the apparatus has now recorded the time 0900 and the fifteen degree bearing measurement in association with the buoy 341 (and its previously entered position coordinates). The geometric implication of this is that the craft has been located somewhere along the straight "line of position" (LOP) 342.

It will next be assumed that the operator prepares to take a sighting on the lighthouse 343, and that nearly ten minutes elapse before this measurement is completed. The key operation sequence now is: 3 ENT (bearing data are now available for point 3), 103 ENT (the bearing to point 3 is 103 degrees), ENT (no more bearings). It is assumed that the previously entered location of bearing-point number 3 was the location of the lighthouse 343, and that the next-to-last touching of the ENT key occurs at 0910 hours; accordingly, the apparatus has now recorded the time 0910 and the 103-degree bearing measurement in association with the lighthouse. The geometric implication of this is that the craft has been located somewhere along the straight LOP 345.

During the ten-minute interval required for the second measurement, however, the craft has moved. Although the apparatus was not previously able to compute the place along LOP 342 at which the craft was located, it is able to compute by dead reckoning the effective new position 346 of the earlier-determined LOP 342. The dashed lines 347 illustrate the DR "advance" of the LOP 342 during the interval from 0900 to 0910 hours, following the craft's motion, to new virtual LOP position 346. The geometric (or physical) significance of this is that if the craft was "somewhere along LOP 342" at 0900 hours, it must be "somewhere along LOP 346" at 0910 hours.

The apparatus is now able to calculate the craft's position as point 348, at the intersection of the dead-reckoning-advanced virtual LOP 346 and the actual LOP 345. From the direction of the dashed lines 347 it may be seen that if the apparatus did not advance the actual LOP 342 by dead reckoning, but merely treated the LOP 342 as having been taken at 0910 hours, the position at 0910 hours would be in error by distance along the projection 345′ (dashed portion) of LOP 345 to erroneous intersection point 372.

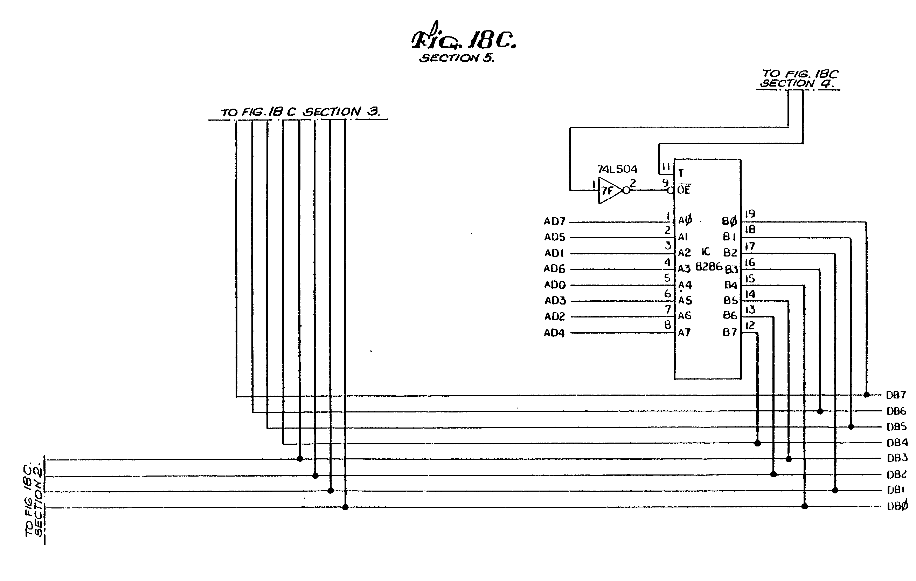

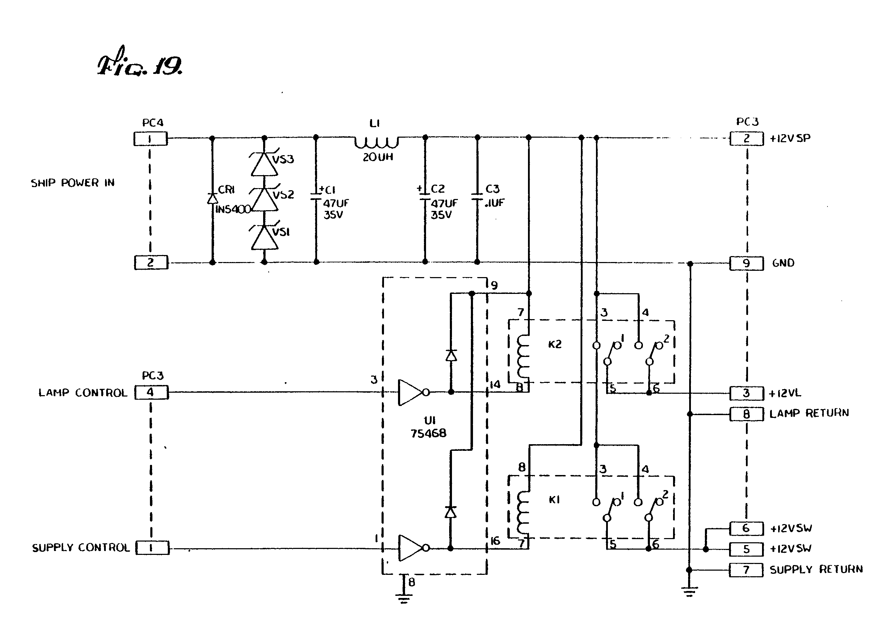

If instead the apparatus treated both measurements as having been taken at 0900 hours the position at that time would be erroneously found as point 372, in error by distance 373 (shown bracketed) along LOP 342 — the correct point at 0900 hours actually having been point 374. Such an error can be very significant, as suggested by Fig. 22, which shows the distance traveled by craft at variouls speeds for various time intervals t. Fig. 22 indicates, for example that a craft traveling at only five knots for only five minutes will travel over 700 yards — catastrophe in coastal piloting.

Fig. 21d illustrates a three-bearing fix, which has the advantage of being independent of compass error (and in fact offering an opportunity to determine the size of compass error). It is assumed that a first buoy 351 is point 1, a lighthouse 354 is point 2, and a second buoy 357 is point 3 — all with position data already entered. After measurement of the bearing to the first buoy, the operator's key operation is BRG FIX (enter mode), N ENT (no new points), Y ENT (data are available now . . .), 1 ENT (. . . for point 1), 005 ENT (the bearing to point 1 is five degrees). If that the ENT key was last touched at exactly 1600 hours, the apparatus can now determine that the craft is somewhere along LOP 352, which passes through buoy 351. The operator next takes a bearing fix on the lighthouse 354, entering: 2 ENT (point 2 is next), 050 ENT (the bearing to point 2 is fifty degrees).

If it is assumed that the ENT key was last touched at 1615 hours, the apparatus could now determine a position fix at the intersection of dashed line 353 (the DR-advanced position of LOP 352) with LOP 355 through the lighthouse 354. To keep the calculation open for the third bearing, however, the operator now refrains from touching the ENT key again (which would indicate that there were no further bearing data). Instead the operator takes a sighting on the second buoy 357, and keys: 3 ENT (point 3 is next), 094 ENT (the bearing to point 3 is ninety-four degrees), ENT (there are no more bearing data).

If it is assumed that the ENT key was next-to-last touched at 1625 hours, the apparatus calculates a position fix at the most reliable value for the intersection 362 of three lines of position: (1) LOP 358, through the second buoy 357, (2) dashed line 359, which represents the LOP 352 through the first buoy 351, but advanced by dead reckoning along the line of motion 361 during the interval from 1600 to 1625 hours, and (3) the dashed line 356, which represents the LOP 355 through the lighthouse 354, but advanced by dead reckoning along the line of motion 356, during the interval from 1615 to 1625 hours.

If the sightings were geometrically perfect, the speed and heading sensors likewise, and the effects of set and drift negligible (or perfectly compensated), then in the simplest theory the three lines 358, 359 and 356 would all pass through a single point 362. None of these theoretical assumptions is correct, of course, so the apparatus must resolve the apparent inconsistency (or "redundancy," or "overdetermination") in the data by calculations that attach various reliabilities to the LOPs 358, 359 and 356, based on the various angles between them. If desired, the assigned reliabilities could also be based on the lengths of the respective intervals during which the actual LOPs 352 and 355 were advanced by dead reckoning to obtain the virtual LOPs 359 and 356.

Fig. 21a illustrates a single-bearing-plus-distance fix, near coastline 371. It is assumed that visibilitiy is poor, radar bearings and distances are available, six bearing points are entered in the apparatus memory — including a point 2 that will not be needed -and the radar target, a lightship 331, is a new bearing point not previously entered. The operator keys: BRG FIX (enter mode), Y ENT (I have a new point), 6 ENT (there are six on the list), MARK (point 1 is unchanged), N S E W MARK 1 (replace previously point 2 with the lightship), MARK (point 5 is unchanged), MARK (point 6 is unchanged), Y ENT (I have a bearing . . .), 2 ENT (. . . on [new] point 2), 250 ENT (the bearing is 250 degrees).

The apparatus is now able only to place the craft somehwere along LOP 332, and if the ENT key was pressed at 1234 hours the apparatus is able to associate this line of position 332 with that time. The displays again query "PT NO? . . .0". The final entries must now be made promptly, since my preferred embodiment of the invention does not advance LOPs in this type (single-point, bearing and distance) of fix. The operator answers by keying in ENT (no other points have bearing data). The displays indicate "DIST 000000" — asking for a distance fix. The operator keys in 12 ENT (distance is twelve nautical miles). The apparatus now calculates the craft's present positon as the intersection 334 of LOP 332 with "circle of position" (COP) 333. Since both bearing and distance are read from the same apparatus it is easy to hold the interval between entries of the two data items to a minute or less; alternatively, if feasible, the craft can be halted, to eliminate any motion error as between the two pieces of data.

Fig. 21b illustrates a two-bearing fix on a single object — the so-called "running fix". It is assumed that the lighthouse 335 is bearing-point number 5 and that position data are already entered. The operator keys: BRG FIX (enter mode), N ENT (I have no new point), Y ENT (I now have bearing data . . .), 5 ENT (. . . for point 5), 060 ENT (the bearing is sixty degrees). The apparatus now can place the craft somewhere along LOP 336, at the time the ENT key was last touched — here assumed to be 1410 hours. As in the previous example the displays query "PT NO?...0" and the operator answers by keying ENT (no more points).

The displays indicate "DIST 000000" — asking for a distance fix as in the previous example -but now the operator answers by again keying ENT (no distance data). The displays then indicate "BEARING 000000," and the operator delays responding until the bearing on the lighthouse 354 has changed significantly — because small angles between bearings can produce a relatively uncertain position, relatively sensitive to errors in bearing measurement.

The operator must also, however, guard against accumulating too large a potential dead-reckoning error, which would arise from too large an interval between bearing measurements. As suggested in Fig. 21b, a ten-minute delay and thirty-five-degree angle between the LOPs represent a satisfactory compromise between the two potential error sources.

Thus, at 1420 hours the operator keys: 025 ENT. The apparatus now calculates present position at the intersection 340 of the new LOP 337 advanced by dead reckoning (along motion lines 339) during the interval from 1410 to 1420 hours. It will now be clear that, while the advancement of earlier LOP by dead reckoning is "merely" very important to accuracy in plural-bearing-point fixes (as discussed above with reference to Fig. 21c, and as can be understood with reference to Fig. 21d), such advancement by DR is absolutely essential to possibility of single-bearing-point, two-bearing fixes (Fig. 21b). The entire "running fix" calculation would be geometrically meaningless if the craft's motion were disregarded.

e. Loran Mode

It is assumed here that the apparatus has a suitably attached Loran receiver, and includes a suitably configured Loran Interface Module (Fig. 14, and 274 in Fig. 10). Once the operator has keyed in the Loran "group repetition interval" (GRI) for the craft's present operating area, the apparatus then continually receives Loran data for that GRI from the Loran receiver.

The apparatus evaluates Loran time differences (TDs) as they are received, assessing the distance to the corresponding Loran transmitters, the crossing angle between constant-TD lines (the conceptual equivalent of dead-reckoning LOPs and COPs), and the "station-pair baseline extension". (The latter may be thought of as the geometrical projection of a straight line between two of the Loran transmitters that produce a single TD). The apparatus automatically selects the two best TDs, based on these criteria, and then computes a position fix. If the two best TDs provide only marginal positioning accuracy, the displays 31 blink on and off while indicating the computed fix position. The apparatus calculates the Loran fix once per minute; and performs the complete evaluation, selection and computation cycle every five minutes.

The apparatus uses the Loran fix position 1 in two ways: (1) to reposition the DR track that it is maintaining, and (2) to compare with the DR track accumulated during the preceding minute, to compute the set and drift as explained in part a above. Course and speed are then automatically corrected for this up-to-date set and drift, and the corrected course and speed are used to improve all DR tracking calculations for the succeeding minute. The Loran fix position and the thus-updated set and drift are also used to display (or provide to an autopilot) a set-and-drift compensated "course to steer," as previously explained. Since this "course to steer" is updated each minute, both as to desired track and as to set and drift, the actual course made good over the bottom will be almost exactly a beeline for the next way station. This operation will be illustrated shortly.

(For best accuracy over very long distances, the apparatus should be programmed to project "course to steer" along "great circle" routes. Equations for this purpose are available in the literature; however, this type of calculation is not required for practice of my invention under more typical circumstances and will not be discussed further here.)

To initiate the Loran mode, the operator verifies that the Loran receiver is properly connected, set to the GRI for the intended operating area, and tracking; and then touches the Loran key 1 47 (Fig. 2). The operator next touches the GRI/TD key 35, to verify that the GRI stored in the apparatus is the correct one for the operating area. If the displayed value is not the correct one, the operator keys in "f GRI/TD" and then enters the desired GRI using four digits and the ENT key. The operator watches the displayed TDs for a while to ensure that the Loran receiver is settled in its operation, and then enters present position by performing function f0, "enter present position", described in part a above -thus giving the DR calculations a suitable starting point.

If the apparatus is receiving only one TD, or none, no Loran operation is possible, and the displays 31 indicate "RECEIVER ON?" If two TDs are received, and they are in combination satisfactory for a fix, the apparatus determines and displays latitude and longitude each minute and uses the results as previously described; if the two TDs only permit a fix of marginal accuracy, operation is the same except that the displayed coordinates are shown blinking on and off. If three, four or five TDs are received, the apparatus selects the two best TD values for accurate results and then proceeds in the same way as when only two values are received.

f. Piloting Effectiveness; Fuel and Time Efficiency

The apparatus of my invention is useful in helping to guide — or in guiding — a craft to its way points and destination, not only with greater certainty but also more directly. As previously suggested, the preferred embodiment aids the operator in refining whatever knowledge is available about heading, speed, set, drift, and "course to steer".

If only manually observed or estimated values are available for these parameters, the apparatus helps the operator to make the most of them, by relating the estimates to bearing fixes and thereby progressively improving the estimates. If automatic heading and speed sensors are available, the resulting inherent improvements in certainty and convenience are positively enhanced by the apparatus of my invention, which uses the automatically obtained information, in conjunction with bearing fixes, to derive quite good values for set and drift — and then to apply these values to obtain both heading-and-speed data and a "course to steer" that are set-and-drift compensated to a much better approximation than would be possible with either other automatic sensors alone or the apparatus of my invention alone.

When Loran capacity is added to this combination, an additional quantum step in piloting efficacy is obtained. Since accurate Loran fixes can be obtained automatically, and therefore quite frequently, the set-and-drift compensation for both the heading-and-speed calculation and the "course to steer" can be updated on virtually an instantaneous basis. The Loran fixes are also available to update the desired track on the same virtually instantaneous basis. The overall result is a "course to steer" that is set-and-drift compensated to a much better approximation than possible with either (1) the Loran system alone or (2) the combination, considered alone, of the apparatus of my invention with the automatic speed and heading sensors. As will be shown in the following paragraphs, the sophistication and power of this overall system permit extremely beneficial economies of fuel and time.

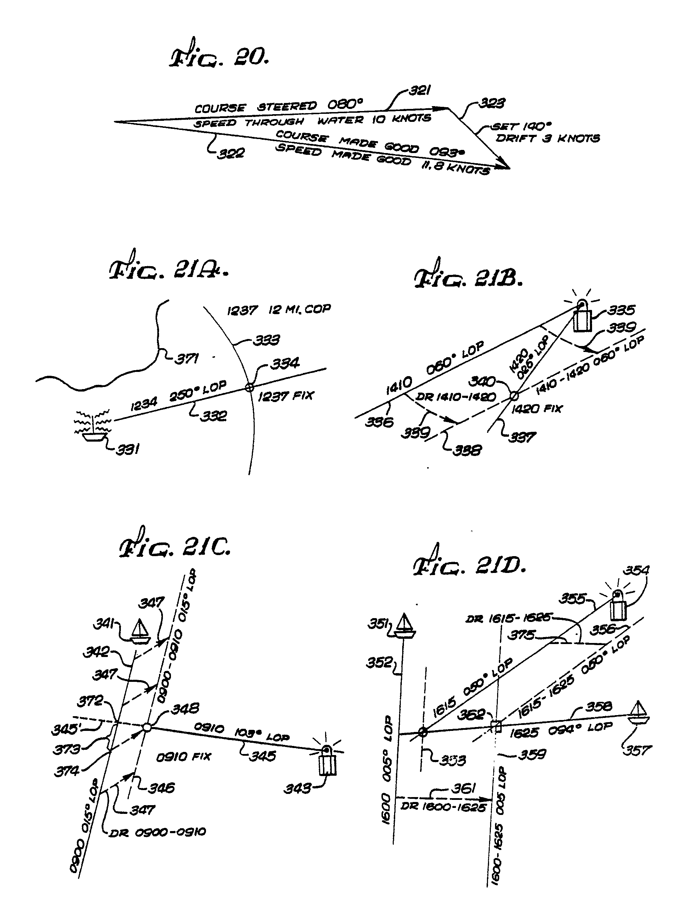

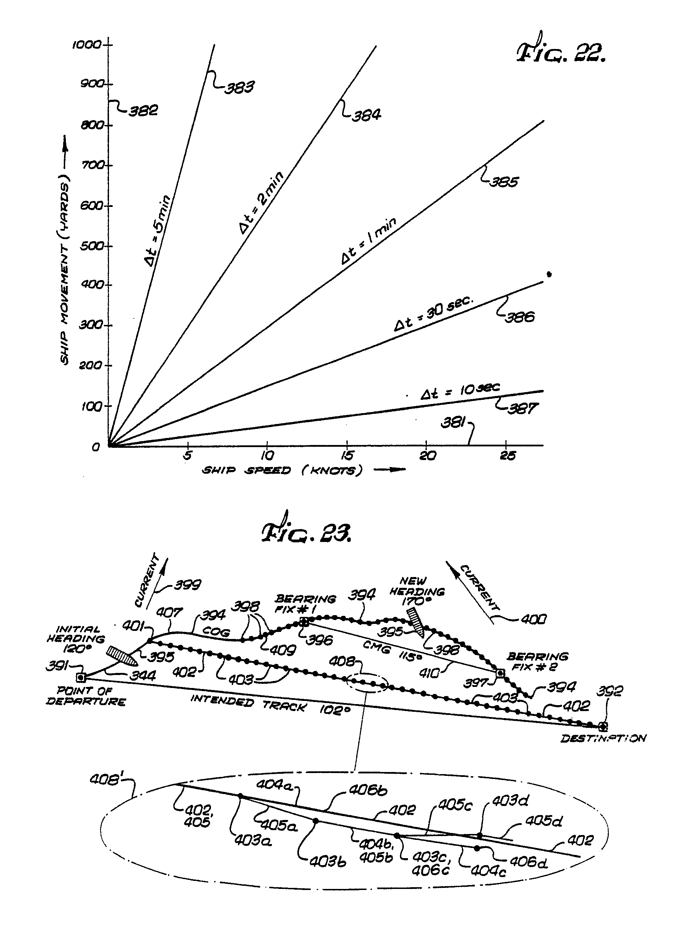

Fig. 23 illustrates some of the levels in the spectrum of capabilities just outlined. It is supposed that a craft sets out from departure point 391 intending to travel as directly as possible to destination point 392. The current 399 near the departure point is known to be generally northerly, but neither the exact set nor the exact drift is known — and in fact the actual values vary over the intended course, with a more westerly deflection arising nearer the destination point as shown at current vector 400. The navigator determines from charts that the bearing of destination point 392 from the point of departure is 102 degrees; this is the direction for the desired track 393.

It is assumed first that the apparatus of my invention is not available. The navigator calls for an initial heading or "course to steer" of 120 degrees, in hopes of compensating for the known northerly current 399. This estimate of the necessary compensation, however, is in fact inadequate, and the craft is carried northerly from the intended track, along the actual course over ground (COG) 394. (In the drawing the north-south directions are slightly exaggerated relative to the east-west directions, for purposes of explanation.) The navigator nevertheless maintains the initial heading of 120 degrees, as indicated by the heading symbol at 395, until visual sightings and manual computations and plotting provide an alert to the erroneous course. This modus operandi is rather primitive, even using good modern charts and hand computing aids, by comparison with the other capabilities discussed here.

Using these manual methods, the navigator may find, when first able to take a bearing fix at point 396, that the craft has been swept far north of the intended track. A new heading or "course to steer" of 170 degrees, as at point 395, may be adopted in an effort to direct the craft once again toward the destination point 392. The navigator is unable to tell whether this corrective maneuver is of the appropriate magnitude until another bearing fix at point 397 becomes available. As it appears from the course over ground, the heading has this time been more auspiciously selected, and the craft appears to be traveling in the right direction, but the obvious wanderings along the way can be extremely expensive in terms of fuel, crew and equipment time, and consequently money. The energy waste alone, under modern conditions of international energy constraints, is highly significant.

Due to the availability of only two bearing points along the way, even with automatic speed and heading sensors the navigator would be hard put to make good use of the two bearing fixes in any other way than to realize that the craft is generally off course. The course made good (CMG) 410 between the two fix points is determinable to no greater accuracy than the 115-degree directed straight line joining the two points 396 and 397, obviously very different from the actual COG 394 between the two points.

Now let it be assumed instead that the navigator has automatic sensors and the preferred embodiment of my invention, but without Loran, and let it be still assumed that the initial heading, as at 395, is 120 degrees. Let the north-south scale exaggeration of Fig. 23 be taken now as considerably greater than for the previous discussion of operation without the apparatus of my invention, so that the same drawing can be used for this case too. Bearing fixes taken (but not illustrated) easily and quickly on shore points near the point of departure 391 will soon permit the navigator to determine quite accurately the set and drift of current 399. Using these data the navigator can systematically reset the heading or "course to steer" near point 407 to take up a more easterly COG. A significant saving of time, fuel, and money has already been achieved. At point 409, however, the craft begins to colme under the influence of the more-westerly current 400, and the COG again swings northward. The navigator is unaware of this until a "running fix" (Fig. 21b) at point 396 makes it clear that the dead reckoning has been slightly inaccurate. Assuming that there is no other bearing point in the vicinity of point 396, it can further be supposed that the navigator takes another running fix on the same bearing point after a few minutes, obtaining an updated value for the set and drift near point 396.

As the craft travels eastward, however, the influence of the strong northwestward current 400 increases, and the craft continues to move northerly of the desired track. If the navigator suspects this, he may attempt to compensate — but without knowing exactly how much — by taking a new heading at point 395. Not until the fix at point 397 is taken can be the navigator get an idea of the CMG 410 between points 396 and 397. As noted above, this CMG is a rough approximation for the actual COG 394 between the same point — but this is the very best that can be hoped for, where current set is varying strongly with position and there are few bearing points available. Under such conditions, even the apparatus of my invention cannot produce highly accurate DR tracking without reasonably frequent data inputs. As already indicated, however, the improvement relative to manual methods or even prior instrumentation is substantial. At point 397 the navigator can again confidently (rather than by auspicious selection as before) set "course to steer" for the destination point 392.

It will next be assumed that the craft also has a Loran receiver and interface, and for purposes of discussion it will be assumed that those units are activated during the journey just to the left of point 409, and that Loran fixes are taken at each of the marked points 398. Limiting the discussion first to the matter of merely determining position, the Loran fixes taken at points 398 permit the operator to see the position of the craft, and visualize the COG, precisely as it appears at curving line 394. The Loran fixes are sufficiently frequent that any differences between COG and CMG between fix points are completely insignificant.

These discussion assumptions, however, are very unrealistic, for the navigator would not want to limit use of the system to providing an accurately scaled down view of the meandering COG shown at 394. Rather the navigator would be intent upon using the system to set a "course to steer" that would carry the craft as directly as possible to the destination point 392. In the diagram it is supposed that the navigator initiates this alternate mode of operation at point 401. The result be a nearly perfect straight COG 402, guided by Loran fixes 403 at regular intervals along the way.

Area 408, along the straight course 402, is shown greatly expanded within the enclosed area 408', to illustrate more specifically the iterative compensations of course provided by the system. In the expanded drawing, line 402 represents the ideal straight course, and line segments 405, 405a, etc. through 405d represent the actual COG. Points 403a, etc. are Loran fix points, and points 406b, etc. are positions predicted by dead reckoning. The line segments 404a, etc. represent the track predicted by Dr. It will be assumed that the craft position at 403a happens to be exactly on the desired track 402, and the "course to steer" extends directly along the desired track. When the next Loran fix is taken at point 403b, however, it will be discovered that — although the DR track 404a has brought the DR-calculated position of the craft to point 406b, precisely along the desired track 402 as predicted by the "course to steer" setting called for — the Loran fix produces a position 403b that is very slightly south of the DR position 406b.

This slight discrepancy, due principally to local variation in the ocean currents, causes the apparatus automatically to decrease very slightly its calculated value of northerly drift. This adjustment, plus the very slight change in bearing of the destination point, results in redirecting the "course to steer" slightly aiming for the path 404b. It is assumed that along this leg of the travel the set and drift values are extremely close to the calculated values as just adjusted, so the COG line segment 405b lies almost perfectly along the desired track 404b. Accordingly, when the next Loran fix is taken at point 403c, and compared with the DR-predicted position 406c, it is found that the two points are vitually identical. This implies that the DR-track line segment 404b is practically congruent with the COG line segment 405b.

This being the case, no change is made in the "course to steer" — which is set to produce travel along line segment 404c. The DR calculations, therefore, predict travel along line segment 404c to point 406d at the time of the next Loran fix. Another local variation in set and drift, however, swings the course northerly along COG line segment 405c to Loran fix point 403d. Comparison of points 403d and 406d automatically by the apparatus once again revises the calculated set and drift values, and the "course to steer" is therefore reoriented to move the craft along line 405d. Even with the very extreme exaggeration of north-south excursions relative to east-west travel in the expanded area 408 of Fig. 23, the COG segments 405a, 405b, 405c and 405d are all rather closely parallel to the desired straight track 402; and the actual Loran-fix positions 403a, 403b, 403c and 403d are all extremely close to the desired track 402. The lateral excursions are in fact negligible, resulting in very significant fuel, time and money economies.

As described in detail above, the practice of my invention requires reduction to mathematical methods of certain navigational operations that have traditionally been performed using graphical methods. Sufficient details are presented here to enable persons skilled in the computer-programming art to accomplish this task.

**Claims**

1 A navigational aid apparatus, for use by a human operator aboard a craft that is adapted for motion to change its own position with respect to earth-surface position coordinates in conjunction with a miniaturized optically projectable map (21) of portions of the earth's surface to be traversed by the craft, said portions of the earth's surface including as particular fixed points of interest origin, destination, and way stations, and also including as particular variable points of interest the craft's present position, said map (21) providing a scaled representation of a geographical area and including at least two calibration indicia at respective positions on said map corresponding to predetermined known coordinates, the apparatus including a map carriage (130) for receiving and movably supporting such map; an optical projection system having an optical projection screen (15), a position-marking indicium (16) fixed with respect to the screen, and an optical projection system (61, 62, 64, 71, 91, 119) for displaying selected portions of such a map, when supported in the map carriage, on the screen for viewing by such human operator; map transport means having a powered, precision-stepping transport mechanism (151), 137) for moving the carriage relative to the displayed points of interest on such map into alignment with the screen indicium (16) in accordance with applied transport control signals and thereby to select surrounding portions of such map for display on the screen; and a dedicated digital solid-state electronic computer (279, 273) adapted and programmed to receive and store data relating to such map, to particular points of interest, and to such craft's motion relative to earth-surface position coordinates and to receive from such human operator information selecting a single point of interest for alignment with the indicium, to compute earth-surface position coordinates for particular points of interest, subject to the accuracy of the data received to compute a transport-mechanism position at which the displayed single point of interest selected by the human operator is aligned with the screen indicium, and to generate and direct to the transport mechanism stepping control signals as said applied transport control signals causing the transport mechanism to move to the position thus computed, whereby the displayed single point of interest selected by the operator is automatically and continuously held at the fixed indicium on the screen; said apparatus being characterized by:

map scale calibration means (42, 43, 44) for moving said calibration indicia to a predetermined position within said projection system and for then coordinating said known coordinates with the position of the map transport means to derive calibration data used in thereafter generating transport control signals; and

said computer (279, 273) including transport drive means for generating said transport control signals in accordance with said calibration data and in accordance with supplied craft position data to vary said map position relative to said projection means in accordance with the geographic position of said craft.

2. Apparatus according to claim 1 wherein said map scale calibration means and said transport drive means comprise a common processor means (279, 273), responsive to said supplied craft position data and to supplied desired point data for generating course signals indicative of the course required to steer said craft to said desired point.

3. Apparatus according to claim 1 wherein said transport drive means (279, 273) includes dead reckoning means responsive to said craft position data and to input signals (251, 252) indicative of at least two of heading, speed, set and drift parameters related to the craft's travel for generating signals indicative of calculated updated craft present position data.

4. Apparatus according to claim 3 wherein said transport drive means (279, 273) includes processor means responsive to said calculated updated craft present position data and to signals (253) indicative of the actual course made good by said craft for generating said input signals indicative of set and drift parameters and for also updating said craft present position data in accordance with said actual course made good.

5. Apparatus according to claim 4 wherein said transport drive means includes means (274) responsive to signals indicative of Loran fixes for generating said input signals indicative of the actual course made good.

6. Apparatus according to claim 4 wherein said transport drive means includes means (253, 274) responsive to input signals indicative of bearing fixes for generating said input signals indicative of the actual course made good.

7. Apparatus according to claim 2 wherein said transport drive means is responsive to input signals indicative of bearing fixes for generating input signals indicative of the actual position of said craft as said supplied craft position data.

8. Apparatus according to claim 1 wherein said map includes a plurality of said calibration indicia and wherein said apparatus further comprises means for storing reference data including the coordinates of said calibration indicia.

9. Apparatus according to claim 8 wherein said reference data includes the coordinates of a plurality of calibration indicia on said map and magnetic variation data in respect of at least a portion of said geographical area.

10. Apparatus according to claim 9 wherein said map includes said calibration indicia at two corners of said map.

11. Apparatus according to any preceding claim wherein said optically projectable map comprises a film transparency (21) and wherein said map transport means includes a film mount (22) adapted to receive said map and a carriage mechanism (130) for removably receiving said film mount and for controllably effecting relative movement between said film mount and said optical projection system, said film mount comprising:

first and second outer frames (22A, 22B), each including a cut out portion (27A, 27B), a transparent glass sheet (227) disposed in each frame covering said cut out portion and chart locating projections disposed to align said film transparency with respect to said cut out portion; and

means (25A, 23A, 24B) for securing said frames together with said film transparency sandwiched therebetween in alignment and therewith viewable through said cut out portion.

**Patentansprüche**

1. Navigationsgerät zur Benutzungung durch eine menschliche Bedienungsperson an Bord eines Fahrzeugs, das zu einer Bewegung zum Ändern seiner eigenen Lage im Bezug auf Positionskoordinaten der Erdoberfläche eingerichtet ist, in Verbindung mit einer miniaturisierten, optisch projektierbaren Karte (21) von Abschnitten der Erdoberfläche, die vom Fahrzeug durchquert Werden sollen, wobei die Abschnitte der Erdoberfläche als spezielle, feste, interessierende Punkte Ausgangspunkt, Zielpunkt und Streckenstationen aufweisen und auch als spezielle variable, interessierende Punkte die gegenwärtige Position des Fahrzeugs aufweisen, wobei die Karte (21) eine maßstäbliche Darstellung eines geographischen Bereichs vorsieht und mindestens zwei Eichmarken an jeweiligen Lagen an der Karte aufweist, die bestimmten bekannten Koordinaten entsprechen, und wobei das Gerät einen Kantenwagen (130) aufweist, um eine solche Karte aufzunehmen und beweglich zu tragen; einem optischen Projektionssystem mit einem optischen projektionsschirm (15), einer die Position markierenden Anzeige (16), die in Bezug auf den Schirm festliegt, und einem optischen Projektionssystem (61, 62, 64, 71, 91, 119) zum Anzeigen ausgewählter Abschnitte einer solchen Karte, wenn sie im Kartenwagen getragen ist, auf dem Schirm zur Betrachtung durch eine solche menschliche Bedienungsperson; einer Karten-Transporteinrichtung mit einem angetriebenen Präzisionsschritt-Transportmechanismus (151, 137) zum Bewegen des Wagens relativ zu den angezeigten interessierenden Punkten auf einer solchen Karte in Ausrichtung auf die Anzeige (16) des Schirms in Übereinstimmung mit zugeführten Transport-Steuersignalen und hierdurch zum Wählen umgebender Abschnitte einer solchen Karte zur Anzeige auf den Schirm; und einem digitalen, von einem integrierten Schaltkreis gebildeten, elektronischen Spezialcomputer (279, 273), der dazu eingerichtet und programmiert ist, Daten aufzunehmen und zu speichern, die eine solche Karte, spezielle interessierende Punkte und eine solche Fahrzeugbewegung relativ zur Positionskoordinaten der Erdoberfläche betreffen, und von einer solchen menschlichen Bedienungsperson Information aufzunehmen, die einen einzigen interessierenden Punkt zur Ausrichtung auf die Anzeige auswählt, um positionskoordinaten der Erdoberfläche für spezielle interessierende Punkte zu errechnen, in Abhängigkeit von der Genauigkeit der empfangenen Daten eine Lage des Transportmechanismus zu errechnen, bei Welcher der angezeigte einzelne, interessierende Punkt, der von der menschlichen Bedienungsperson ausgewählt wurde, auf die Anzeige des Schirms ausgerichtet ist, und Schritt-Steuersignale zu erzeugen und zum Transportmechanismus zu leiten, wenn die angelegten Transport-Steuersignale den Transportmechanismus veranlassen, sich zur somit errechneten Lage zu bewegen, wobei der angezeigte einzelne, interessierende Punkt, der von der Bedienungsperson aus gewählt wurde, automatisch und ständig an der festen Anzeige auf dem Schirm gehalten wird, wobei das Gerät gekennzeichnet ist durch

eine Kartenmaßstab-Eicheinrichtung (42, 43, 44) zum Bewegen der Eichmarken zu einer bestimmten Lage innerhalb des projektionssystems und zum nachfolgenden Koordinieren der bekannten Koordinaten mit der Lage der Karten-Transporteinrichtung, um Eichdaten abzuleiten, die bei den nachfolgend erzeugten Transport-Steuersignalen verwendet Werden, und

der Computer (279, 273) weist eine Transport-Antriebseinrichtung zum Erzeugen der Transport-Steuersignale in Übereinstimmung mit den Eichdaten und in Übereinstimmung mit zugeführten Daten über die Position des Fahrzeugs auf, um die Lage der Karte relativ zur Projektionseinrichtung in Übereinstimmung mit der geographischen Lage des Fahrzeuges zu ändern.

2. Gerät nach Anspruch 1, wobei die Kartenmaßstab-Eicheinrichtung und die Transport-Antriebseinrichtung eine gemeinsame Datenverarbeitungseinrichtung (279, 273) aufweisen, die auf die zugeführten Daten über die Position des Fahrzeugs und die zugeführten Daten über den gewünschten Punkt anspricht, um Kurssignale zu erzeugen, die für den Kurs repräsentativ sind, der erforderlich ist, um das Fahrzeug zum gewünschten Punkt zu steuern.

3. Gerät nach Anspruch 1, wobei die Transport-Antriebseinrichtung (279, 273) eine Koppeleinrichtung aufweist, die auf die Positionsdaten des Fahrzeugs und auf Eingangssignale (251, 252) anspricht, die repräsentativ für mindestens zwei Pparameter von Kursparameter, Geschwindigkeitsparameter, Strömungsrichtungsparameter und Abdriftparameter sind, welche sich auf die Fahrt des Fahrzeugs beziehen, um Signale zu erzeugen, die repräsentativ sind für die errechneten, aktualisierten Daten über die gegenwärtige Pposition des Fahrzeugs.

4. Gerät nach Anspruch 3, wobei die Transport-Antriebseinrichtung (279, 273) eine Datenverarbeitungseinrichtung aufweist, die auf die errechneten, aktualtisierten Daten über die gegenwärtige Position des Fahrzeugs und auf Signale (253) anspricht, die repräsentativ sind für den tatsächlichen Kurs, der vom Fahrzeug zurückgelegt wurde, um die Eingangssignale zu erzeugen, die repräsentativ sind für den Strömungsparameter und den Abdriftparameter, und um auch die Daten über die gegenwärtige Position des Fahrzeugs in Übereinstimmung mit dem tatsächlich zurückgelegten Kurs zu aktualisieren.

5. Gerät nach Anspruch 4, wobei die Transport-Antriebseinrichtung eine Einrichtung (274) aufweist, die auf Signale anspricht, die repräsentativ sind für Loran-Festpunkte, um die Eingangssignale zu erzeugen, die repräsentativ sind für den tatsächlich zurückgelegten Kurs.

6. Gerät nach Anspruch 4, wobei die Transport-Antriebseinrichtung eine Einrichtung (253, 274) aufweist, die auf Eingangssignale anspricht, die repräsentativ sind für Peilfestpunkte, um die Eingangssignale zu erzeugen, die repräsentativ sind für den tatsächlich zurückgelegten Kurs.

7. Gerät nach Anspruch 2, wobei die Transport-Antriebseinrichtung auf Eingangssignale anspricht, die repräsentativ sind für Peil-Festpunkte, um Eingangssignale zu erzeugen, die repräsentativ sind für die tatsächliche Position des Fahrzeugs als zugeführte Daten über die Position des Fahrzeugs.

8. Gerät nach Anspruch 1, wobei die Karte eine Anzahl von Eichmarken aufweist und wobei das Gerät ferner eine Einrichtung aufweist, um Bezugsdaten zu speichern, Welche die Koordinaten der Eichmarken umfassen.

9. Gerät nach Anspruch 8, wobei die Bezugsdaten die Koordinaten einer Anzahl von Eichmarken auf der Karte und magnetische Variationsdaten in Bezug auf mindestens einen Teil des geographischen Bereichs aufweisen.

10. Gerät nach Anspruch 9, dadurch gekennzeichnet, daß die Karte die Eichmarken an zwei Ecken der Karte aufweist.

11. Gerät nach jedem vorangehenden Anspruch, wobei die optisch projizierbare Karte ein Film-Transparentbild (21) aufweist, und wobei die Karten-Transporteinrichtung einen Filmträger

(22) aufweist, der dazu eingerichtet ist, die Karte aufzunehmen, sowie einen Wagenmechanismus (130), um den Filmträger abnehmbar aufzunehmen und um die Relativbewegung zwischen dem Filmträger und dem optischen Projektionssystem steuerbar zu bewirken, wobei der Filmträger die folgenden Merkmale aufweist:

ein erster und zweiter Außenrahmen (22A, 22B), die jeweils einen ausgeschnittenen Abschnitt (27A, 27B), eine transparente Glasplatte (227), die in jedem Rahmen angeordnet ist und den ausgeschnittenen Abschnitt abdeckt, und Karten-Positionierungsvorsprünge aufweist, die so angeordnet sind, daß sie das Film-Transparentbild in Bezug auf den ausgeschnittenen Abschnitt ausrichten, und

eine Einrichtung (25A, 23A, 24B), um die Rahmen gemeinsam mit dem Film-Transparentbild, das zwischen ihnen sandwichartig eingeschlossen ist, in Ausrichtung und hiermit durch den ausgeschnittenen Abschnitt sichtbar zu befestigen.

**Revendications**

1. Appareil d'aide à la navigation pour emploi par un opérateur à bord d'un engin qui est adapté au mouvement en vue d'une modification de sa position par rapport à des coordonnées de position de surface de la terre en conjonction avec une carte miniaturisée (21) pouvant être projetée optiquement de parties de la surface de la terre devant être traversées par l'engin, lesdites parties de la surface de la terre comprenant, en tant que points fixes particuliers d'intérêt l'origine, la destination et les stations en route, et comprenant aussi en tant que points fixes variables particuliers d'intérêt la position actuelle de l'engin, ladite carte (21) fournissant une représentation à une certaineéchelle d'une région géographique, et comprenant au moins deux repères d'étalonnage en des emplacements respectifs sur ladite carte correspondant à des coordonnées connues prédéterminées, l'appareil comprenant un chariot pour carte (130) pour la réception et le support mobile de ladite carte; un système de projection optique ayant un écran de projection optique (15), un repère d'indication de position (16) fixe par rapport à l'écran, et un système de projection optique (61, 62, 64, 71, 91, 119) pour la visualisation de parties sélectionnées d'une telle carte, lorsqu'elle est soutenue dans la chariot pour carte, sur l'écran pour examen par ledit opérateur; un moyen de transport de carte doté d'un mécanisme de transport mécanisé (151, 137) à mouvement pas à pas de précision pour le déplacement du chariot par rapport aux points d'intérêt visualisés sur ladite carte en alignement sur le repère d'écran (16) conformément à des signaux de commande de transport appliqués, et par ce moyen sélectionner des parties environnantes de ladite carte pour visualisation sur l'écran; et un ordinateur numérique électronique monolithique spécialement affecté (279, 273) adapté et programmé pour recevoir et enregistrer les données se rapportant à ladite carte, à des points d'intérêt particuliers, et au mouvement dudit engin par rapport à des coordonnées de position de surface de terre, et pour recevoir dudit opérateur des informations sélectionnant un point unique d'intérêt pour alignement sur le repère, pour calculer les coordonnées de position de surface de terre pour des points d'intérêt particuliers, sujet à la précision des données reçues pour calculer une position de mécanisme de transport à laquelle le point unique d'intérêt visualisé choisi par par l'opérateur est aligné sur le repère d'écran, et pour produire et diriger vers le mécanisme de transport des signaux de commande pas à pas en tant que lesdits signaux de commande de transport appliqués occasionnant le déplacement du mécanisme de transport vers la position ainsi calculée, à la suite de quoi le point unique d'intérêt visualisé choisi par l'opérateur est maintenu de manière automatique et continue au repère fixe sur l'écran, ledit appareil étant caractérisé par

des moyens d'étalonnage d'échelle de carte (42, 43, 44) pour déplacer lesdits repères d'étalonnage vers une position prédéterminée endéans dudit système de projection et pour ensuite coordonner lesdites coordonnées connues avec la position du moyen de transport de carte pour dériver des données d'étalonnage utilisés afin de produire par la suite des signaux de commande de transport; et ledit ordinateur (279, 273) comprenant un moyen de commande de transport pour produire lesdits signaux de commande de transport conformément auxdites données d'étalonnage et conformément avec des données de position d'engin fournies pour modifier la position de ladite carte par rapport audit moyen de projection conformément avec la position géographique dudit engin.

2. Appareil conformément à la revendication 1 caractérisé en ce que lesdits moyens d'étalonnage d'échelle de carte et ledit moyen de commande de transport comprennent un moyen de traitement commun (279, 273) répondant auxdites données de position d'engin fournies et aux données de point désiré fournies pour produire des signaux de parcours indiquant le parcours devant être suivi pour diriger ledit engin vers ledit point désiré.

3. Appareil selon la revendication 1 caractérisé en ce que ledit moyen de commande de transport (279, 273) comprend un moyen d'estime répondant auxdites données de position d'engin et à des signaux d'entrée (251, 252) indiquant au moins deux des paramètres de cap, vitesse, assiette et dérive en rapport avec le parcours de l'engin pour produire des signaux indiquant des données de position actuelle de l'engin calculées actualisées.

4. Appareil selon la revendication 3 caractérisé en ce que ledit moyen de commande de transport (279, 273) comprend un moyen de traitement répondant auxdites données de position actuelle de l'engin calculées actualisées et à des signaux (253) indiquant le parcours effectif mis à profit par ledit engin pour produire lesdits signaux d'entrée indiquant les paramètres d'assiette et de dérive et aussi pour actualiser les données de position actuelle de l'engin conformément audit parcours effectif accompli.

5. Appareil selon la revendication 4 caractérisé en ce que ledit moyen de commande de transport comprend des moyens (274) répondant à des signaux indiquant des points Loran pour produire lesdits signaux d'entrée indiquant le parcours effectif accompli.

6. Appareil selon la revendication 4 caractérisé en ce que ledit moyen de commande de transport comprend des moyens (253, 274) répondant à des signaux d'entrée indiquant des points de relèvement pour produire lesdits signaux d'entrée indiquant le parcours effectif accompli.

7. Appareil selon la revendication 2 caractérisé en ce que ledit moyen de commande de transport répond à des signaux d'entrée indiquant des points de relèvement indiquant la position effective dudit engin en tant que dites données de position d'engin fournies.

8. Appareil selon la revendication 1 caractérisé en ce que ladite carte comprend une pluralité desdits repères d'étalonnage et en ce que ledit appareil comprend en outre des moyens d'enregistrement de données de référence y compris les coordonnées desdits repères d'étalonnage.

9. Appareil selon la revendication 8 caractérisé en ce que lesdites données de référence comprennent les coordonnées d'une pluralité de repères d'étalonnage sur ladite carte et des données de variation magnétique à l'égard d'au moins une partie de ladite région géographique.

10. Appareil selon la revendication 9 caractérisé en ce que ladite carte comprend lesdits repères d'étalonnage en deux coins de ladite carte.

11. Appareil selon toute revendication précédente caractérisé en ce que ladite carte projetable optiquement comprend une diapositive (21) sur film et en ce que ledit moyen de transport de carte comprend une monture film (22) conçue pour recevoir ladite carte et un mécanisme à chariot (130) pour recevoir amoviblement ladite monture film et pour effectuer de manière contrôlée un mouvement relatif entre ladite monture film et ledit système de projection optique, ladite monture film comprenant:

des premiers et deuxièmes cadres extérieurs (22A, 22B) comprenant chacun une partie découpée (27A, 27B), une feuille de verre transparente (227) placée dans chaque cadre recouvrant ladite partie découpée et des projections de positionnement de carte disposées pour aligner ladite diapositive sur film par rapport à ladite partie découpée, et

des moyens (25A, 23A, 24B) pour fixer lesdits cadres ensemble avec ladite diapositive sur film en sandwich en alignement, et ainsi visualisable par ladite partie découpée.

*Fig. 1.*

*Fig. 2.*

Fig. 3.

Fig. 4.

*Fig. 5.*

*Fig. 6.*

*Fig. 7.*

*Fig. 8.*

*Fig. 9.*

Fig. 10.

0 078 624

271 KEYBOARD MODULE (FIG.II.) AT CONTROL PANEL

270

MASTER PROCESSOR MODULE (FIGS 18A-C) 279

ALPHANUMERIC DISPLAY MODULE (FIG.12) AT CONTROL PANEL

SELF-CONTAINED UNIT

BUS MODULE (FIG. 17.) AND DATA ADDRESS BUS GENERALLY

286 VIA DISPLAY MODULE

SLAVE PROCESSOR MODULE (FIGS. 13A-C) 273

294

272

DOPPLER OR ELECTROMECHANICAL

281 SPEED LOG

251

SPEED LOG AND GYROCOMPASS INTERFACE (NOT SHOWN) 275

278 287

277

295 297 306

137

STEPPER MOTORS (FIG.5.)

281A

COMPASS 252 282 262A 282A 278

298 151

296

VISUAL CHART DISPLAY (FIG 4 & 5)

261 CHART RECORDER

282 B MAGNETIC

281 B PADDLE WHEEL

299

X

LORAN-C RECEIVER

LORAN-C INTERFACE (FIG 14.) 274

288

INPUT/ OUTPUT MODULE (FIGS 16A-B)

301

Y

302

262 LOGGING PRINTER

283

292

PERSONALITY MODULE (FIG.15.) 276 293

291

303

AUTOPILOT 263

SHIPS POWER 284 289 POWER CONTROL AND MONITORING MODULE (FIG.19 305

253

254

**Fig. 11.**

| SECTION 1. | SECTION 2. |
|---|---|
|  |  |

**Fig. 11.**
**SECTION 1.**

INDIVIDUAL KEYS

NORTH

NORTH [ 7 ]

SOUTH

SOUTH [ 23 ]

EAST

EAST [ 17 ]

WEST

WEST [ 16 ]

COMMON 1 [ 10 ]

PWR ON

POWER ON [ 22 ]

SCREEN ON

SCREEN. ON [ 21 ]

COMMON 2 [ 34 ]

FUNCTION

FUNCTION [ 12 ]
[ 15 ]

EXTRA 1

EXTRA 1 [ 26 ]
[ 28 ]

EXTRA 2

EXTRA 2 [ 25 ]
[ 29 ]

EXTRA 3

EXTRA 3 [ 24 ]
[ 30 ]

DEAD 1

DEAD 1 [ 9 ]

DEAD 2

DEAD 2 [ 6 ]

COMMON 4 [ 5 ]

DEAD 3

DEAD 3 [ 20 ]

DEAD 4

DEAD 4 [ 27 ]

COMMON 5 [ 18 ]

**0 078 624**

Fig. 11.
SECTION 2.

8

Fig. 12.

| SECTION 1 | SECTION 2 |
|-----------|-----------|
| SECTION 3 | SECTION 4 |

Fig. 12.
SECTION 1.

Fig. 12.
SECTION 2.

*Fig. 12.*
SECTION 3.

LED ARRAY

**Fig. 12.**

**SECTION 4.**

DISCRETE LED'S

Fig. 13A.
SECTION 1.

Fig. 13A.

| SECTION 1 | SECTION 3 | SECTION 5 |
|-----------|-----------|-----------|
| SECTION 2 | SECTION 4 |           |

0 078 624

Fig. 13A. SECTION 2.

**Fig. 13A.**

SECTION 3.

TO FIG 13A. SECTION 4.

0 078 624

Fig. 13A.
Section 4.

## 0 078 624

*Fig. 13A.*
SECTION 5.

17

# Fig. 13B.

| SECTION 1 | SECTION 2 | SECTION 3 |
|-----------|-----------|-----------|
| SECTION 4 | SECTION 5 | |

# Fig. 13B.
### SECTION 1

# Fig. 13B.
## SECTION 2.

FIG. 13B.
SECTION 3.

# Fig. 13B.
### SECTION 4.

LC2B

| 1 |
| 2 |
| 59 |
| 60 |

+ 5VSW

+ C1,9,14
=34
10μF

C8,10,11,12,13
19,20,21
23,24,27
0.1μF

+ 5VSW

LC5A

| 57 |
| 58 |
| 59 |
| 60 |

+ 5VSW

| 53 |
| 54 |

+ 5VBB

+ 5VBB

C2
.1

+ C22
1μF

| 3 |
| 4 |
| 57 |
| 58 |
| 12 |
| 14 |

GND

| 52 | SWITCH COMMON

| 53 |
| 54 |
| 42 |

GND TO DISPLAY LOGIC

| 55 |
| 56 |
| 44 |

GND TO LED DRIVERS

+ = C9,C1,C14,C34
CER= C8,C13,C12,C11,C19,C27
C23,C24,C21,C20,C10
BB+ = C22
BBCER=C2

*Fig. 13B.*
SECTION 5.

*Fig. 14.*

| SECTION 1 | SECTION 2 | SECTION 3 | SECTION 4 | SECTION 5 | SECTION 6 | SECTION 7 | SECTION 8 |
|---|---|---|---|---|---|---|---|

*Fig. 14.*
SECTION 1

**FIG. 14.**
SECTION 2

0 078 624

Fig. 14.
SECTION 3

25

Fig. 14.
SECTION 4

Fig. 14.
SECTION 6

FIG. 14.
SECTION 7

Fig. 14.
SECTION 8

30

# *Fig. 15.*

*Fig. 16A.* SECTION 1.

*Fig. 16A.*

| SECTION 1 | SECTION 3 |
| SECTION 2 | SECTION 4 |

**_Fig. 16A._**
SECTION 2.

0 078 624

Fig. 16A.
SECTION 3.

Fig. 16A.
SECTION 4.

KNOTMETER INPUT

KNOTMETER PRESENT

NOTE: THESE CONNECTIONS ON PERSONALITY BOARD

36

**FIG. 16B.**
SECTION 1.

**FIG. 16B.**

| SECTION 1 | SECTION 3 |
|-----------|-----------|
| SECTION 2 | SECTION 4 |

LCIA

DAT Ø [22]
DAT 1 [21]
DAT 2 [20]
DAT 3 [19]
DAT 4 [18]
DAT 5 [17]
DAT 6 [16]
DAT 7 [15]

19 B̄Ø        AØ 1
18 B̄1        A1 2
17 B̄2        A2 3
16 B̄3        A3 4
15 B̄4        A4 5
14 B̄5        A5 6
13 B̄6        A6 7
12 B̄7        A7 8

15
P8287

LC2A

[24] DBØ
[25] DB1
[9] DB2
[10] DB3
[8] DB4
[30] DB5
[29] DB6
[32] DB7

LC3
[13]
N
[12]
J
9
K
8
H

T    O̅E̅
74LS02
BD ENABLE — 9 (19) 10  11  9

74S04          74S04       LC2A
M̅R̅D̅C̅ [57]  9 18 8    11 18 10    [19] MEMRD
MEMRD

74S04          74S04
M̅R̅T̅C̅ [55]  1 18 2   13 18 12   [16] M̅E̅M̅W̅R̅
MEMWR

74LS04
C̅L̅K̅ [53]  11 10 10   [52] CLK 4MHZ

R20
7406        74LS04      10K
AUX RESET [58] 4 9 3   12 10 13   +5VSW
[6] EXT RESET

# Fig. 16B.
### SECTION 2.

INTERRUPT MATRIX

0 078 624

37

FIG. 16B.
SECTION 3.

Fig. 16B.
SECTION 4.

0 078 624

39

Fig. 17.

| SECTION 1 | SECTION 3 |
|-----------|-----------|
| SECTION 2 | SECTION 4 |

Fig. 17.
SECTION 1.

Fig. 17. SECTION 2.

FIG. 17.
SECTION 3.

*Fig. 17.*
SECTION 4

TO FIG. 17.
SECTION 3

0 078 624

43

Fig. 18A.

| SECTION 1 | SECTION 3 |
|-----------|-----------|
| SECTION 2 | SECTION 4 |

Fig. 18A.

SECTION 1.

Fig. 18A. SECTION 2

TO FIG. 18A. SECTION 1.

TO FIG 18 A SECTION 4

INTERRUPT

PFIN 21

74LS240 7A 7 19

R4 10K +5V

2,3D
8088

INTR 18
NMI 17
RQ/GT0 31
TEST 23
QS1 24
QS0 25

A15 39
A14 2
A13 3
A12 4
A11 5
A10 6
A9 7
A8 8
AD7 9
AD6 10
AD5 11
AD4 12
AD3 13
AD2 14
AD1 15
AD0 16

AEN 6
IORC 13
AIOWC 12
MRDC 7
AMWC 8
S2 18
S1 3
S0 19
CLK 2
CEN 15

8A
8288

ALE 5
DT/R 4
DEN 16

IORC 15
IOWC 16
MRDC 14
MWTC 13

ALE
SYSDIR
SYSDEN

NDP RQ/GT
NDP BUSY
QS1
QS0

LOCAL ACCESS

+5V
C.... .1UF
C.... 10UF

3
4
69
70

1
2
71
72
35
36

45

Fig. 18A.
SECTION 3.

0 078 624

FIG. 18A.
SECTION 4.

**Fig. 18B.**
SECTION 1.

**Fig. 18B.**

| SECTION 1 | SECTION 3 |
|-----------|-----------|
| SECTION 2 | SECTION 4 |

FiG. 18B.
SECTION 2.

*Fig. 18B.*
SECTION 3.

FIG. 18B.
SECTION 4.

TO FIG. 18B. SECTION 3

TO FIG. 18B. SECTION 2.

74LS04 7F — SELECT ROM

MEMREAD

74LS11 6F

74LS04 7F

74LS138 7E

2732A OR 2764

VPP NC DGM VCC (TYP 8 PLCS)

+5V

*Fig. 18C.*

| SECTION I | SECTION3 | SECTION4 |
|---|---|---|
| SECTION 2 | SECTION 5 | |

*Fig. 18C.*
SECTION I.

0 078 624

FIG. 18C.
SECTION 2.

IO PORTS
F8-F9

FIG. 18C.
SECTION 3.

0 078 624

IO PORTS
F4-F7

Fig. 18C. SECTION 4.

# FIG. 18C.
## SECTION 5.

TO FIG. 18C
SECTION 4.

TO FIG. 18 C SECTION 3.

74LS04

| | |
|---|---|
| AD7 | A0 · B0 |
| AD5 | A1 B1 |
| AD1 | A2 IC B2 |
| AD6 | A3 8286 B3 |
| AD0 | A4 B4 |
| AD3 | A5 B5 |
| AD2 | A6 B6 |
| AD4 | A7 B7 |

DB7
DB6
DB5
DB4
DB3
DB2
DB1
DB0

TO FIG. 18C.
SECTION 2.

0 078 624

56

Fig. 19.

Fig. 20.

COURSE STEERED 080° ⌐321 ⌐323
SPEED THROUGH WATER 10 KNOTS
COURSE MADE GOOD 093° SET 190°
SPEED MADE GOOD 11.8 KNOTS DRIFT 3 KNOTS
⌐322

Fig. 21A.

1237 12 MI. COP
⌐333
⌐371
⌐334
1234 250° LOP 1237 FIX
⌐332
⌐331

Fig. 21B.

335
339
1420 026° LOP
1410 060° LOP
1410-1420 060° LOP
340
1410 DR 1410-1420
336 1420 FIX
339
338 337

Fig. 21C.

347
341
342
347
372
348
345'
0910 105° LOP
373
374
0910 FIX
345
346
343
347
DR 0900-0910
0900 015° LOP
0900-0910 015° LOP

Fig. 21D.

354
355
DR 1615-1625
375
356
351
352
1615 050° LOP
1615-1625 050° LOP
358
362
1625 094° LOP
353
359
357
361
1600 005° LOP
DR 1600-1625
1600-1625 005° LOP

Fig. 22.

Fig. 23.